# EUROPEAN PATENT SPECIFICATION

(11) **EP 3 975 531 B1**
(45) Date of publication and mention of the grant of the patent: **28.10.2026**
(21) Application number: 20841217.1
(22) Date of filing: 17.07.2020
(51) Int. Cl.: G06F 1/16, G06F 1/32, G06F 3/0488, H04M 1/02, H04M 1/72454, G06F 1/3215, G06F 1/3218

(54) **INTERACTION METHOD AND DEVICE BASED ON FOLDING SCREEN**
INTERAKTIONSVERFAHREN UND -VORRICHTUNG BASIEREND AUF EINEM FALTUNGSBILDSCHIRM
PROCÉDÉ ET DISPOSITIF D'INTERACTION FONDÉS SUR UN ÉCRAN PLIANT

(30) Priority: 17.07.2019 CN 201910646369
(43) Date of publication of application: 30.03.2022
(73) Proprietor: Huawei Technologies Co., Ltd., Longgang District Shenzhen, Guangdong 518129 (CN)
(72) Inventor: ZHANG, Ziyue, Shenzhen, Guangdong 518129 (CN); LIAO, Changliang, Shenzhen, Guangdong 518129 (CN); ZHONG, Ding, Shenzhen, Guangdong 518129 (CN)
(74) Representative: Gill Jennings & Every LLP
(86) International application number: PCT/CN2020/102810
(87) International publication number: WO 2021/008615

(56) References cited:
- EP-A1- 3 258 676
- EP-A1- 3 483 715
- EP-A2- 2 674 834
- CN-A- 103 384 284
- CN-A- 103 501 383
- CN-A- 107 885 277
- CN-A- 108 227 833
- CN-A- 108 287 653
- CN-A- 108 509 123
- CN-A- 109 600 468
- CN-A- 109 600 468
- US-A1- 2015 160 699
- US-A1- 2017 045 996

## Description

### TECHNICAL FIELD

Implementations of this application relate to the field of electronic technologies, and in particular, to a foldable screen-based interaction method and a device.

### BACKGROUND

A foldable screen device generally has a relatively large screen and may provide better visual viewing experience for a user. In the conventional technology, the user usually needs to make a specific gesture at a specific location of a large foldable screen, so as to interact with the foldable screen and trigger the foldable screen device to perform a specific operation or a specific function. An existing foldable screen interaction manner causes relatively poor user experience.

Particularly, in a scenario in which the foldable screen device is held with one hand, because it is difficult to reach the specific location, accurately memorize the specific location and the specific gesture, and make the specific gesture, this interaction manner is relatively complex and inconvenient to be implemented, a success rate is relatively low, and user experience is relatively poor.

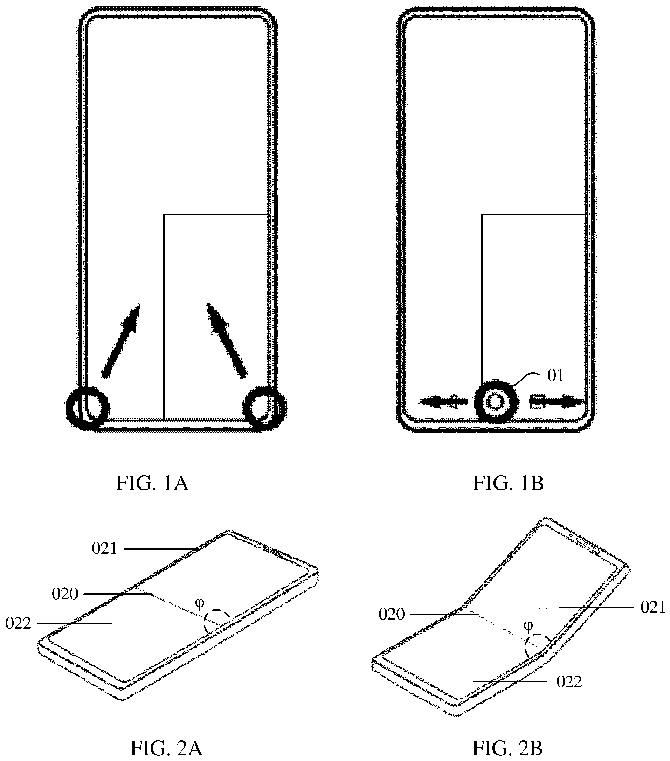

For example, in a one-hand holding scenario, as shown in FIG. 1A, when the user slides from a lower right corner to the middle of the foldable screen, a right-handed mode may be enabled. If the user slides from a lower left corner to the middle of the foldable screen, a left-handed mode may be enabled. For another example, as shown in FIG. 1B, when the user slides rightward from a navigation button 01 in a navigation area in the foldable screen, the right-handed mode may be enabled. If the user slides leftward from the navigation button in the navigation area in the foldable screen, the left-handed mode may be enabled.

In the interaction manner of enabling a one-handed mode shown in FIG. 1A or FIG. 1B, an operation location and an operation gesture need to be accurately memorized. In the one-hand holding scenario, the operation gesture is relatively awkward and has poor comfort, holding stability is poor during the operation, it is difficult to enable the one-handed mode, and user experience is relatively poor.

For another example, controls such as Back, OK, and Edit on an interface are at the top of the large foldable screen. The user needs to precisely tap a corresponding control to complete an operation such as an operation of returning to an upper-level menu, a confirmation operation, or an editing operation. However, an area at the top of the large foldable screen is a blind area that is very difficult to reach by a finger of the user in the one-hand holding scenario. Consequently, holding stability and comfort are poor, and use efficiency and user experience are affected.

For another example, during page refreshing, a currently displayed page such as a web page or an application usually needs to be closed to return to a previous step, and the page is reopened and reloaded, so as to achieve an objective of refreshing. This interaction manner has a relatively large quantity of steps and relatively high time costs.

EP2674834A2 relates to portable device comprising a touch-screen display, and method for controlling same. EP3258676A1 relates to foldable device and controlling method thereof. EP3483715A1 relates to electronic device and method for controlling display. US2017045996A1 relates to mobile terminal and control method therefor. CN107885277A relates to a method and device for adjusting an angle of a display screen, a mobile terminal and a computer readable storage medium and relates to the technical field of mobile terminals.

### SUMMARY

Implementations of this application provide a foldable screen-based interaction method and a device, so that a specific operation or function can be triggered in a more comfortable and natural interaction manner in a case in which a user holds an electronic device. This improves user experience.

The invention has been defined in the independent claims. Further specific technical features have been defined in the dependent claims.

According to one aspect, an implementation of this application provides a foldable screen-based interaction method as set out in appended claim 1.

In a scenario in which the user holds the electronic device, a thumb is usually near the electronic device naturally, so that the user can naturally perform a touch operation and a folding operation on the electronic device during holding. Therefore, in the holding scenario, a manner of naturally interacting with a foldable screen may be provided to trigger to perform a preset operation or trigger to enable a preset function.

In a possible design, the preset operation varies with a change direction of increasing or decreasing the included angle between the first sub-screen and the second sub-screen or varies with a change amplitude of the included angle. For example, the preset operation is adjusting a first function. An adjustment direction of the first function varies with the change direction of increasing or decreasing the included angle between the first sub-screen and the second sub-screen. A larger change amplitude of the included angle between the first sub-screen and the second sub-screen indicates a larger adjustment amplitude of the first function.

In this way, the preset operation performed by the electronic device varies with the change of the included angle between the sub-screens.

In another possible design, the touch operation performed by the user on the foldable screen is a slide operation performed by the user on the foldable screen. The preset operation varies with a slide direction or a slide amplitude of the slide operation. For example, the preset operation is adjusting a second function. An adjustment direction of the second function varies with the slide direction of the slide operation, and an adjustment amplitude of the second function varies with the slide amplitude of the slide operation.

In this solution, the user may indicate the electronic device to perform different preset operations based on different slide directions or different slide amplitudes on the foldable screen.

In another possible design, the foldable screen includes a first control and a second control, the first control is configured to adjust the first function, the second control is configured to adjust the second function, and the preset operation includes: adjusting the first function and the second function. The adjustment direction of the first function varies with the change direction of increasing or decreasing the included angle between the first sub-screen and the second sub-screen. The larger change amplitude of the included angle between the first sub-screen and the second sub-screen indicates the larger adjustment amplitude of the first function. The touch operation performed by the user on the electronic device is a slide operation performed by the user on the second control. The adjustment direction of the second function varies with a slide direction of the slide operation, and the adjustment amplitude of the second function varies with a slide amplitude of the slide operation.

In this solution, the electronic device may simultaneously adjust the first function and the second function based on the change of the included angle between the sub-screens and the slide direction and the slide amplitude for the second control.

In another possible design, a control is disposed on a side of the electronic device, the touch operation is an operation that the user toggles the control, and the user performs different preset operations based on different toggling amplitudes for the control.

In this solution, the user may control the electronic device to perform different preset operations based on toggling amplitudes for the control on the side of the electronic device.

In another possible design, the preset condition includes that an angle at which the included angle between the first sub-screen and the second sub-screen changes is greater than or equal to a first preset angle.

In other words, the electronic device performs the preset operation only when detecting that the included angle between the first sub-screen and the second sub-screen clearly changes. This reduces a misoperation rate.

In one embodiment, after the electronic device performs the preset operation, the method further includes: If the included angle between the first sub-screen and the second sub-screen changes from a first included angle to a second included angle, and a difference between the first included angle and the second included angle is less than or equal to a second preset angle, the electronic device automatically expands or folds the first sub-screen and/or the second sub-screen, so that the included angle between the first sub-screen and the second sub-screen is restored from the second included angle to the first included angle.

In other words, if the change amplitude of the included angle between the first sub-screen and the second sub-screen is relatively small, the user may only want to trigger the preset operation, and does not want to use the electronic device in a state in which the included angle has changed, so that the electronic device can spring back to a state in which the included angle does not change.

In another embodiment, after the electronic device performs the preset operation, the method further includes: If the included angle between the first sub-screen and the second sub-screen decreases from a first included angle to a second included angle, and the second included angle is greater than or equal to a third preset angle, the electronic device automatically expands the first sub-screen and/or the second sub-screen, so that the included angle between the first sub-screen and the second sub-screen is restored from the second included angle to the first included angle.

In other words, if the included angle between the first sub-screen and the second sub-screen decreases, and a decreased included angle is still relatively large, an amplitude of the folding operation may be relatively small, and the user may only want to trigger the preset operation, and does not want to use the electronic device in a state in which the included angle has changed, so that the electronic device can spring back to a state in which the included angle does not change.

In another possible design, the first included angle is 180°.

In other words, after being folded in an expanded state, the electronic device may further spring back to the expanded state.

In another embodiment, after the electronic device performs the preset operation, the method further includes: If the included angle between the first sub-screen and the second sub-screen increases from a first included angle to a second included angle, and the second included angle is less than or equal to a fourth preset angle, the electronic device automatically folds the first sub-screen and/or the second sub-screen, so that the included angle between the first sub-screen and the second sub-screen is restored from the second included angle to the first included angle.

In other words, if the included angle between the first sub-screen and the second sub-screen increases, and an increased included angle is still relatively small, an amplitude of the folding operation may be relatively small, and the user may only want to trigger the preset operation, and does not want to use the electronic device in a state in which the included angle has changed, so that the electronic device can spring back to a state in which the included angle does not change.

In another possible design, before the electronic device determines that the preset condition is met, the method further includes: The electronic device displays a first interface. After the electronic device performs the preset operation and before the included angle is restored from the second included angle to the first included angle, the method further includes: The electronic device displays a second interface in response to the preset operation. After the included angle is restored from the second included angle to the first included angle, the method further includes: The electronic device still displays the second interface.

In this way, the electronic device displays the second interface before and after the springback. The springback does not cause cancelation or rollback of the preset operation and interface display.

In another possible design, the preset condition includes that the included angle between the first sub-screen and the second sub-screen changes from a first included angle to a second included angle. After the electronic device performs the preset operation, the method further includes: If the included angle is restored from the second included angle to the first included angle, the electronic device cancels the preset operation, and recovers to a state in which the preset operation is not performed.

In this solution, after the electronic device is folded to perform the preset operation, if the electronic device cancels the folding operation, the electronic device may cancel the preset operation.

In another possible design, the preset condition includes that the included angle between the first sub-screen and the second sub-screen changes from a first included angle to a second included angle. Before the electronic device determines that the preset condition is met, the method further includes: The electronic device displays a first interface. After the electronic device performs the preset operation, the method further includes: The electronic device displays a second interface in response to the preset operation. If the included angle is restored from the second included angle to the first included angle, the electronic device restores displaying of the first interface.

In this solution, after the electronic device is folded to perform the preset operation, if the electronic device cancels the folding operation, the electronic device may restore displaying of the interface displayed before the folding.

In another possible design, the touch operation is a tap operation performed on an icon on the foldable screen.

In this way, with reference to the tap operation performed by the user on the icon on the foldable screen and the change of the included angle between the sub-screens, the electronic device may be triggered to perform the preset operation.

In another possible design, the method further includes: The electronic device switches from displaying the first interface to displaying a third interface in a process in which the included angle between the first sub-screen and the second sub-screen changes.

In this way, an interface displayed by the electronic device may change as the included angle between the first sub-screen and the second sub-screen changes.

In another possible design, the touch operation performed by the user on the electronic device includes a touch operation performed by the user on the foldable screen of the electronic device.

In a scenario in which the user holds the electronic device, a thumb of the user is usually in the front of the foldable screen naturally and therefore can naturally perform a touch operation on the foldable screen, and the user does not need to deliberately perform an operation used to trigger a preset operation.

In another possible design, the touch operation is a slide operation. If the preset condition further includes that a length of a slide track of the slide operation on a left half part of the foldable screen is greater than a length of the slide track of the slide operation on a right half part of the foldable screen, that the electronic device performs a preset operation includes: The electronic device enables a left-handed mode. Alternatively, if the preset condition further includes that a length of a slide track of the slide operation on a left half part of the foldable screen is less than or equal to a length of the slide track of the slide operation on a right half part of the foldable screen, that the electronic device performs a preset operation includes: The electronic device enables a right-handed mode.

In this solution, the electronic device may determine, based on a location of the slide track of the slide operation, whether to enable the left-handed mode or the right-handed mode.

In another possible design, the touch operation is a slide operation. If the preset condition further includes that a slide direction of the slide operation is from right to left, that the electronic device performs a preset operation includes: The electronic device enables a left-handed mode. Alternatively, if the preset condition further includes that a slide direction of the slide operation is from left to right, that the electronic device performs a preset operation includes: The electronic device enables a right-handed mode.

In this solution, the electronic device may determine, based on a direction of a slide track of the slide operation, whether to enable the left-handed mode or the right-handed mode.

In another possible design, the touch operation is a press operation. If the preset condition further includes that a press feature of the press operation is a first feature, the preset operation is enabling a left-handed mode. Alternatively, if the preset condition further includes that a press feature is a second feature, the preset operation is enabling a right-handed mode. The press feature includes one or more of a press force feature, a press location feature, or a press area feature.

In this solution, the electronic device may determine, based on different press features corresponding to the press operation, whether to enable the left-handed mode or the right-handed mode.

In another possible design, if the preset condition further includes that a touch area of the touch operation on a left half part of the foldable screen is greater than a touch area of the touch operation on a right half part of the foldable screen, that the electronic device performs a preset operation includes: The electronic device enables a left-handed mode. Alternatively, if the preset condition further includes that a touch area of the touch operation on a left half part of the foldable screen is greater than a touch area of the touch operation on a right half part of the foldable screen, that the electronic device performs a preset operation includes: The electronic device enables a right-handed mode.

In this solution, the electronic device may determine, based on the touch area, whether to enable the left-handed mode or the right-handed mode.

In another possible design, the touch operation is a press operation, and the touch area is a press area of the press operation.

In this solution, the electronic device may determine, based on the press area, whether to enable the left-handed mode or the right-handed mode.

In another possible design, if the preset condition further includes that a finger feature corresponding to the touch operation is a third feature, the preset operation is enabling a left-handed mode; or if the preset condition further includes that a finger feature corresponding to the touch operation is a fourth feature, the preset operation is enabling a right-handed mode. The finger feature includes a fingerprint or a shape of a finger that is in contact with the foldable screen.

In this solution, the electronic device may determine, based on the finger feature, whether to enable the left-handed mode or the right-handed mode.

In another possible design, if the finger feature is a fingerprint, the third feature is that the fingerprint is a fingerprint of a left hand, and the fourth feature is that the fingerprint is a fingerprint of a right hand.

In this solution, the electronic device may determine, based on a fingerprint feature, whether to enable the left-handed mode or the right-handed mode.

In another possible design, if the finger feature is a finger shape, the third feature is that the finger shape is distribution along a left slash, and the fourth feature is that the finger shape is distribution along a right slash.

In this solution, the electronic device may determine, based on a finger shape feature, whether to enable the left-handed mode or the right-handed mode.

In another possible design, the touch operation performed by the user on the electronic device includes a press operation performed by the user on a side of the electronic device.

In a scenario in which the user holds the electronic device, a thumb and a middle finger of the user may be naturally at the side of the electronic device and therefore can naturally press the side, for example, press a power button or a volume button disposed at the side.

In another possible design, the touch operation is a press operation performed by the user on a power button or a volume button disposed at a side of the electronic device.

In a scenario in which the user holds the electronic device, a thumb and a middle finger of the user may be naturally at the side of the electronic device and therefore can naturally press the power button or the volume button disposed on the side.

In another possible design, if the touch operation is an operation that the user continuously presses a power button twice, that the electronic device performs a preset operation includes: The electronic device enables a left-handed mode. Alternatively, if the touch operation is an operation that the user presses a power button once, that the electronic device performs a preset operation includes: The electronic device enables a right-handed mode.

In this solution, the electronic device may determine, based on a quantity of times of pressing the power button, whether to enable the left-handed mode or the right-handed mode.

In another possible design, if the touch operation is a press operation performed by the user on a power button, that the electronic device performs a preset operation includes: The electronic device enables a left-handed mode. Alternatively, if the touch operation is a press operation performed by the user on a volume button, that the electronic device performs a preset operation includes: The electronic device enables a right-handed mode.

In this solution, the electronic device may determine, based on whether the power button or the volume button is pressed, whether to enable the left-handed mode or the right-handed mode.

In another possible design, after the electronic device enables the left-handed mode, an interface display range of the second interface is narrowed to a lower left corner of the foldable screen; or after the electronic device enables the right-handed mode, an interface display range of the second interface is narrowed to a lower right corner of the foldable screen. A larger degree of decreasing the included angle between the first sub-screen and the second sub-screen indicates a larger degree of narrowing the display range.

In other words, the interface display range and a display location of the electronic device vary with an enabled one-handed mode.

In embodiments of the invention, the preset operation is enabling a one-handed mode, adjusting volume, adjusting screen brightness, scrolling a page, flipping a page, refreshing a page, enabling a screen splitting function, enabling a screenshot function, enabling a word segmentation function, enabling a voice assistant function, or enabling a shortcut menu call-out function.

In other words, various preset operations may be performed in this foldable screen interaction manner.

In another possible design, that an included angle between the first sub-screen and the second sub-screen changes includes: The first sub-screen and/or the second sub-screen are/is folded in the front of the foldable screen, so that the included angle between the first sub-screen and the second sub-screen changes. Alternatively, the first sub-screen and/or the second sub-screen are/is folded on the back of the foldable screen, so that the included angle between the first sub-screen and the second sub-screen changes.

In other words, the electronic device may be folded forward or backward, so that the included angle between the sub-screens changes, to trigger to perform the preset operation.

In another possible design, that the electronic device determines that a preset condition is met includes: Within the preset duration, the electronic device simultaneously detects the touch operation and detects that the included angle between the first sub-screen and the second sub-screen changes. Alternatively, within the preset duration, the electronic device first detects that the included angle between the first sub-screen and the second sub-screen changes, and then detects the touch operation. Alternatively, within the preset duration, the electronic device first detects the touch operation, and then detects that the included angle between the first sub-screen and the second sub-screen changes.

In other words, there is no clear sequence of detecting the touch operation and detecting the folding operation.

In another possible design, the preset operation varies with a user interface currently displayed on the foldable screen. Alternatively, the preset operation varies with an application corresponding to a user interface currently displayed on the foldable screen.

In this way, the preset operation performed by the electronic device may be adaptive to an application status such as a user interface or an application displayed on the foldable screen.

According to another aspect, an implementation of this application provides an electronic device as set out in appended claim 10.

According to another aspect, an implementation of this application provides a computer storage medium as set out in appended claim 11.

### DRAWINGS

FIG. 1A and FIG. 1B are a group of schematic diagrams of an operation of triggering a one-handed mode according to the conventional technology;
FIG. 2A to FIG. 2D are a group of schematic diagrams of a foldable screen according to an implementation of this application;
FIG. 3A and FIG. 3B are another group of schematic diagrams of a foldable screen according to an implementation of this application;
FIG. 4A to FIG. 4D are another group of schematic diagrams of a foldable screen according to an implementation of this application;
FIG. 5 is a schematic diagram of a structure of an electronic device according to an implementation of this application;
FIG. 6A and FIG. 6B are schematic diagrams of measuring an included angle between sub-screens according to an implementation of this application;
FIG. 7A to FIG. 7D are a group of schematic diagrams of a rotating shaft mechanism according to an implementation of this application;
FIG. 8 is a schematic diagram of a setting interface according to an implementation of this application;
FIG. 9A to FIG. 9D are a group of schematic diagrams of foldable screen interaction according to an implementation of this application;
FIG. 10A and FIG. 10B are another group of schematic diagrams of foldable screen interaction according to an implementation of this application;
FIG. 11A to FIG. 11D are another group of schematic diagrams of foldable screen interaction according to an implementation of this application;
FIG. 12A and FIG. 12B are another group of schematic diagrams of foldable screen interaction according to an implementation of this application;
FIG. 13A-(a) to FIG. 13A-(d) to FIG. 13C-(a) to FIG. 13C-(c) are another group of schematic diagrams of foldable screen interaction according to an implementation of this application;
FIG. 14(a) to FIG. 14(d) are another group of schematic diagrams of foldable screen interaction according to an implementation of this application;
FIG. 15(a) to FIG. 15(d) are another group of schematic diagrams of foldable screen interaction according to an implementation of this application;
FIG. 16(a) to FIG. 16(d) are another group of schematic diagrams of foldable screen interaction according to an implementation of this application;
FIG. 17A to FIG. 17C are a group of schematic diagrams of a folding status of a foldable screen according to an implementation of this application;
FIG. 18(a) and FIG. 18(b) are another group of schematic diagrams of foldable screen interaction according to an implementation of this application;
FIG. 19(a) to FIG. 19(d) are another group of schematic diagrams of foldable screen interaction according to an implementation of this application;
FIG. 20(a) to FIG. 20(d) are another group of schematic diagrams of foldable screen interaction according to an implementation of this application;
FIG. 21(a) to FIG. 21(d) are another group of schematic diagrams of foldable screen interaction according to an implementation of this application;
FIG. 22(a) to FIG. 22(c) are another group of schematic diagrams of foldable screen interaction according to an implementation of this application;
FIG. 23(a) and FIG. 23(b) are another group of schematic diagrams of foldable screen interaction according to an implementation of this application;
FIG. 24(a) and FIG. 24(b) are another group of schematic diagrams of foldable screen interaction according to an implementation of this application; and
FIG. 25 is a flowchart of a foldable screen-based interaction method according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In the descriptions of the implementations of this application, unless otherwise specified, "/" means "or". For example, A/B may represent A or B. In this specification, "and/or" describes only an association between associated objects and represents that three relationships may exist. For example, A and/or B may represent the following three cases: Only A exists, both A and B exist, and only B exists. In addition, in the descriptions of the implementations of this application, "a plurality of" means two or more.

An implementation of this application provides a foldable screen-based interaction method. The method may be applied to an electronic device having a foldable screen. The electronic device having the foldable screen is also referred to as a foldable screen device. When a user uses the foldable screen device, the foldable screen may display a user interface. The foldable screen may include at least two sub-screens. For example, the foldable screen may include a first sub-screen and a second sub-screen. In a process of folding the foldable screen, an included angle between the first sub-screen and the second sub-screen decreases. In a process of expanding the foldable screen, the included angle between the first sub-screen and the second sub-screen increases. It may be understood that the at least two sub-screens formed after the foldable screen is folded may be a plurality of independent sub-screens, or may be a complete screen of an integral structure including at least two parts after the folding.

Within preset duration, if the foldable screen device detects a touch operation performed by the user on the foldable screen device, and detects that the included angle between the first sub-screen and the second sub-screen changes, the foldable screen device may perform a preset operation or trigger a preset function. The preset operation is associated with the touch operation and the change of the included angle. For example, the touch operation performed by the user on the foldable screen device may include a touch operation performed by the user on the foldable screen of the foldable screen device or a press operation performed by the user on a side of the foldable screen device. For example, the press operation performed by the user on the side of the foldable screen device may be a press operation performed by the user on a button such as a power button or a volume button disposed on the side of the foldable screen device, or a press operation performed by the user on a specific part (for example, an upper half part) on the side of the foldable screen device. That the included angle between the first sub-screen and the second sub-screen changes may include: increasing or decreasing the included angle. The preset operation may be enabling a one-handed mode, enabling a screen splitting function, refreshing a page, or the like.

In a scenario in which the user holds the foldable screen device, a thumb is usually near the foldable screen device naturally, for example, is in the front of the foldable screen or on a side of the foldable screen, so that the user can naturally perform the touch operation on the foldable screen device during holding, for example, can perform the touch operation on the foldable screen or perform the press operation on the side of the foldable screen device. In the holding scenario, other fingers are usually on the back of the foldable screen naturally and therefore can naturally push the foldable screen to fold during holding. In other words, in the holding scenario, the user may interact with the foldable screen in this natural manner, to trigger to perform the preset operation or trigger to enable the preset function.

In some implementations, the foldable screen may be a flexible foldable screen. The flexible foldable screen includes a folding shaft made of a flexible material. A part or all of the flexible foldable screen is made of the flexible material. For example, in the flexible foldable screen, only a foldable part (for example, the folding shaft) is made of the flexible material, and the other part is made of a rigid material; or the flexible foldable screen is all made of the flexible material. The foldable screen may be folded along the folding shaft to form the at least two sub-screens.

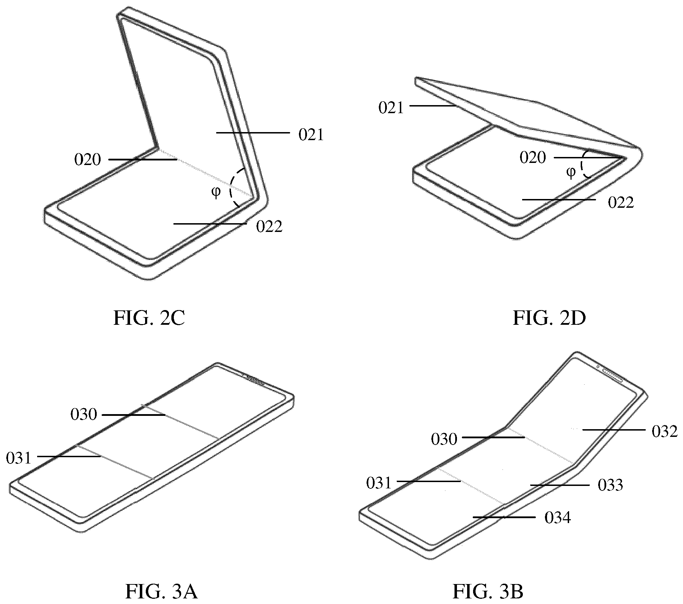

For example, FIG. 2A shows a flexible foldable screen having a folding line 020. After the foldable screen is longitudinally folded along the folding line 020, a sub-screen 021 and a sub-screen 022 shown in FIG. 2B to FIG. 2D may be formed. For example, the foldable screen device may be a foldable smartphone.

For another example, a flexible foldable screen shown in FIG. 3A may include a folding line 030 and a folding line 031. After the flexible foldable screen is longitudinally folded along the folding line 030, a sub-screen 032, a sub-screen 033, and a sub-screen 034 shown in FIG. 3B may be formed. For example, the foldable screen device may be a foldable smartphone.

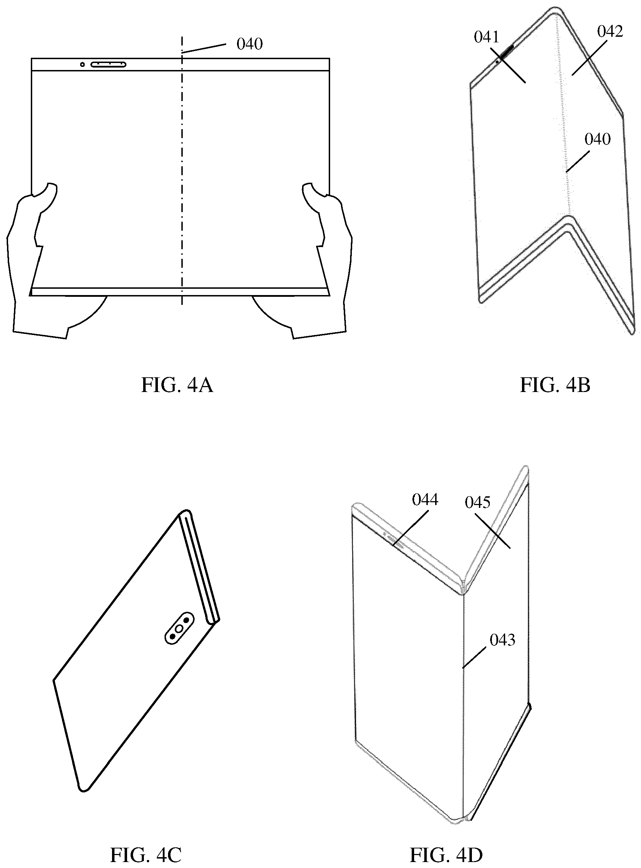

For another example, after a flexible foldable screen shown in FIG. 4A is laterally folded along a folding line 040, a sub-screen 041 and a sub-screen 042 shown in FIG. 4B may be formed. For example, the foldable screen device may be a mobile phone in a folded state, and may be a tablet computer in an expanded state.

An included angle between two adjacent sub-screens in the foldable screen is greater than or equal to 0° and less than or equal to 180°. The foldable screen may include an expanded state, a folded state, and a semi-folded state.

The expanded state indicates that the foldable screen is fully expanded, to be specific, the included angle between the two adjacent sub-screens in the foldable screen is 180°. For example, FIG. 2A, FIG. 3A, and FIG. 4A are schematic diagrams in which the foldable screen is in the expanded state. For example, as shown in FIG. 2A, an included angle φ between the sub-screen 021 and the sub-screen 022 is 180°.

The folded state indicates that the foldable screen is fully folded, to be specific, the included angle between the two adjacent sub-screens in the foldable screen is 0°. For example, FIG. 4C is a schematic diagram in which the foldable screen is in the folded state, and an included angle between the sub-screen 041 and the sub-screen 042 is 0°.

The semi-folded state may be a state between the expanded state and the folded state, to be specific, the included angle between the two adjacent sub-screens in the foldable screen is between 0° and 180°. For example, FIG. 2B to FIG. 2D, FIG. 3B, and FIG. 4B are schematic diagrams in which the foldable screen is in the semi-folded state. For example, as shown in FIG. 2B to FIG. 2D, the included angle φ between the sub-screen 021 and the sub-screen 022 is greater than 0° and less than 180°.

In some other implementations, the foldable screen may alternatively be a multi-screen foldable screen. The multi-screen foldable screen may include at least two sub-screens. The at least two sub-screens are independent displays, may be sequentially connected by using a folding shaft, and may separately rotate around the folding shaft, so as to implement folding of the multi-screen foldable screen. For example, as shown in FIG. 4D, the foldable screen device includes a folding shaft 043, a sub-screen 044, and the other sub-screen 045 independent of the sub-screen 044. The sub-screen 044 and the sub-screen 045 may rotate around the folding shaft 043.

In this implementation of this application, the foldable screen may be a single-sided screen (that is, only one side can display a user interface), or may be a double-sided screen (that is, two opposite sides can display a user interface).

For the single-sided foldable screen, a case in which the foldable screen is folded toward a side that can display a user interface (that is, a front side of the single-sided foldable screen) may be referred to as forward folding, and a case in which the foldable screen is folded toward a side (that is, a back side of the single-sided foldable screen) opposite to the side that can display a user interface may be referred to as backward folding. For example, FIG. 2B to FIG. 4C are schematic diagrams of forward folding, and FIG. 4D is a schematic diagram of backward folding. The foldable screen device may determine whether current folding is forward folding or backward folding.

Forward folding or backward folding may enable the foldable screen to be in the semi-folded state. For a semi-folded state in a forward folding scenario, an included angle between surfaces having display functions on two adjacent sub-screens is greater than 0° and less than 180°. For a semi-folded state in a backward folding scenario, an included angle between surfaces having no display function on two adjacent sub-screens is greater than 0° and less than 180°.

For example, the foldable screen device may be a device having a foldable screen, such as a mobile phone, a tablet computer, a desktop, a laptop, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific type of the foldable screen device is not limited in this implementation of this application.

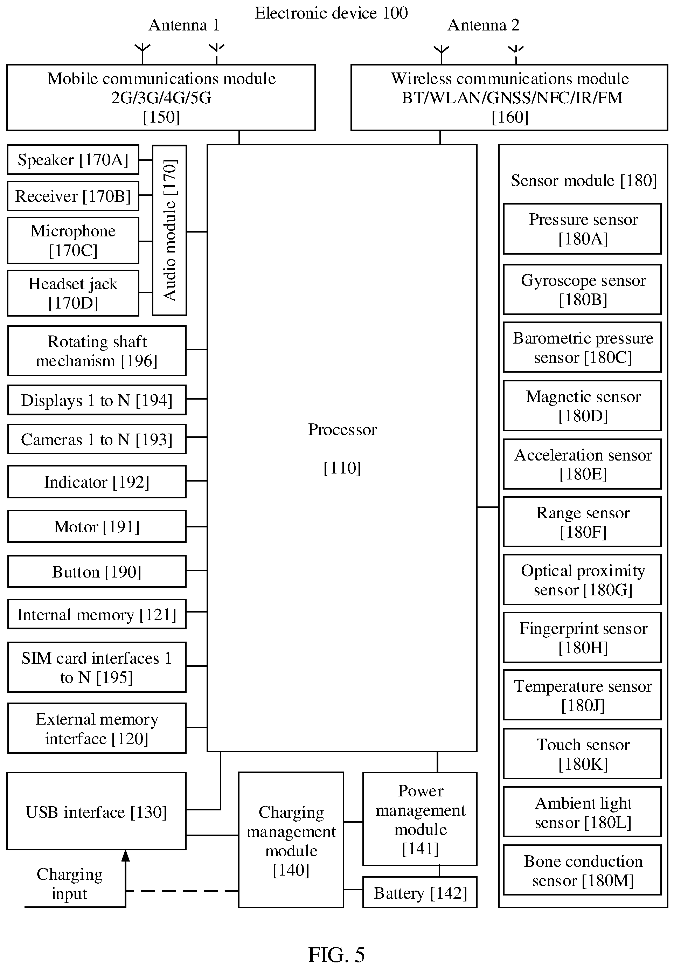

For example, FIG. 5 is a schematic diagram of a structure of an electronic device 100 having a foldable screen. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, a rotating shaft mechanism 196, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in the implementations of this application does not constitute a specific limitation on the electronic device 100. In some other implementations of this application, the electronic device 100 may include more or fewer components than those shown in the figure, or may combine some components, or may split some components, or may have different component arrangements. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some implementations, the memory in the processor 110 is a cache. The memory may store instructions or data that has just been used or is cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some implementations, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some implementations, the processor 110 may include a plurality of groups of I2C buses. The processor 110 may be coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some implementations, the processor 110 may include a plurality of groups of I2S buses. The processor 110 may be coupled to the audio module 170 through the I2S bus, to implement communication between the processor 110 and the audio module 170. In some implementations, the audio module 170 may transmit an audio signal to the wireless communications module 160 through the I2S interface, to implement a function of answering a call by using a Bluetooth headset.

The PCM interface may also be configured to perform audio communication, and sample, quantize, and code an analog signal. In some implementations, the audio module 170 may be coupled to the wireless communications module 160 through a PCM bus interface. In some implementations, the audio module 170 may alternatively transmit an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some implementations, the UART interface is usually configured to connect to the processor 110 and the wireless communications module 160. For example, the processor 110 communicates with a Bluetooth module in the wireless communications module 160 through the UART interface, to implement a Bluetooth function. In some implementations, the audio module 170 may transmit an audio signal to the wireless communications module 160 through the UART interface, to implement a function of playing music by using a Bluetooth headset.

The MIPI interface may be configured to connect to the processor 110 and a peripheral component such as the display 194 or the camera 193. The MIPI interface includes a camera serial interface (camera serial interface, CSI), a display serial interface (display serial interface, DSI), and the like. In some implementations, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some implementations, the GPIO interface may be configured to connect to the processor 110, the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to USB standard specifications, and may be specifically a mini USB interface, a micro USB interface, a USB Type C interface, or the like. The USB interface 130 may be configured to connect to a charger to charge the electronic device 100, or may be configured to transmit data between the electronic device 100 and a peripheral device, or may be configured to connect to a headset for playing audio through the headset, or may be configured to connect to another electronic device such as an AR device.

It may be understood that an interface connection relationship between the modules illustrated in this implementation of this application is merely an example for description, and does not constitute a limitation on the structure of the electronic device 100. In some other implementations of this application, the electronic device 100 may alternatively use an interface connection manner different from that in the foregoing implementation, or use a combination of a plurality of interface connection manners.

The charging management module 140 is configured to receive a charging input from the charger. The charger may be a wireless charger or a wired charger. In some implementations of wired charging, the charging management module 140 may receive a charging input from a wired charger through the USB interface 130. In some implementations of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other implementations, the power management module 141 may alternatively be disposed in the processor 110. In some other implementations, the power management module 141 and the charging management module 140 may alternatively be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other implementations, the antenna may be used in combination with a tuning switch.

The mobile communications module 150 may provide a solution, applied to the electronic device 100, to wireless communication including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave through the antenna 1 for radiation. In some implementations, at least some function modules of the mobile communications module 150 may be disposed in the processor 110. In some implementations, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits an obtained signal to the application processor. The application processor outputs a sound signal by using an audio device (which is not limited to the speaker 170A, the receiver 170B, or the like), or displays an image or a video on the display 194. In some implementations, the modem processor may be an independent component. In some other implementations, the modem processor may be independent of the processor 110, and is disposed in a same device as the mobile communications module 150 or another function module.

The wireless communications module 160 may provide a solution, applied to the electronic device 100, to wireless communication including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some implementations, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and perform graphics rendering. The processor 110 may include one or more GPUs that execute program instructions to generate or change display information.

The display 194 is configured to display an image, a video, and the like. The display 194 may be the foregoing foldable screen. The display 194 may be folded to form at least two sub-screens. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini LED, a micro LED, a micro OLED, a quantum dot light emitting diode (quantum dot light emitting diodes, QLED), or the like. In some implementations, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. The photosensitive element of the camera converts an optical signal into an electrical signal, and transmits the electrical signal to the ISP for processing. The ISP converts the electrical signal into a visible image. The ISP may further perform algorithm optimization on noise, brightness, and complexion of the image. The ISP may further optimize parameters such as exposure and a color temperature of a photographing scenario. In some implementations, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some implementations, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG) 1, MPEG2, MPEG3, and MPEG4.

The NPU is a neural network (neural-network, NN) computing processor, quickly processes input information by referring to a structure of a biological neural network, for example, by referring to a mode of transmission between human brain neurons, and may further continuously perform self-learning. The electronic device 100 may implement applications such as intelligent cognition through the NPU, for example, image recognition, facial recognition, speech recognition, and text understanding.

The external memory interface 120 may be configured to connect to an external memory card such as a micro SD card, to extend a storage capability of the electronic device 100. The external storage card communicates with the processor 110 through the external memory interface 120, to implement a data storage function. For example, files such as music and a video are stored in the external memory card.

The internal memory 121 may be configured to store computer-executable program code. The executable program code includes instructions. The processor 110 runs the instructions stored in the internal memory 121, to implement various function applications and data processing of the electronic device 100.

For example, within the preset duration by running the instructions stored in the internal memory 121, the processor 110 detects the touch operation performed by the user on the foldable screen or the press operation performed by the user on the side of the electronic device 100, and performs the preset operation when detecting that the included angle between the first sub-screen and the second sub-screen changes. The preset operation is associated with the touch operation and the change of the included angle.

For another example, by running the instructions stored in the internal memory 121, after performing the preset operation, if a change amplitude of the included angle between the first sub-screen and the second sub-screen is less than or equal to a preset angle 1, or if the included angle decreases and a decreased included angle between the first sub-screen and the second sub-screen is greater than a preset angle 2 currently, or if the included angle increases and an increased included angle between the first sub-screen and the second sub-screen is less than a preset angle 3 currently, the processor 110 controls the rotating shaft mechanism 196 to fold the first sub-screen and/or the second sub-screen, so that the foldable screen springs back to an expanded state or a state in which the included angle does not change.

The internal memory 121 may include a program storage area and a data storage area. The program storage area may store an operating system, an application required by at least one function (for example, a sound playing function and an image playing function), and the like. The data storage area may store data (for example, audio data and a phone book) created when the electronic device 100 is used, and the like. In addition, the internal memory 121 may include a high-speed random access memory, or may include a nonvolatile memory, for example, at least one magnetic disk storage device, a flash memory, or a universal flash storage (universal flash storage, UFS).

In some implementations, the internal memory 121 may store information about an included angle between adjacent sub-screens of the foldable screen, change information of the included angle, and the like.

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some implementations, the audio module 170 may be disposed in the processor 110, or some function modules of the audio module 170 are disposed in the processor 110.

The speaker 170A, also referred to as a "horn", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or listens to a voice message, the receiver 170B may be placed near a human ear to listen to a voice.

The microphone 170C, also referred to as a "mike" or a "microphone", is configured to convert a sound signal into an electrical signal. When making a call or sending a voice message, the user may make a sound near the microphone 170C through the mouth, to enter a sound signal to the microphone 170C. At least one microphone 170C may be disposed in the electronic device 100. In some other implementations, two microphones 170C may be disposed in the electronic device 100, to implement a noise reduction function in addition to a function of collecting a sound signal. In some other implementations, three, four, or more microphones 170C may be alternatively disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some implementations, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, a capacitance between electrodes changes. The electronic device 100 determines pressure strength based on a change of the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some implementations, touch operations performed on a same touch location but having different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on the icon of Messages, an instruction for creating a new SMS message is executed.

The gyroscope sensor 180B may be configured to determine a motion posture of the electronic device 100. In some implementations, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 shakes, and calculates, based on the angle, a distance for which a lens module needs to compensate, so that the lens cancels the shake of the electronic device 100 through reverse motion, thereby implementing the image stabilization. The gyroscope sensor 180B may be further used in a navigation scenario and a motion-controlled gaming scenario.

In this implementation of this application, the gyroscope sensor 180B may be disposed on each sub-screen to measure an orientation (that is, a direction vector of the orientation) of the sub-screen. For example, in the electronic device shown in FIG. 2B, the sub-screen 021 and the sub-screen 022 each include the gyroscope sensor 180B to measure orientations of the sub-screen 021 and the sub-screen 022. The electronic device may determine an included angle between adjacent sub-screens based on an angle change of an orientation of each sub-screen.

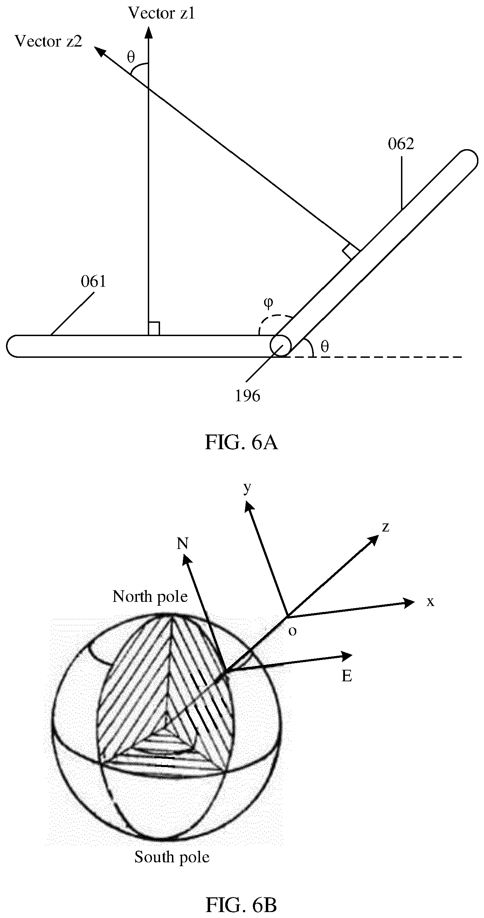

For example, the electronic device 100 is the foldable screen device shown in FIG. 2B. The foldable screen of the electronic device 100 may be folded to form a sub-screen 061 and a sub-screen 062 shown in FIG. 6A. The rotating shaft mechanism 196 is disposed at a location of a folding line. A gyroscope sensor 1 is disposed on the sub-screen 061, and a gyroscope sensor 2 is disposed on the sub-screen 062.

A coordinate system of a gyroscope sensor is a geographic coordinate system. As shown in FIG. 6B, in the geographic coordinate system, an origin O is located on a carrier (that is, a device including the gyroscope sensor, for example, the electronic device 100), an axis x points to the east (E) along a local latitude, an axis y points to the north (N) along a local meridian, and an axis z points upward along a local geographic vertical and forms a right-handed rectangular coordinate system together with the axis x and the axis y. A plane formed by the axis x and the axis y is a local horizontal plane, and a plane formed by the axis y and the axis z is a local meridian plane. Therefore, it may be understood that the coordinate system of the gyroscope sensor is a coordinate system in which the origin O is the gyroscope sensor, the axis x points to the east along the local latitude, the axis y points to the north along the local meridian, and the axis z points upward along the local geographic vertical (that is, an opposite direction of the geographic vertical).

By using the gyroscope sensor disposed on each sub-screen, the electronic device 100 may obtain, through measurement, a direction vector of an orientation of each sub-screen in a coordinate system of the gyroscope sensor disposed on the sub-screen. For example, as shown in a side view of the electronic device shown in FIG. 6A, a direction vector that is of an orientation of the sub-screen 061 in a coordinate system of the gyroscope sensor 1 and that is obtained by the electronic device through measurement is a vector z1, and a direction vector that is of an orientation of the sub-screen 062 in a coordinate system of the gyroscope sensor 2 and that is obtained by the electronic device through measurement is a vector z2. The electronic device may calculate an included angle θ between the vector z1 and the vector z2 by using Formula (1): $θ = arc cos \left(\frac{\vec{z 1} ⋅ \vec{z 2}}{\left|\vec{z 1}\right| \times \left|\vec{z 2}\right|}\right)$.

It can also be learned from FIG. 6A that, because the vector z1 is perpendicular to the sub-screen 061 and the vector z2 is perpendicular to the sub-screen 062, the included angle between the sub-screen 061 and the sub-screen 062 may be obtained: φ = 180° - θ. In other words, the electronic device may determine the included angle φ between the sub-screen 061 and the sub-screen 062 based on the direction vector (that is, the vector z1) that is of the orientation of the sub-screen 061 in the coordinate system of the gyroscope sensor 1 and that is obtained through measurement and the direction vector (that is, the vector z2) that is of the orientation of the sub-screen 062 in the coordinate system of the gyroscope sensor 2 and that is obtained through measurement. When the included angle φ is greater than 0° and less than 180°, the electronic device is currently in a semi-folded state corresponding to forward folding. When the included angle φ is greater than 180° and less than 360°, the electronic device is currently in a semi-folded state corresponding to backward folding.

It should be noted that locations of the gyroscope sensors disposed on the sub-screen 061 and the sub-screen 062 do not overlap, in other words, origins of the coordinate systems of the gyroscope sensors on the sub-screen 061 and the sub-screen 062 do not overlap. However, axes x are parallel, axes y are parallel, and axes z are parallel in the two coordinate systems. Therefore, it may be considered that the coordinate systems of the gyroscope sensors disposed on the sub-screen 061 and the sub-screen 062 are parallel. In this way, although the vector z1 and the vector z2 are not in a same coordinate system, because the axes in the two coordinate systems are parallel, the included angle θ between the vector z1 and the vector z2 may still be calculated by using Formula (1).

In some implementations, the included angle α between the sub-screen 061 and the sub-screen 062 may alternatively be measured through cooperation of one or more other sensors. For example, one acceleration sensor may be disposed on each sub-screen of the foldable screen. The electronic device 100 (for example, the processor 110) may measure, by using the acceleration sensor, a motion acceleration generated when each sub-screen is rotated, and then calculate a rotation angle of one screen relative to another screen based on the motion acceleration obtained through measurement, that is, the included angle φ between the sub-screen 061 and the sub-screen 062.

In some other implementations, the foregoing gyroscope sensor may be a virtual gyroscope sensor formed through cooperation of a plurality of other sensors. The virtual gyroscope sensor may be configured to calculate the included angle between the adjacent sub-screens of the foldable screen, that is, the included angle φ between the sub-screen 061 and the sub-screen 062.

In addition, in this implementation of this application, a sensor such as the gyroscope sensor 180B or the acceleration sensor 180E may be further configured to determine a status of each sub-screen, so as to determine whether the foldable screen is currently in a forward folded state or a backward folded state.

For example, the gyroscope sensor 180B on the sub-screen may measure an angular velocity generated when the sub-screen is folded; perform angular velocity integration to obtain an included angle between sub-screens relative to a specific coordinate system (for example, a geographic coordinate system), so as to obtain a posture of the sub-screen; learn of an orientation of the sub-screen based on the posture of the sub-screen; and learn, based on the orientation of each sub-screen, whether the folded screen is currently in a forward folded state or a backward folded state.

The barometric pressure sensor 180C is configured to measure barometric pressure. In some implementations, the electronic device 100 calculates an altitude by using a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some implementations, when the electronic device 100 is a clamshell phone, the electronic device 100 may detect opening and closing of a clamshell by using the magnetic sensor 180D. Further, a feature such as automatic unlocking upon opening of the flip cover is set based on a detected opening or closing state of the flip cover or a detected opening or closing state of the clamshell.

The acceleration sensor 180E may detect a magnitude of an acceleration of the electronic device 100 in each direction (usually, on three axes). When the electronic device 100 is still, a magnitude and a direction of gravity may be detected. The acceleration sensor may be further configured to identify a posture of the electronic device, and is used in an application such as switching between a landscape mode and a portrait mode or a pedometer.

The range sensor 180F is configured to measure a distance. The electronic device 100 may measure a distance in an infrared or a laser manner. In some implementations, in a photographing scenario, the electronic device 100 may measure a distance by using the range sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects, by using the photodiode, infrared reflected light that comes from a nearby object. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that the user holds the electronic device 100 close to an ear for a call, to automatically perform screen-off to save power. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some implementations, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption and implement thermal protection. In some other implementations, when the temperature is less than another threshold, the electronic device 100 heats up the battery 142, to avoid abnormal shutdown of the electronic device 100 due to a low temperature. In some other implementations, when the temperature is less than still another threshold, the electronic device 100 boosts an output voltage of the battery 142, to avoid abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". When the foldable screen also has a touch function, the foldable screen may be the touchscreen. The touch sensor 180K is configured to detect a touch operation performed on or near the touch sensor. The touch sensor may transfer the detected touch operation to the application processor, to determine a type of a touch event. A visual output related to the touch operation may be provided through the display 194. In some other implementations, the touch sensor 180K may alternatively be disposed on a surface of the electronic device 100 at a location different from that of the display 194.

In some implementations, the touch sensor 180K may detect a touch operation performed by the user on the foldable screen, for example, a slide operation, a press operation, or a tap operation.

The bone conduction sensor 180M may obtain a vibration signal. In some implementations, the bone conduction sensor 180M may obtain a vibration signal of a vibration bone of a human vocal-cord part. The bone conduction sensor 180M may also be in contact with a human pulse, and receive a blood pressure beating signal. In some implementations, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button (or referred to as a power-on/power-off button), a volume button, and the like. The button 190 may be a mechanical button, or may be a touch button. The electronic device 100 may receive a key input, and generate a key signal input related to user settings and function control of the electronic device 100.

In some implementations, within the preset duration, if the electronic device 100 detects a press operation performed by the user on the power button or the volume button, and detects that the included angle between the first sub-screen and the second sub-screen changes, the electronic device performs the preset operation.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is also compatible with different types of SIM cards. The SIM card interface 195 is also compatible with an external storage card. The electronic device 100 interacts with a network by using the SIM card, to implement functions such as calling and data communication. In some implementations, the electronic device 100 uses an eSIM, namely, an embedded SIM card. The eSIM card may be embedded in the electronic device 100, and cannot be separated from the electronic device 100.

The rotating shaft mechanism 196 is used by the foldable screen to spring back to a state in which the included angle does not change or an expanded state after the included angle between the first sub-screen and the second sub-screen changes. The rotating shaft mechanism 196 may be at a folding edge or a folding shaft of the foldable screen. The rotating shaft mechanism 196 may include a mechanical rotating shaft mechanism, an electronic rotating shaft mechanism, or a combination thereof.

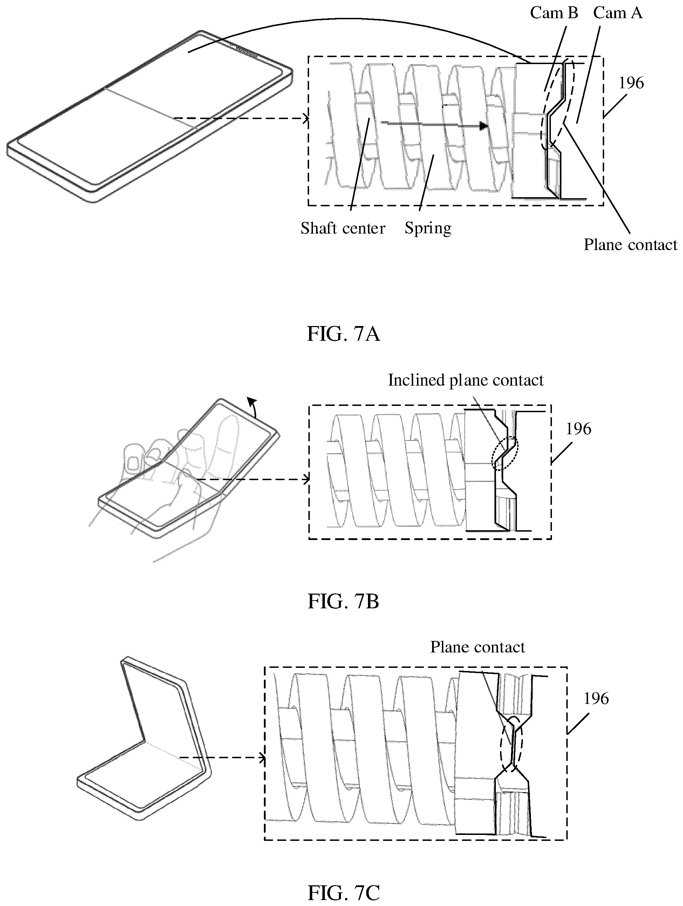

For example, FIG. 7A is a schematic diagram of a structure of one rotating shaft mechanism 196. The rotating shaft mechanism 196 is a mechanical rotating shaft. The mechanical rotating shaft may include a group of cams A, cams B, shaft centers, and springs sleeved on the shaft centers. The cam A is fixed to the shaft center, the cam B is connected to the first sub-screen through a connecting rod, the cam A is in contact with the cam B, and the cam B is in contact with the spring. In an initial state, the cam A and the cam B are in plane contact, a direction of force F of the spring on the cam B is perpendicular to a contact surface, the cam B and the cam A do not move relatively, and the first sub-screen connected to the cam B is not folded. The initial state is a preset state. In this implementation of this application, an example in which the initial state is an expanded state is used for description.

In some implementations, the mechanical rotating shaft may further include a group of cams A', cams B', shaft centers, and springs sleeved on the shaft centers. The cam B' is connected to the second sub-screen. In the expanded state, the cam A' and the cam B' are in plane contact, the cam B' and the cam A' do not move relatively, and the second sub-screen connected to the cam B' is not folded. Therefore, the foldable screen may remain in the expanded state.

When the first sub-screen is folded, the cam B rotates. If an amplitude of folding the first sub-screen is relatively small and a change amplitude of the included angle between the first sub-screen and the second sub-screen is less than or equal to a preset angle 1, or if the included angle decreases because of folding and the included angle between the first sub-screen and the second sub-screen after the folding is greater than a preset angle 2, as shown in FIG. 7B, an amplitude selected by the cam B is relatively small, and the cam B and the cam A are in inclined plane contact. The direction of the force F of the spring on the cam B is not perpendicular to the contact surface. Under the action of the force F, an inclined plane on which the cam B is in contact with the cam A slides relatively, and the cam B rotates back to be in plane contact with the cam A, so that the first sub-screen springs back to the expanded state of the foldable screen.

If an amplitude of folding the first sub-screen is relatively large and an amplitude of decreasing the included angle between the first sub-screen and the second sub-screen is greater than a preset angle 2, or if the included angle between the first sub-screen and the second sub-screen after the folding is less than or equal to a preset angle 2, as shown in FIG. 7C, a rotation amplitude of the cam B is relatively large, and the cam B and the cam A are in plane contact. The cam B and the cam A do not move relatively, and the first sub-screen connected to the cam B is not folded. Therefore, the foldable screen may remain in the folded state currently.

A case of folding the second sub-screen is similar to a case of folding the first sub-screen. Details are not described herein.

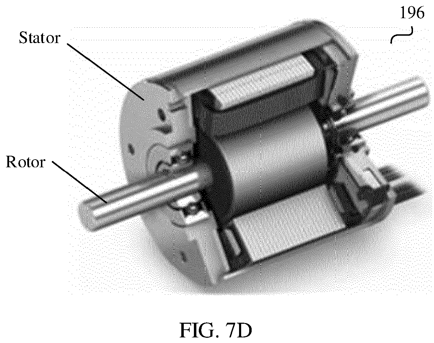

For another example, FIG. 7D is a schematic diagram of a structure of another rotating shaft mechanism 196. The rotating shaft mechanism 196 is an electronic rotating shaft. The electronic rotating shaft includes a rotor and a (stator). The rotor and the stator are respectively rigidly connected to the first sub-screen and the second sub-screen. When the motor rotates, the rotor and the stator may rotate relatively, so that the first sub-screen and the second sub-screen are folded relatively. For example, the rotor is rigidly connected to the first sub-screen. When the first sub-screen is folded, if an amplitude of decreasing the included angle between the first sub-screen and the second sub-screen is less than or equal to a preset angle 1, or if the included angle between the first sub-screen and the second sub-screen after the folding is less than or equal to a preset angle 2, the motor may be connected to a reverse current, and the motor rotates reversely, to drive the first sub-screen to fold backward, so that the foldable screen springs back to the expanded state or a state in which the included angle between the first sub-screen and the second sub-screen does not decrease. When the motor is connected to a forward current, the motor rotates forward, to drive the first sub-screen to fold forward, so that the foldable screen is folded.

In this implementation of this application, the display 194 in the electronic device 100 may be a foldable screen, and the foldable screen may include a first sub-screen and a second sub-screen. The user can fold or expand the foldable screen. A component such as the gyroscope sensor 180B may detect an included angle between the first sub-screen and the second sub-screen and a change of the included angle. A sensor such as the touch sensor 180K may detect a touch operation performed by the user on the foldable screen. The power button or the volume button reports a press event to the processor in response to a press operation performed by the user. Within preset duration, if the processor 110 determines that the touch operation performed by the user on the foldable screen or the press operation performed by the user on the power button or the volume button is detected, and the included angle between the first sub-screen and the second sub-screen changes, the processor indicates a related application to perform a preset operation.

After performing the preset operation, if the processor determines that a change amplitude of the included angle between the first sub-screen and the second sub-screen is less than or equal to a preset angle 1, or if the included angle decreases and a decreased included angle between the first sub-screen and the second sub-screen is greater than a preset angle 2 currently, or if the included angle increases and an increased included angle between the first sub-screen and the second sub-screen is less than a preset angle 3 currently, the processor may further indicate the electronic rotating shaft to rotate, so that the foldable screen springs back to an expanded state or a state in which the included angle does not change.

An example in which the electronic device shown in FIG. 2A to FIG. 2D having the structure shown in FIG. 5 is a foldable screen device, a foldable screen includes a first sub-screen and a second sub-screen, the first sub-screen is an upper half screen, the second sub-screen is a lower half screen, and the foldable screen is a touchscreen is used below to describe the foldable screen-based interaction method provided in this implementation of this application.

In some implementations, the foldable screen device may perform a preset operation with reference to a folding operation (or referred to as a folding action) performed on the foldable screen and a touch operation performed by the user on the foldable screen. The folding operation may increase or decrease the included angle, and the folding operation may be forward or backward folding. The preset operation may be associated with the touch operation and the change of the included angle.

The preset operation is enabling a one-handed mode, enabling a screen splitting function, enabling a screenshot function, enabling a word segmentation function, enabling a voice assistant function, enabling a shortcut menu call-out function, refreshing a page, flipping a page, scrolling a page, adjusting brightness, or adjusting volume.

For example, the touch operation may alternatively be a slide operation, a tap operation, a press operation, or a touch operation. The tap operation may include a single-tap operation, a double-tap operation, a multi-tap operation, or the like. For example, the touch operation may be a tap operation performed by the user on an icon on the foldable screen. For another example, the touch operation may be a slide operation performed by the user on a control on the foldable screen.

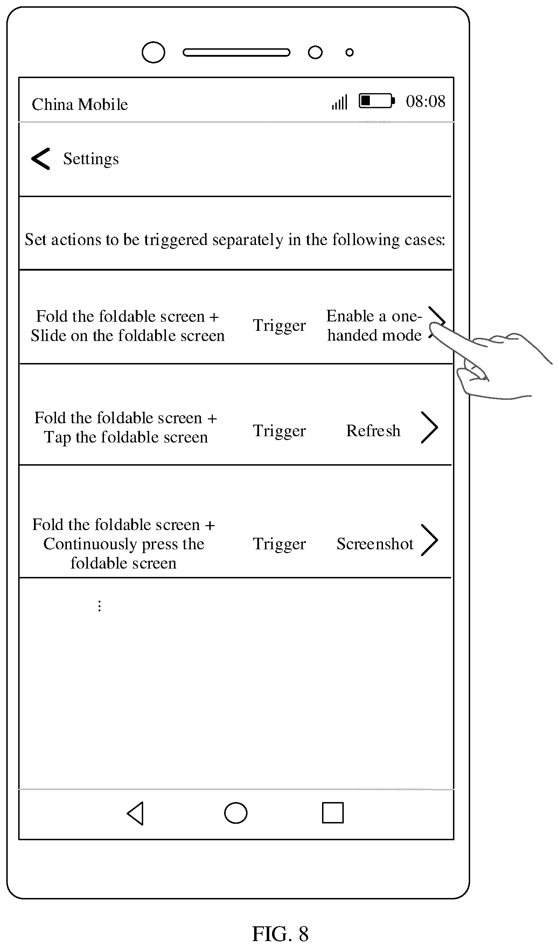

In some implementations, the preset operation and the touch operation may be preset by the foldable screen device, or may be customized by the user. In some implementations, the preset operation triggered to be performed varies with the touch operation. For example, the foldable screen device may display a setting interface shown in FIG. 8, so as to help the user set the folding operation and the preset operation that can be triggered by the touch operation.

In some other implementations, the touch operation may be any operation that the user is in contact with the foldable screen device. In this way, once the foldable screen device detects any touch operation performed by the user on the foldable screen, the foldable screen device may determine that the touch operation performed by the user on the foldable screen is detected. This can help the user perform a blind operation, thereby improving user experience.

In some implementations, after determining that a preset condition 1 is met, the foldable screen device performs the preset operation. The preset condition 1 may include: within preset duration, detecting, by using a sensor, that an included angle between the first sub-screen and the second sub-screen changes, in other words, detecting a folding operation performed on the foldable screen; and detecting a touch operation performed by the user on the foldable screen.

In other words, a time interval between a moment at which the foldable screen device detects that the included angle between the first sub-screen and the second sub-screen changes and a moment at which the foldable screen device detects the touch operation performed by the user on the foldable screen is less than or equal to the preset duration. The preset duration is relatively short, for example, may be 2s (seconds).

There may be a plurality of manners in which the foldable screen device detects whether the included angle between the sub-screens changes. For example, the foldable screen device may detect, by using the gyroscope sensor or the acceleration sensor, whether the included angle changes. For another example, the foldable screen device may alternatively detect, by using a rotation axis sensor, a touchscreen capacitance change, or a Hall effect sensor, whether the included angle changes. It may be understood that the change of the included angle may alternatively be replaced by detecting an analog/digital semaphore data change of the foregoing one or more sensors to determine, based on the analog/digital semaphore data change, whether the included angle changes.

If the included angle between the first sub-screen and the second sub-screen of the foldable screen device changes, the foldable screen is folded. The foldable screen device may detect a change status of the included angle between the first sub-screen and the second sub-screen. The foldable screen device may detect the change status of the included angle between the first sub-screen and the second sub-screen by directly calculating the change of the included angle based on data detected by the gyroscope sensor, the acceleration sensor, or the like; or may detect the change status of the included angle in an indirect manner such as a manner of detecting a change of a rotating shaft mechanism. In addition, actual calculation may also be an equivalence operation performed based on a relative situation before and after the change. The foldable screen device may determine, based on the change status of the included angle between the first sub-screen and the second sub-screen, whether the included angle increases or decreases.

Within the preset duration, that the foldable screen device detects that the included angle between the first sub-screen and the second sub-screen changes, and detects the touch operation performed by the user on the foldable screen may include the following case:

The foldable screen device simultaneously detects that the included angle between the first sub-screen and the second sub-screen changes, and detects the touch operation performed by the user on any area on the foldable screen. In addition, the user may perform a blind operation on any area on the foldable screen. This can improve operation efficiency and user experience.

Alternatively, within the preset duration, the foldable screen device first detects that the included angle between the first sub-screen and the second sub-screen changes, and then detects the touch operation performed by the user on any area on the foldable screen. In other words, a time interval between a moment at which the foldable screen device detects that the included angle changes and a moment at which the foldable screen device detects the touch operation performed by the user on any area on the foldable screen is less than or equal to relatively short preset duration. After detecting that the included angle changes, the foldable screen device quickly detects the touch operation performed by the user on any area on the foldable screen. In addition, the user may perform a blind operation on any area on the foldable screen. This can improve operation efficiency and user experience.

Alternatively, within the preset duration, the foldable screen device first detects the touch operation performed by the user on the foldable screen, and then detects that the included angle between the first sub-screen and the second sub-screen changes. In other words, after detecting the touch operation performed by the user on any area on the foldable screen, the foldable screen device quickly detects that the included angle between the sub-screens changes. In addition, the user may normally use the foldable screen device by performing the touch operation on the foldable screen (for example, tapping an application icon). Therefore, to avoid a misoperation, the touch operation in this case may be an operation performed by the user on a blank area on the foldable screen

In a scenario in which the user holds the foldable screen device, a thumb of the user is usually in the front of the foldable screen naturally and therefore can naturally perform a touch operation on the foldable screen. In addition, in the scenario in which the user holds the foldable screen device, other fingers are usually on the back of the foldable screen naturally (that is, a side that is of the foldable screen device and that is away from the face of the user). A finger on the back of the foldable screen such as an index finger may naturally push the upper half sub-screen of the foldable screen to fold toward the front of the foldable screen (that is, a side that is of the foldable screen device and that is toward the face of the user).

In other words, when the user holds the foldable screen device, the user may naturally fold the foldable screen and therefore naturally perform the touch operation on any area or any blank area on the foldable screen, to trigger the foldable screen device to perform the preset operation. This is a natural interaction manner in a holding scenario. The user does not need to deliberately perform an operation used to trigger the preset operation

In addition, in the natural interaction manner provided in this implementation of this application, the user does not need to specifically memorize a specific gesture and a specific operation area like an existing interaction manner, and does not need to deliberately make a complex specific gesture or does not need to perform an operation in a blind area that is difficult to reach by a finger. Therefore, the natural interaction manner implements a convenient operation, more stable holding, better comfort, a higher success rate of triggering a preset operation, and better user experience.

In some implementations, the foldable screen device triggers to perform the preset operation only when an angle at which the included angle between the first sub-screen and the second sub-screen changes is greater than or equal to a preset angle 0 (for example, may be 3°). Specifically, the included angle between the first sub-screen and the second sub-screen increases by a first angle, and the first angle is greater than or equal to the preset angle 0; or the included angle between the first sub-screen and the second sub-screen decreases by a second angle, and the second angle is greater than or equal to the preset angle 0.

If the included angle between the first sub-screen and the second sub-screen slightly changes (for example, changes by a few degrees), the foldable screen device may jitter, shake, or the like, and the change is difficult to be accurately detected by the foldable screen device. Consequently, a misoperation may be easily caused. Therefore, the foldable screen device triggers to perform the preset operation only when detecting that the included angle between the sub-screens clearly changes. This can improve trigger precision.

For example, the preset operation is an operation of enabling a one-handed mode, and the touch operation is a press operation. In the scenario in which the user holds the foldable screen device, the thumb is naturally in the front of the foldable screen. When the user folds the first sub-screen forward, to keep the foldable screen device stable and avoid slipping, the thumb naturally presses the foldable screen, in other words, the press operation is naturally performed without deliberately performing the touch operation.

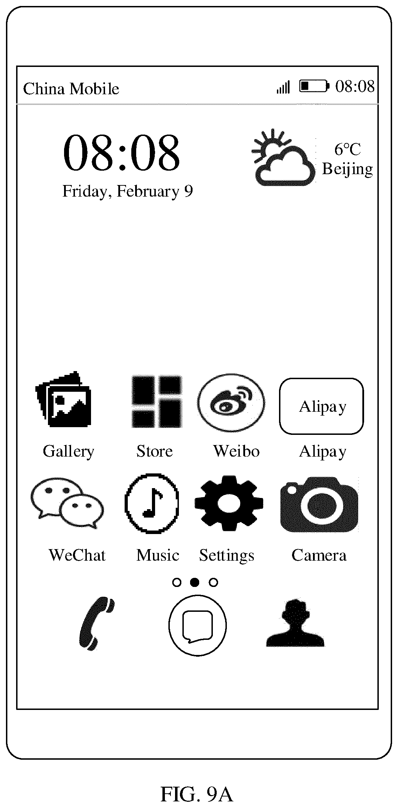

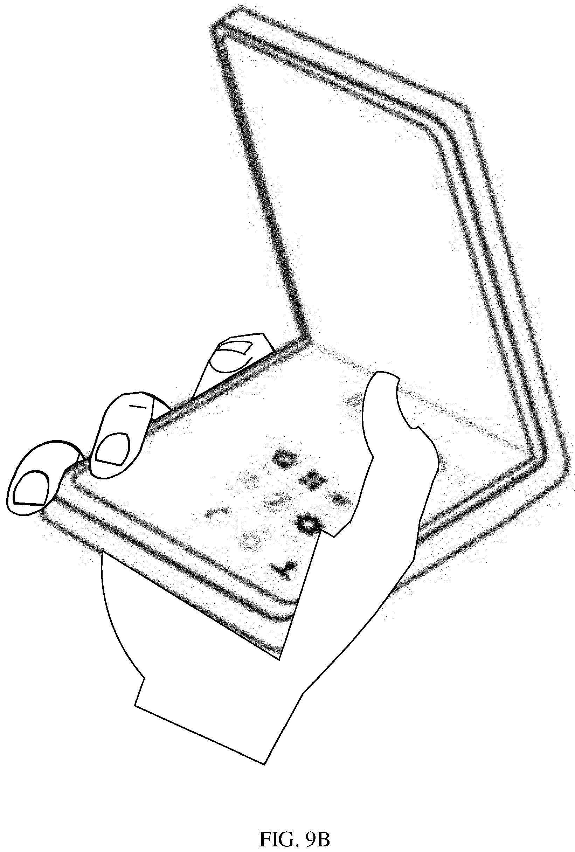

For example, the foldable screen device starts to be in an expanded state shown in FIG. 9A. After the foldable screen device detects, within the preset duration, that the included angle between the first sub-screen and the second sub-screen decreases, the foldable screen device is in a semi-folded state shown in FIG. 9B. If the foldable screen device further detects, within the preset duration, the press operation performed by the user on the foldable screen, the foldable screen device performs the preset operation to enable the one-handed mode. In addition, as shown in FIG. 9B, after enabling the one-handed mode, the foldable screen device may further narrow an interface display range to a lower right corner (or a lower left corner), so as to help the user perform a one-handed operation.

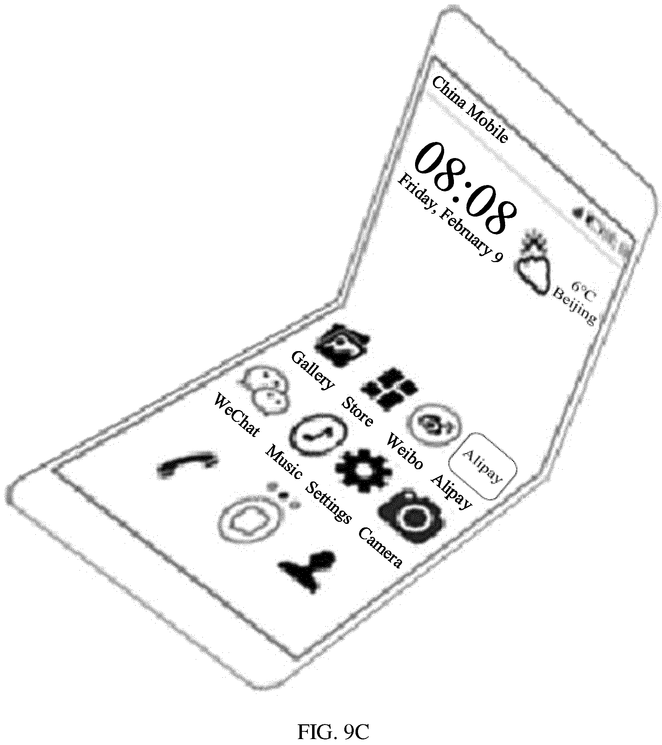

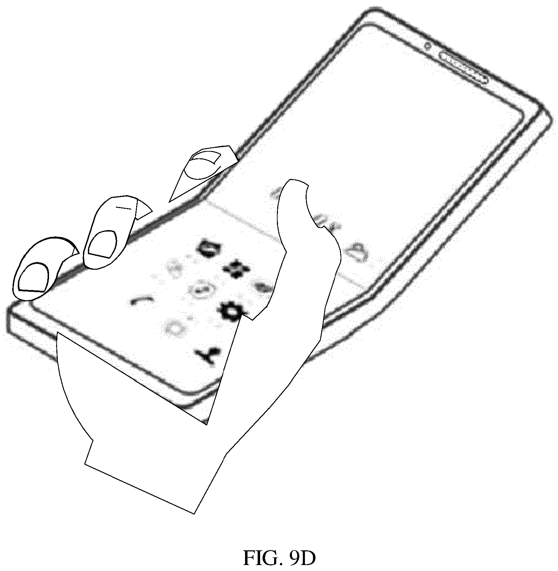

For another example, the foldable screen device starts to be in a state shown in FIG. 9C. In response to the folding operation performed by the user, the included angle between the first sub-screen and the second sub-screen increases. After the foldable screen device detects, within the preset duration, that the included angle between the first sub-screen and the second sub-screen increases, the foldable screen device is in a state shown in FIG. 9D. If the foldable screen device further detects, within the preset duration, the press operation performed by the user on the foldable screen, the foldable screen device performs the preset operation to enable the one-handed mode. In addition, as shown in FIG. 9D, after enabling the one-handed mode, the foldable screen device may further narrow an interface display range to a lower right corner (or a lower left corner), so as to help the user perform a one-handed operation.

It should be noted that, compared with FIG. 9D, a degree of folding the foldable screen shown in FIG. 9C is larger, but an action of enabling the foldable screen to switch from the state shown in FIG. 9C to the state shown in FIG. 9D may also be referred to as a folding operation.

In this implementation of this application, the preset operations may be fixed and are a same operation in all application states, or may be different operations that dynamically change as current application states change. For example, the application state change may include a change of an application currently used by the foldable screen device or a change of a currently displayed application interface.

For example, when the preset condition 1 is met, if the currently used application is an application that needs to update data in real time, such as Video, Browser, Contacts, Wealth Management, or Stocks, the preset operation may be refreshing a current page.

For another example, when the preset condition 1 is met, if the currently displayed user interface is a page of Reader, the preset operation may be flipping a page backward. If the currently displayed user interface is a web page of Browser, the preset operation may be scrolling up a page.

For another example, when the preset condition 1 is met, if an eye tracking sensor determines that the eye has locked a corresponding area, the preset operation may be tapping a control in the area.

In some other implementations, the preset operation may further vary with a factor such as a folding speed, a folding angle, or a folding amplitude of the foldable screen.

For example, in some implementations, the preset operation varies with a change amplitude of the included angle between the first sub-screen and the second sub-screen. For example, a larger amplitude of decreasing the included angle between the first sub-screen and the second sub-screen indicates a smaller interface display range after the one-handed mode is enabled, and a smaller amplitude of decreasing the included angle between the first sub-screen and the second sub-screen indicates a larger interface display range after the one-handed mode is enabled.

In some other implementations, after the preset condition 1 is met, the preset operation varies with the included angle between the first sub-screen and the second sub-screen. For example, when the included angle between the first sub-screen and the second sub-screen decreases, after the one-handed mode is enabled, a smaller current angle of the included angle indicates a smaller interface display range, and a larger current angle of the included angle indicates a larger interface display range. In a process of continuously folding the foldable screen, the interface display range may become smaller.

For example, after the preset condition 1 is met, the foldable screen is in the semi-folded state shown in FIG. 9D. An included angle between the first sub-screen and the second sub-screen shown in FIG. 9D is greater than an included angle shown in FIG. 9B. Therefore, after the one-handed mode is enabled, an interface display range shown in FIG. 9D is greater than an interface display range shown in FIG. 9B.

In other examples, the preset operation is an operation such as an operation of adjusting screen brightness. After the preset condition 1 is met, a larger included angle between the first sub-screen and the second sub-screen indicates larger screen brightness, and a smaller included angle between the first sub-screen and the second sub-screen indicates smaller screen brightness. In a process of continuously folding the foldable screen, the screen brightness may become smaller.

In some other implementations, the preset operation includes enabling a left-handed mode or enabling a right-handed mode. The foldable screen device may determine, based on a slide track, a slide direction, a touch area, a finger feature, a tapped icon, a touch location, or the like of the touch operation performed on the foldable screen, whether to enable the left-handed mode or the right-handed mode.

When the user holds the foldable screen device with a left hand, the user usually wants to enable the left-handed mode. When the user holds the foldable screen device with a right hand, the user usually wants to enable the right-handed mode.

For example, the touch operation is a slide operation. When the user holds the foldable screen device with the left hand, a thumb may naturally slide on a left half part (that is, a left half screen) of the foldable screen. When the user holds the foldable screen device with the right hand, a thumb may naturally slide on a right half part (that is, a right half screen) of the foldable screen. Therefore, if the preset condition 1 may further include that a large part of a slide track of the slide operation performed by the user on the foldable screen is in the left half part, in other words, a length of the slide track in the left half part is greater than a length of the slide track in the right half part, the corresponding preset operation is enabling the left-handed mode. Alternatively, if the preset condition 1 may further include that a large part of a slide track of the slide operation performed by the user on the foldable screen is in the right half part, in other words, a length of the slide track in the left half part is less than or equal to a length of the slide track in the right half part, the corresponding preset operation is enabling the right-handed mode.

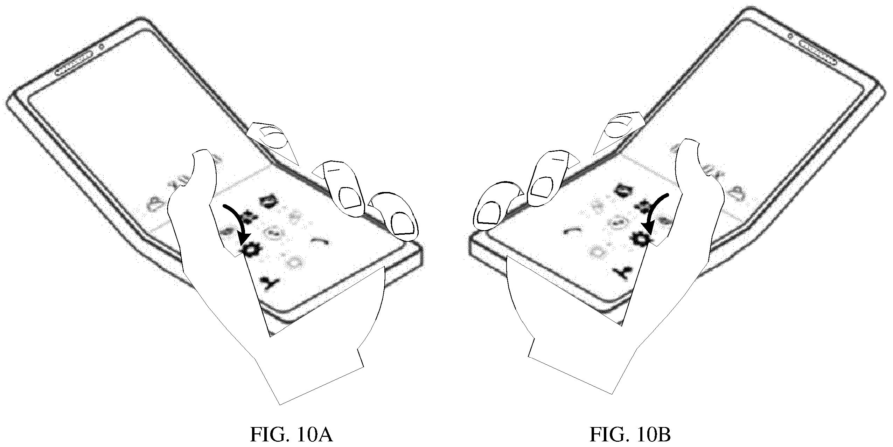

For example, as shown in FIG. 10A, when detecting that the large part of the slide track of the user on the foldable screen is in the left half part, the foldable screen device enables the left-handed mode. As shown in FIG. 10B, when detecting that the large part of the slide track of the user on the foldable screen is in the right half part, the foldable screen device enables the right-handed mode.

For another example, the touch operation is a slide operation. If the preset condition 1 further includes that a slide direction of the slide operation performed by the user on the foldable screen is generally from top to bottom, the corresponding preset operation is enabling the right-handed mode. Alternatively, if the preset condition 1 further includes that a slide direction of the slide operation performed by the user on the foldable screen is generally from bottom to top, the corresponding preset operation is enabling the left-handed mode.

For another example, the touch operation is a slide operation. When the user holds the foldable screen device with the left hand, the user may be more accustomed to sliding on the foldable screen from right to left. When the user holds the foldable screen device with the right hand, the user may be more accustomed to sliding on the foldable screen from left to right. Therefore, if the preset condition 1 further includes that a slide direction of the slide operation performed by the user on the foldable screen is generally from right to left (for example, from right to left, from a lower right corner to an upper left corner, or from an upper right corner to a lower left corner), the corresponding preset operation is enabling the left-handed mode. Alternatively, if the preset condition 1 further includes that a slide direction of the slide operation performed by the user on the foldable screen is generally from left to right (for example, from left to right, from a lower left corner to an upper right corner, or from an upper left corner to a lower right corner), the corresponding preset operation is enabling the right-handed mode.

For another example, when the user holds the foldable screen device with the left hand, a thumb is closer to a left half part, and it is easier to touch the foldable screen on the left half part. When the user holds the foldable screen device with the right hand, a thumb is closer to a right half part, and it is easier to touch the foldable screen on the right half part.

For example, if the preset condition 1 further includes that a large part of a touch area of the touch operation performed by the user on the foldable screen (that is, a contact area between the mobile phone of the user and the foldable screen during touch) is in the left half part, in other words, a touch area of the touch operation performed on the left half part of the foldable screen is greater than a touch area of the touch operation performed on the right half part, the corresponding preset operation is enabling the left-handed mode. Alternatively, if the preset condition 1 further includes that a large part of a touch area of the touch operation performed by the user on the foldable screen is in the right half part, in other words, a touch area of the touch operation performed on the left half part of the foldable screen is less than or equal to a touch area of the touch operation performed on the right half part, the corresponding preset operation is enabling the right-handed mode.

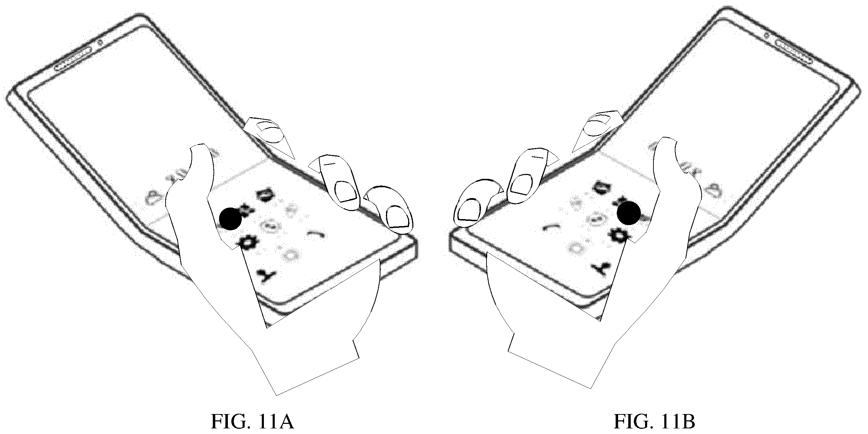

For example, as shown in FIG. 11A, when the foldable screen device detects that a large part of a press area (which is represented by a black dot in the figure) of a press operation performed by the user on the foldable screen is in the left half part, the foldable screen device enables the left-handed mode. As shown in FIG. 11B, when the foldable screen device detects that a large part of a press area (which is represented by a black dot in the figure) of a press operation performed by the user on the foldable screen is in the right half part, the foldable screen device enables the right-handed mode.

For another example, if the preset condition 1 further includes that a touch area of the user is in an upper left corner of the second sub-screen (or a lower left corner of the first sub-screen), the corresponding preset operation is enabling the left-handed mode. Alternatively, if the preset condition 1 further includes that a touch area of the user is in an upper right corner of the second sub-screen (or a lower right corner of the first sub-screen), the corresponding preset operation is enabling the right-handed mode.

For another example, the touch operation is a press operation. When the preset condition 1 further includes that a press feature of the press operation is a first feature, the preset operation is enabling the left-handed mode. Alternatively, when the preset condition 1 further includes that a press feature is a second feature, the preset operation is enabling the right-handed mode. The press feature includes one or more of a press force feature, a press location feature, or a press area feature.

A press location is a central location of a contact area between a finger and the foldable screen when the user performs the press operation. For example, the first feature is that the press location is on the left half screen, and the second feature is that the press location is on the right half screen. To be specific, if the press location is on the left half screen, the left-handed operation is enabled; or if the press location is on the right half screen, the right-handed mode is enabled.

For example, the first feature is that press force is greater than or equal to a preset force value 1, and the second feature is that press force is less than the preset force value 1 and greater than or equal to a preset force value 2. To be specific, if the press force is greater than or equal to the preset force value 1, the left-handed operation is enabled; or if the press force is less than the preset force value 1 and greater than or equal to the preset force value 2, the right-handed mode is enabled.

The press area feature may include a single-press area feature or a multi-press area feature, and may specifically include a size of a press area, a shape of the press area, a distribution status of the press area, and the like. For example, the press area may be the touch area shown in FIG. 11A and FIG. 11B.

For another example, if the preset condition 1 further includes that a finger feature corresponding to the touch operation is a third feature, the preset operation is enabling the left-handed mode; or if the preset condition further includes that a finger feature corresponding to the touch operation is a fourth feature, the preset operation is enabling the right-handed mode. The finger feature includes a fingerprint or a shape of a finger that is in contact with the foldable screen.

A fingerprint feature of the left hand of the user is different from a fingerprint feature of the right hand. For example, fingerprint features such as general detour directions of fingerprint textures and specific details of the fingerprint textures are different. For example, if the foldable screen device determines that the finger fingerprint during pressing is the fingerprint of the left hand, the left-handed mode is triggered; or if the foldable screen device determines that the finger fingerprint during pressing is the fingerprint of the right hand, the right-handed mode is triggered.

For another example, a shape of the thumb that is in contact with the foldable screen is generally distribution along a left slash, in other words, generally in a "/" direction. When the user holds the foldable screen device with the right hand, a shape of the thumb that is in contact with the foldable screen is generally distribution along a right slash, in other words, generally in a "\" direction. Therefore, when the shape of the thumb is generally distribution along a left slash, the corresponding preset operation is enabling the left-handed mode. Alternatively, when the shape of the thumb is generally distribution along a right slash, the corresponding preset operation is enabling the right-handed mode.

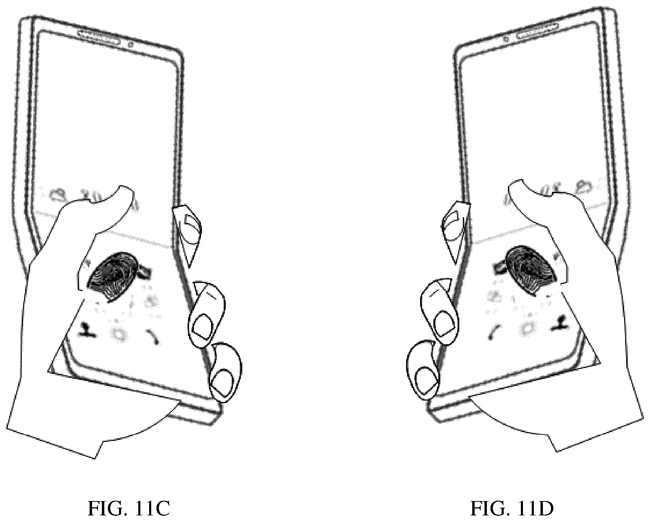

For example, as shown in FIG. 11C, when detecting that a finger shape corresponding to a press operation performed by the user on the foldable screen is generally distribution along a left slash, the foldable screen device enables the left-handed mode. As shown in FIG. 11D, when detecting that a finger shape corresponding to a press operation performed by the user on the foldable screen is generally distribution along a right slash, the foldable screen device enables the right-handed mode.

For another example, the touch operation is a tap operation performed by the user on an icon on the foldable screen. For example, if the preset condition 1 further includes detecting a tap operation performed by the user on an icon on the left half screen, the corresponding preset operation is enabling the left-handed mode. Alternatively, if the preset condition 1 further includes detecting a tap operation performed by the user on an icon on the right half screen, the corresponding preset operation is enabling the right-handed mode.

For another example, if the preset condition 1 further includes detecting a tap operation performed by the user on a specific icon **1,** the corresponding preset operation is enabling the left-handed mode. Alternatively, if the preset condition 1 further includes detecting a tap operation performed by the user on a specific icon 2, the corresponding preset operation is enabling the right-handed mode.

For another example, if the preset condition 1 further includes detecting a tap operation performed by the user on an icon on an upper left corner of the second sub-screen (or a lower left corner of the first sub-screen), the corresponding preset operation is enabling the left-handed mode. Alternatively, if the preset condition 1 further includes detecting a tap operation performed on an icon on an upper right corner of the second sub-screen (or a lower right corner of the first sub-screen), the corresponding preset operation is enabling the right-handed mode.

In some other implementations, the foldable screen device may perform a preset operation with reference to a folding operation performed on the foldable screen and a press operation performed by the user on a side of the foldable screen device.

For example, in some implementations, after determining that a preset condition 2 is met, the foldable screen device performs the preset operation. The preset condition 2 may include: within preset duration (for example, 2s), detecting that an included angle between the first sub-screen and the second sub-screen decreases, in other words, detecting a folding operation performed on the foldable screen; and detecting a press operation performed by the user on a power button or a volume button on the side of the foldable screen device.

The press operation performed by the user on the power button or the volume button may be a single-press operation, a multi-press operation, a touch and hold operation, or the like. In a scenario in which the user holds the foldable screen device, a thumb and a middle finger of the user may be naturally at the side of the foldable screen device and therefore can naturally press the side, for example, press the power button or the volume button disposed on the side. In addition, in the scenario in which the user holds the foldable screen device, other fingers are usually on the back of the foldable screen naturally. The fingers on the back of the foldable screen such as an index finger may naturally push the upper half sub-screen of the foldable screen to fold toward the front of the foldable screen.

In some implementations, when the preset operation includes enabling a left-handed mode or enabling a right-handed mode, the foldable screen device may determine, based on whether the power button or the volume button is pressed by the user, whether a volume up button or a volume down button of the volume button is pressed by the user, a press quantity, or the like, whether to enable the left-handed mode or the right-handed mode.

For example, if the preset condition 2 includes detecting a press operation performed by the user on the volume button (the volume up button or the volume down button), the corresponding preset operation is enabling the right-handed mode. Alternatively, if the preset condition 2 includes detecting a press operation performed by the user on the power button, the corresponding preset operation is enabling the left-handed mode.

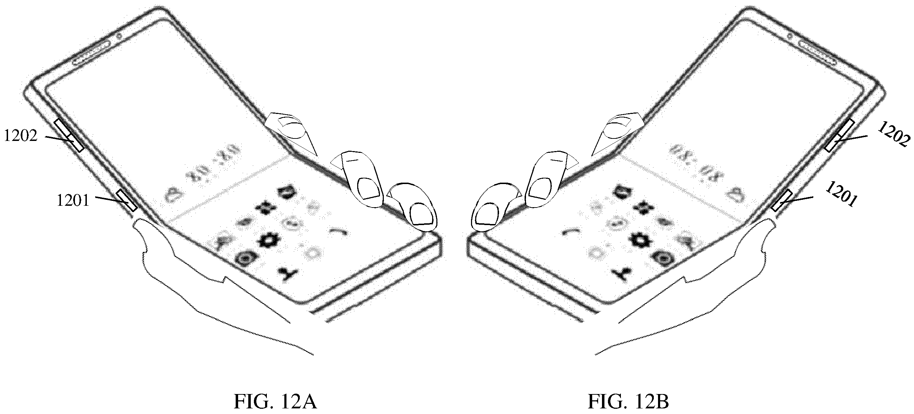

For example, as shown in FIG. 12A, when detecting that the user presses a power button 1201, the foldable screen device enables the left-handed mode. As shown in FIG. 12B, when detecting that the user presses a volume button 1202, the foldable screen device enables the right-handed mode.

For another example, if the preset condition 2 includes detecting a press operation performed by the user on the volume down button of the volume button, the corresponding preset operation is enabling the left-handed mode. Alternatively, if the preset condition 2 includes detecting a press operation performed by the user on the volume up button of the volume button, the corresponding preset operation is enabling the right-handed mode.

For another example, if the preset condition 2 includes detecting that the user quickly presses the power button twice, the corresponding preset operation is enabling the left-handed mode. Alternatively, if the preset condition 2 includes detecting that the user presses the power button once, the corresponding preset operation is enabling the right-handed mode.

In some other implementations, the foldable screen device may perform the foregoing preset operation directly in response to the folding operation performed on the foldable screen instead of making reference to the touch operation performed by the user on the foldable screen device. The preset operation is associated with the change of the included angle between the sub-screens. This interaction manner is more simple and natural, a success rate of triggering a preset operation is high, and user experience is better.

For example, after determining that a preset condition 3 is met, the foldable screen device performs the preset operation. The preset condition 3 may include that the foldable screen device detects that an included angle between the first sub-screen and the second sub-screen changes.

In a scenario in which the user holds the foldable screen device, other fingers of the user other than a thumb are usually on the back of the foldable screen naturally. The fingers on the back of the foldable screen such as an index finger may naturally push the upper half sub-screen of the foldable screen to fold toward the front of the foldable screen. In other words, when the user holds the foldable screen device, the user may naturally fold the foldable screen to trigger the foldable screen device to perform the preset operation, and the user does not need to deliberately perform another operation used to trigger the preset operation. Therefore, the natural interaction manner implements a convenient operation, stable holding, better comfort, a higher success rate of triggering a preset operation, and better user experience.

In this implementation of this application, that the preset operation is associated with the touch operation performed by the user on the foldable screen device and the change of the included angle between the sub-screens may specifically include: The preset operation is associated with one or more of the following parameters:

For example, the touch operation performed by the user on the foldable screen of the foldable screen device is a slide operation performed by the user on the foldable screen. For example, the touch operation may be a slide operation performed by the user on a control on the foldable screen. The preset operation is associated with a slide direction and a slide amplitude of the user on the foldable screen. For example, the preset operation is adjusting display brightness of the foldable screen. When the foldable screen device detects that the user slides downward (or leftward), the display brightness decreases, in other words, a direction of adjusting the display brightness is decreasing; or when the foldable screen device detects that the user slides upward (or rightward), the display brightness increases, in other words, a direction of adjusting the display brightness is increasing. In addition, if the foldable screen device detects that the slide amplitude of the user on the foldable screen is larger, an amplitude of adjusting (increasing/decreasing) the display brightness is larger; or if the foldable screen device detects that the slide amplitude of the user on the foldable screen is smaller, an amplitude of adjusting the display brightness is smaller.

For another example, a corresponding sensor is disposed on the side of the foldable screen device to detect a slide operation performed by the user. The preset operation is associated with a slide direction and a slide amplitude of the slide operation performed by the user on the side of the foldable screen device. For example, the preset operation is adjusting display brightness. When the foldable screen device detects that the user slides downward on the side, the display brightness decreases; or when the foldable screen device detects that the user slides upward on the side, the display brightness increases. If the foldable screen device detects that the slide amplitude of the user on the side is larger, an amplitude of adjusting the display brightness is larger; or if the foldable screen device detects that the slide amplitude of the user on the side is smaller, an amplitude of adjusting the display brightness is smaller.

For another example, a control that can be toggled is disposed on the side of the foldable screen device, and the preset operation is associated with a toggle direction and a toggle amplitude of the user for the control. For example, the preset operation is adjusting volume. If the foldable screen device detects that the user toggles the control from top to bottom, the volume decreases; or if the foldable screen device detects that the user toggles the control from bottom to top, the volume increases. If the foldable screen device detects that the amplitude of toggling the control is larger, an amplitude of adjusting the volume is larger; or if the foldable screen device detects that the amplitude of toggling the control is smaller, an amplitude of adjusting the volume is smaller.

For another example, the preset operation is associated with a change amplitude of the included angle between the first sub-screen and the second sub-screen. For example, the preset operation is adjusting volume. A larger change amplitude of the included angle between the first sub-screen and the second sub-screen indicates a larger amplitude of adjusting the volume; and a smaller change amplitude of the included angle between the first sub-screen and the second sub-screen indicates a smaller amplitude of adjusting the volume.

For another example, the preset operation is associated with a changed included angle between the first sub-screen and the second sub-screen. For example, the preset operation is adjusting volume. A larger changed included angle between the first sub-screen and the second sub-screen indicates larger adjusted volume; and a smaller changed included angle between the first sub-screen and the second sub-screen indicates smaller adjusted volume.

For another example, the preset operation is associated with an amplitude of toggling performed by the user on a control disposed on the side of the foldable screen device and the change of the included angle between the first sub-screen and the second sub-screen.

For another example, the preset operation is associated with a slide direction and a slide amplitude of the user on the foldable screen and a change amplitude of the included angle between the first sub-screen and the second sub-screen.

When the preset operation is associated with the foregoing plurality of parameters, the foldable screen device may further perform control or adjustment in a plurality of aspects by performing the preset operation.

For example, the foldable screen includes a first control and a second control, the first control is configured to adjust a first function, the second control is configured to adjust a second function, and the preset operation includes: adjusting the first function and the second function. The first function is associated with the change of the included angle between the first sub-screen and the second sub-screen. The touch operation is a slide operation performed on the second control, and the second function is associated with a slide direction and a slide amplitude of the slide operation. The first function and the second function may be two sub-functions of one function, or may be functions in different aspects. This is not limited in this implementation of this application.

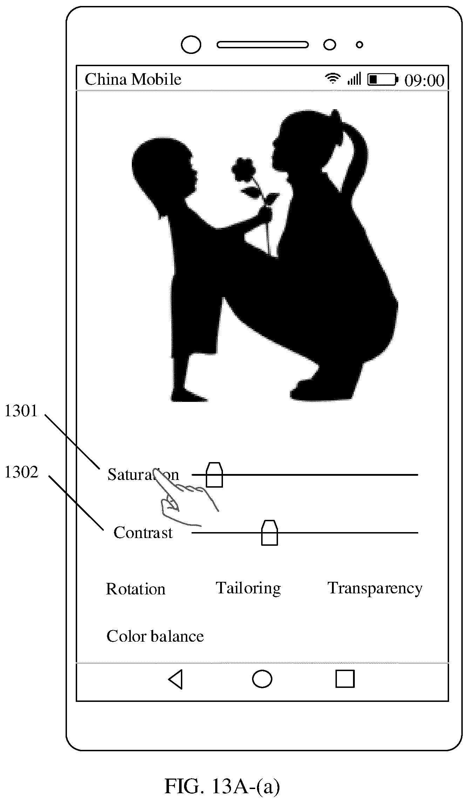

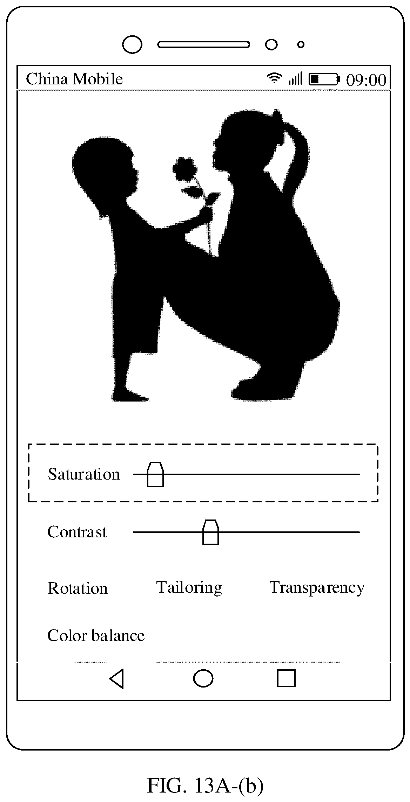

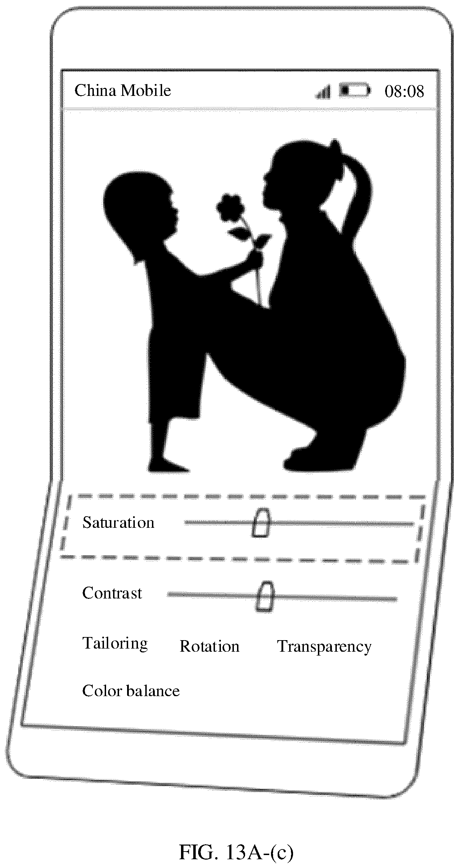

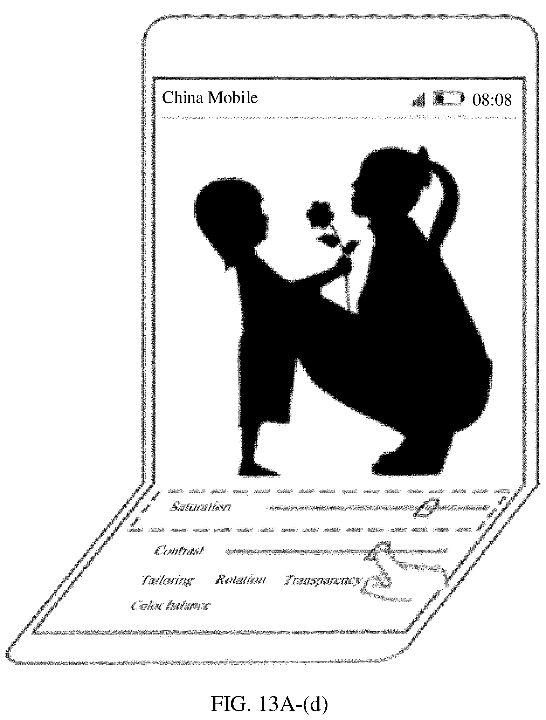

For example, as shown in FIG. 13A-(a), a user interface of a picture processing app includes a control 1301 (that is, the first control) configured to adjust saturation (that is, the first function) and a control 1302 (that is, the second control) configured to adjust contrast (that is, the second function). After the foldable screen device detects a touch and hold operation (or a tap operation or another operation) performed by the user on the control 1301, as shown in FIG. 13A-(b), the control 1301 is locked. Then, as shown in FIG. 13A-(c), if the foldable screen device detects, within the preset time length (for example, 1s), that the included angle between the sub-screens changes, the foldable screen device determines that the change of the included angle between the sub-screens is bound to a function of the locked control 1301. In addition, it can be learned through comparison between FIG. 13A-(b) and FIG. 13A-(a) that the saturation changes after the included angle changes. The foldable screen device determines that the change of the included angle between the sub-screens may be used to adjust the saturation. In other words, the adjustment of the saturation is associated with the change of the included angle between the sub-screens. For example, a larger changed included angle between the sub-screens indicates larger adjusted saturation; and a smaller changed included angle between the sub-screens indicates smaller adjusted saturation. For another example, if the included angle between the sub-screens increases, the adjusted saturation increases (in other words, a direction of adjusting the saturation is increasing); or if the included angle between the sub-screens decreases, the adjusted saturation decreases (in other words, a direction of adjusting the saturation is decreasing). A slide operation performed by the user on the control 1302 may adjust the contrast. For example, if the user slides the control 1302 leftward, the contrast decreases (in other words, a direction of adjusting the contrast is decreasing); or if the user slides the control 1302 rightward, the contrast increases (in other words, a direction of adjusting the contrast is increasing). In other words, the adjustment of the contrast is associated with a slide direction and a slide amplitude of the user for the control 1302.

As shown in FIG. 13A-(d), within the preset duration, when detecting the slide operation performed by the user on the control 1302 and detecting that the included angle between the sub-screens changes, the foldable screen device may adjust the saturation based on the change of the included angle between the sub-screens, and simultaneously adjust the contrast based on the slide direction and the slide amplitude of the user for the control 1302. It can be learned through comparison between FIG. 13A-(d) and FIG. 13A-(c) that both the saturation and the contrast change.

In some implementations, after the foldable screen device switches from a first state to a second state through folding and triggers to perform the preset operation, if the foldable screen device recovers to the first state, the foldable screen device cancels the preset operation, and recovers to a state in which the preset operation is not performed.

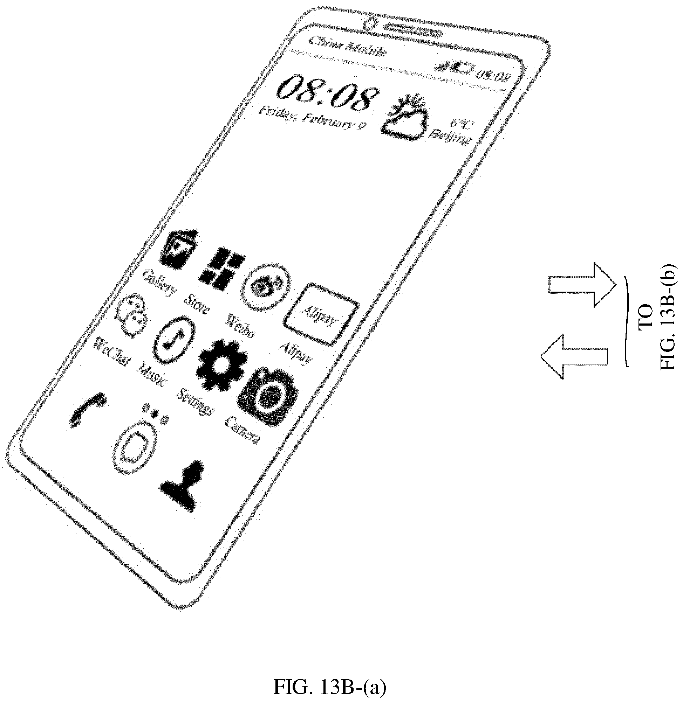

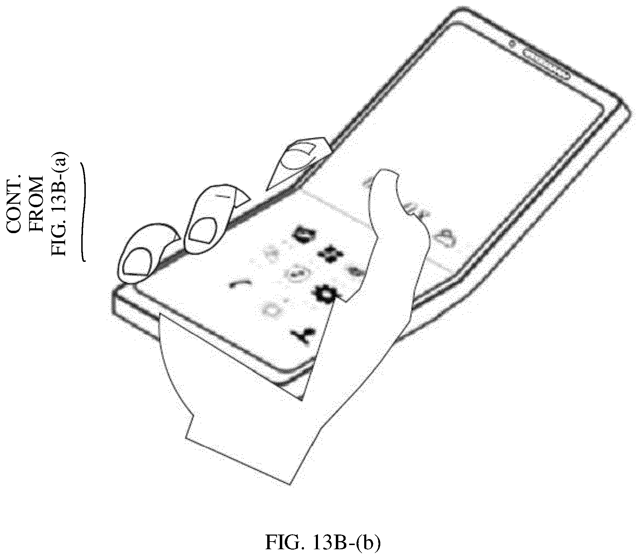

For example, the foldable screen device is in the first state, and displays an interface 1 shown in FIG. 13B-(a). After the foregoing preset condition is met, the foldable screen device enables the one-handed mode, and displays an interface 2 shown in FIG. 13B-(b). After the user folds the foldable screen to enable the foldable screen device to recover the first state, the foldable screen device cancels an operation of enabling the one-handed mode, exits the one-handed mode, and resumes displaying the interface 1 shown in FIG. 13B-(a).

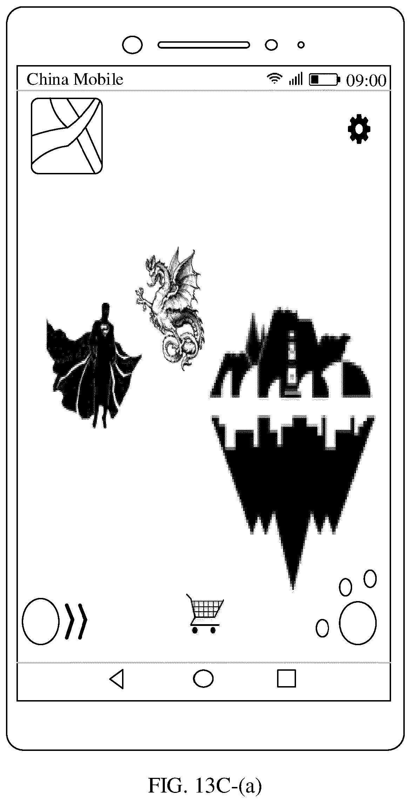

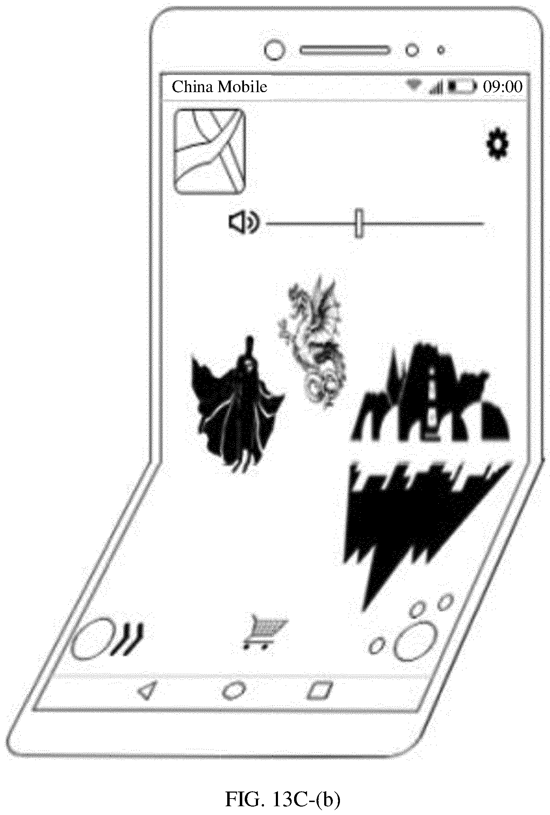

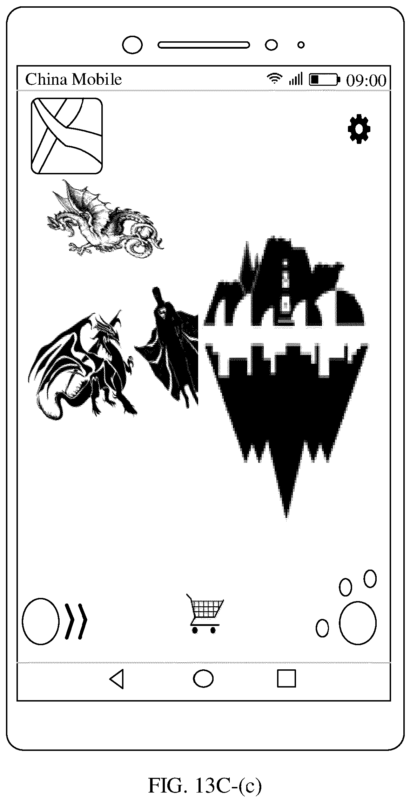

For another example, the foldable screen device is in the first state, and displays an interface 3 shown in FIG. 13C-(a). After the foregoing preset condition is met, the foldable screen device increases the volume, and displays an interface 4 shown in FIG. 13C-(b). Compared with the interface 3, the interface 4 has a volume adjustment control related to the preset operation. After the user folds the foldable screen to enable the foldable screen device to recover the first state, the foldable screen device cancels an operation of increasing the volume, recovers the volume to a state in which the volume does not increase, and displays an interface 5 shown in FIG. 13C-(c). Compared with the interface 4, the interface 5 does not have a volume adjustment control related to the preset operation. In addition, as a game progresses, content of the interface 5 changes when the interface 5 is compared with the interface 3 and the interface 4.

In some other implementations, after the foldable screen device switches from the first state to the second state through folding and triggers to perform the preset operation, if an amplitude of the folding operation is relatively large, and the change of the included angle between the sub-screens is relatively large; or if the folding operation enables the included angle between the sub-screens to decrease, and the included angle between the first sub-screen and the second sub-screen is relatively small after the folding operation; or if the folding operation enables the included angle between the sub-screens to increase, and the included angle between the first sub-screen and the second sub-screen is relatively large after the folding operation, the foldable screen device may remain in a current folded state. If the amplitude of the folding operation is relatively small, and the change of the included angle between the sub-screens is relatively small; or if the folding operation enables the included angle between the sub-screens to decrease, and the included angle between the first sub-screen and the second sub-screen is relatively large after the folding operation; or if the folding operation enables the included angle between the sub-screens to increase, and the included angle between the first sub-screen and the second sub-screen is relatively small after the folding operation, the foldable screen device may spring back to the first state. In other words, contrary to a process in which the foldable screen device switches from the first state to the second state through folding, the foldable screen device may further fold the first sub-screen and/or the second sub-screen in an opposite direction, so that the foldable screen device recovers to the first state.

If the amplitude of the folding operation is relatively large, and the change of the included angle between the sub-screens is relatively large; or if the folding operation enables the included angle between the sub-screens to decrease, and the included angle between the first sub-screen and the second sub-screen is relatively small after the folding operation; or if the folding operation enables the included angle between the sub-screens to increase, and the included angle between the first sub-screen and the second sub-screen is relatively large after the folding operation, it may indicate that a folding degree is relatively large, the user heavily pushes the folded screen, and the user may indeed want to use the foldable screen device in the second state after the folding operation. Therefore, the foldable screen device may remain in the second state in which a current folding degree is relatively large. If the amplitude of the folding operation is relatively small, and the change of the included angle between the sub-screens is relatively small; or if the folding operation enables the included angle between the sub-screens to decrease, and the included angle between the first sub-screen and the second sub-screen is relatively large after the folding operation; or if the folding operation enables the included angle between the sub-screens to increase, and the included angle between the first sub-screen and the second sub-screen is relatively small after the folding operation, it may indicate that a folding degree is relatively small, the user gently pushes the folded screen, and the user may only want to trigger the preset operation and does not want to use the foldable screen device in the second state after the folding operation. Therefore, the foldable screen may automatically spring back to the first state, and the foldable screen is used in the original first state, so that a viewing angle of a display interface of the foldable screen is not affected.

In addition, after the springback, the foldable screen device remains in a state in which the preset operation is performed, and an interface displayed in response to the preset operation performed by the foldable screen device is not canceled or rolled back. For example, if the preset operation triggered by the folding is flipping a page backward, after the foldable screen springs back, the foldable screen device still displays a page generated after the page flipping, but does not display a page generated before the page flipping. For another example, if the preset operation triggered by the folding is the one-handed mode, after the foldable screen springs back, the foldable screen device is still in the one-handed mode, and does not exit the one-handed mode.

In the following implementations, an example in which the preset operation is enabling the one-handed mode is used for description.

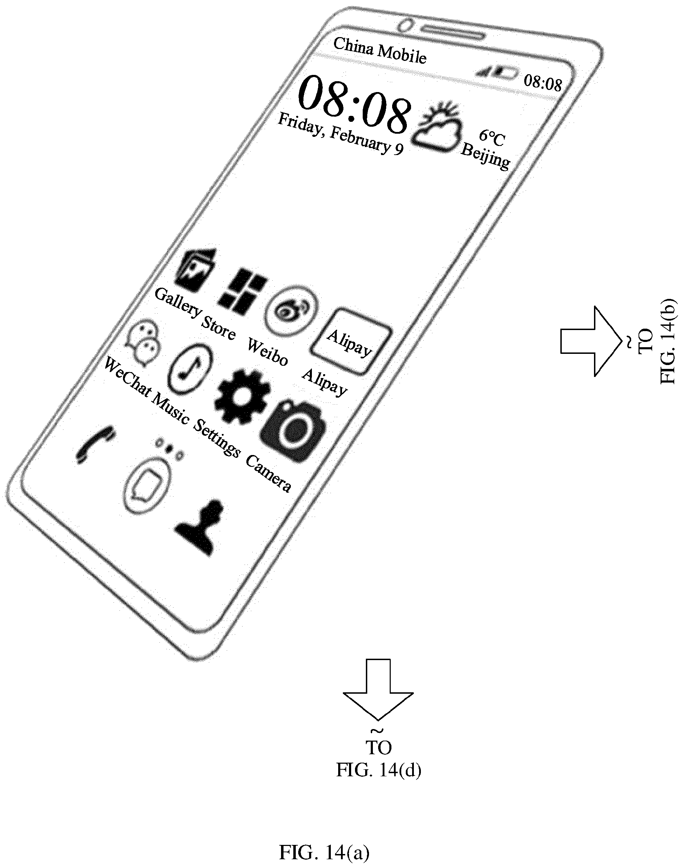

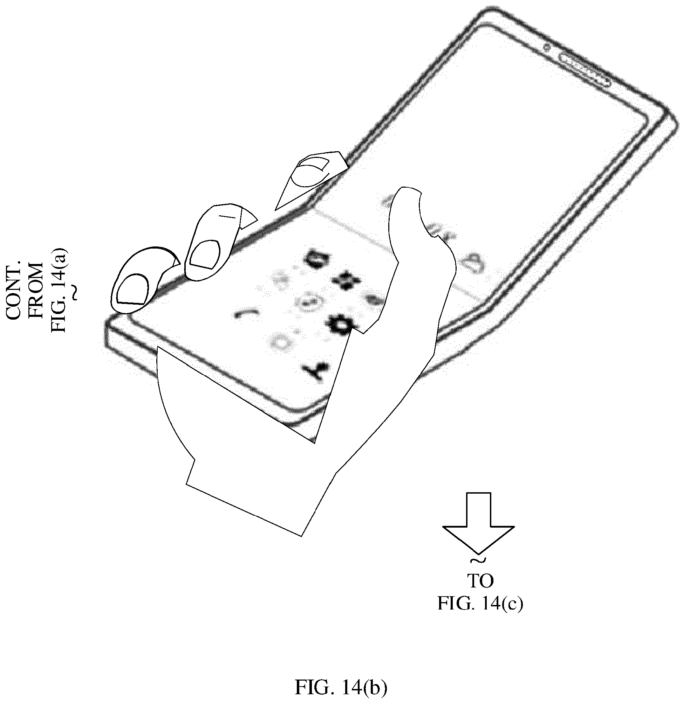

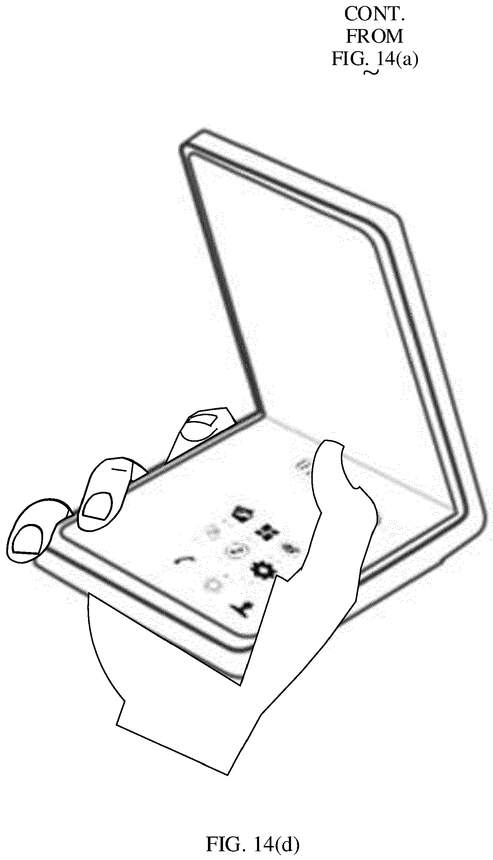

For example, as shown in FIG. 14(a), when the user normally uses the foldable screen device, the foldable screen device is usually in an expanded state. The foldable screen device switches from the expanded state to a state 1 shown in FIG. 14(b) or FIG. 14(d) through folding. After the foregoing preset condition (that is, the preset condition 1, the preset condition 2, or the preset condition 3) is met, the foldable screen device triggers to enable the one-handed mode. In the one-handed mode, as shown in FIG. 14(b) or FIG. 14(d), an interface display range is narrowed.

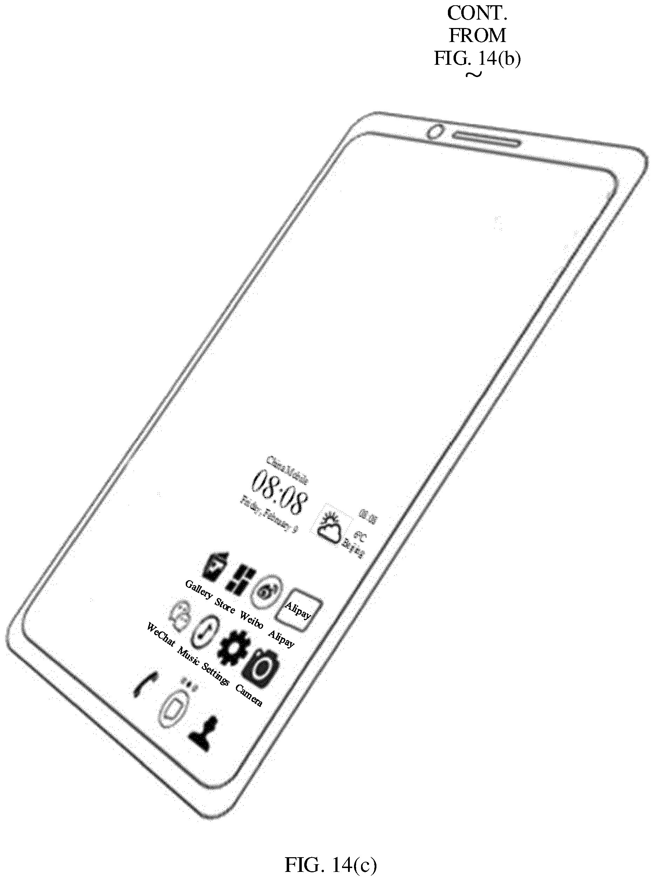

In a process of switching from the expanded state to the state 1 shown in FIG. 14(b) through folding, if the included angle between the first sub-screen and the second sub-screen decreases by δ1, and δ1 is less than or equal to the preset angle 1 (for example, 20°), it may indicate that the user gently pushes the foldable screen. Alternatively, in a process of switching from the expanded state to the state 1 shown in FIG. 14(b) through folding, if the included angle between the first sub-screen and the second sub-screen decreases from 180° to an angle 1, and the angle 1 is greater than the preset angle 2 (for example, 160°), it may indicate that the user gently pushes the foldable screen. The user may only want to enable the one-handed mode, and does not want to use the foldable screen device in the folded state 1. Therefore, as shown in FIG. 14(c), the foldable screen device may spring back to the expanded state based on the mechanical rotating shaft and/or the electronic rotating shaft. In this case, after the springback, the included angle between the first sub-screen and the second sub-screen is restored from the angle 1 to 180° in the expanded state. In addition, as shown in FIG. 14(c), the interface display range is still the narrowed range shown in FIG. 14(b), and the foldable screen device is still in the one-handed mode, but does not exit the one-handed mode.

In a process of switching from the expanded state to the state 1 shown in FIG. 14(d) through folding, if the included angle between the first sub-screen and the second sub-screen decreases by δ1, and δ1 is greater than the preset angle **1,** it may indicate that the user heavily pushes the foldable screen. Alternatively, in a process of switching from the expanded state to the state 1 shown in FIG. 14(d) through folding, if the included angle between the first sub-screen and the second sub-screen decreases from 180° to the angle **1,** and the angle 1 is less than or equal to the preset angle 2, it may indicate that the user heavily pushes the foldable screen. The user may indeed want to use the foldable screen device in the folded state 1. Therefore, the foldable screen device may remain in the current state **1,** and does not spring back to the expanded state.

It should be noted that FIG. 14(a) to FIG. 14(c) are described by using an example in which springback is performed when an amplitude of decreasing the included angle between the sub-screens is relatively small. Similarly, when the amplitude of decreasing the included angle between the sub-screens is relatively small, springback is also performed. Details are not described herein.

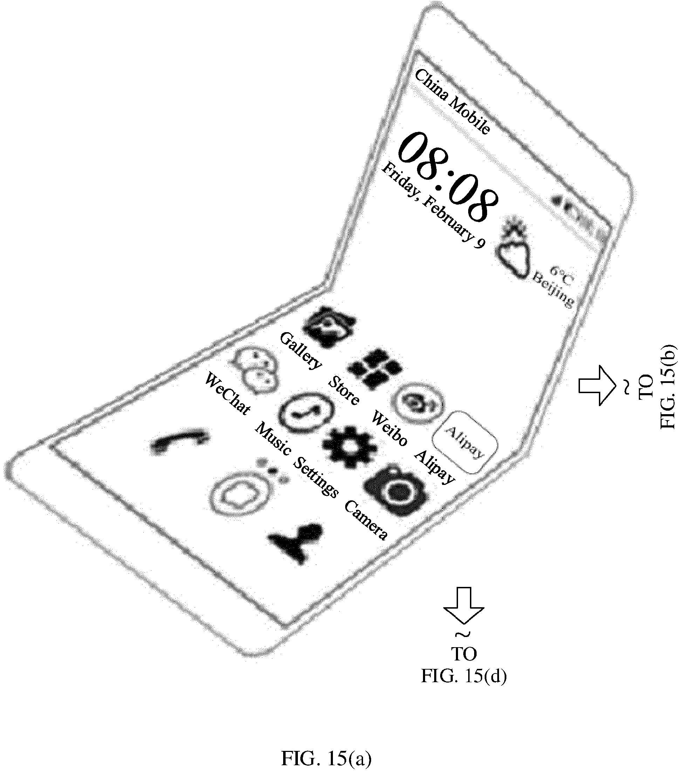

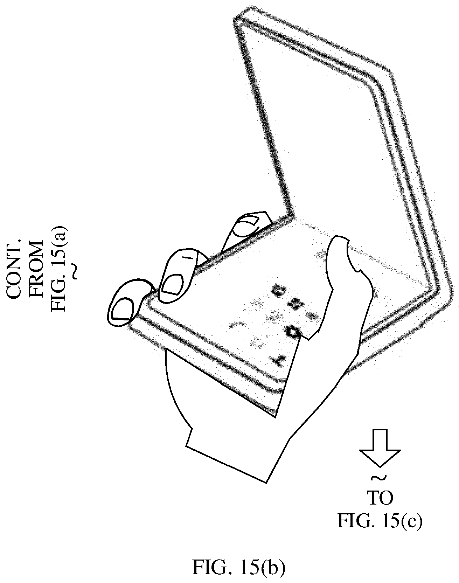

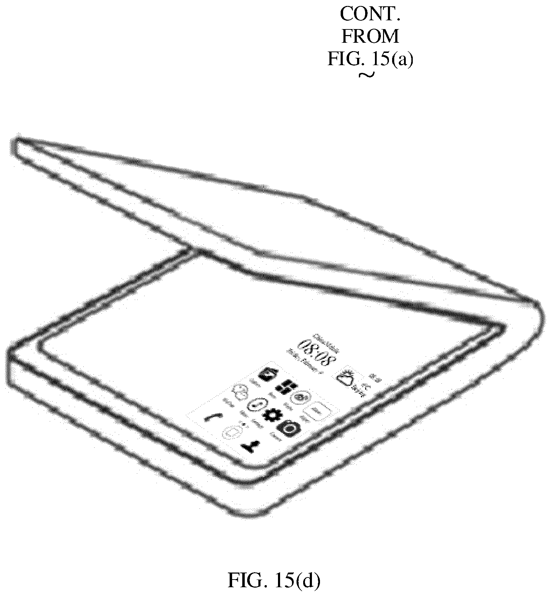

For another example, as shown in FIG. 15(a), the foldable screen device is in a state 2. The foldable screen device switches from the state 2 to a state 3 shown in FIG. 15(b) or FIG. 15(d) through folding. After the foregoing preset condition is met, the foldable screen device triggers to enable the one-handed mode. In the one-handed mode, as shown in FIG. 15(b) or FIG. 15(d), an interface display range is narrowed.

In a process of switching from the state 2 to the state 3 shown in FIG. 15(b) through folding, if the included angle between the first sub-screen and the second sub-screen decreases from an angle 2 to an angle 3, the included angle decreases by δ2, and δ2 is less than or equal to the preset angle **1,** it may indicate that the user gently pushes the foldable screen. The user may only want to enable the one-handed mode, and does not want to use the foldable screen device in the folded state 3.

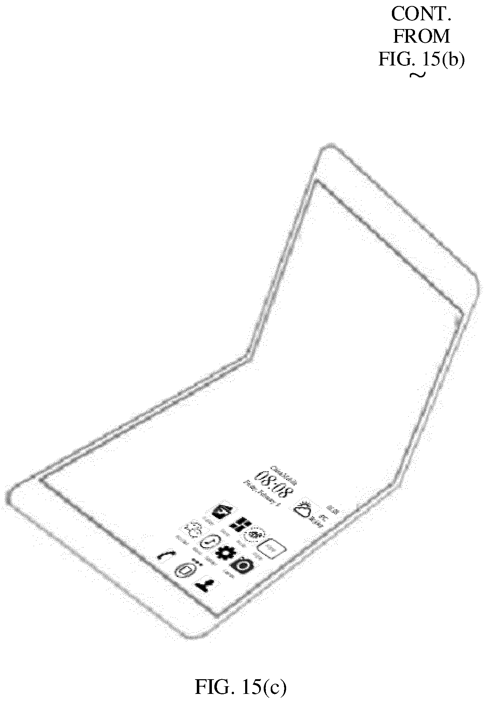

Therefore, in some implementations, as shown in FIG. 15(c), the foldable screen device may spring back to the state 2 based on the electronic rotating shaft. After the springback, the included angle between the first sub-screen and the second sub-screen is restored from the angle 3 to the angle 2. In some other implementations, the foldable screen device may spring back to the expanded state based on the electronic rotating shaft. After the springback, the included angle between the first sub-screen and the second sub-screen is restored from the angle 3 to 180° in the expanded state. In addition, as shown in FIG. 15(c), the interface display range is still the narrowed range shown in FIG. 15(b), and the foldable screen device is still in the one-handed mode, but does not exit the one-handed mode.

In a process of switching from the state 2 to the state 3 shown in FIG. 15(d) through folding, if the included angle between the first sub-screen and the second sub-screen decreases by δ2, and δ2 is greater than the preset angle **1,** it may indicate that the user heavily pushes the foldable screen. The user may indeed want to use the foldable screen device in the folded state 3. Therefore, the foldable screen device may remain in the current state 3, and does not spring back to the state 2.

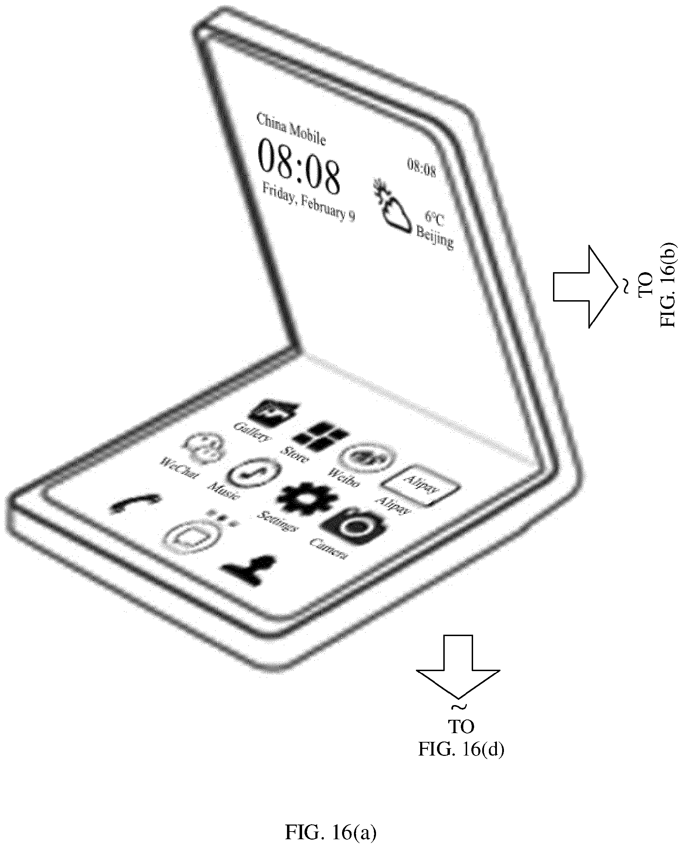

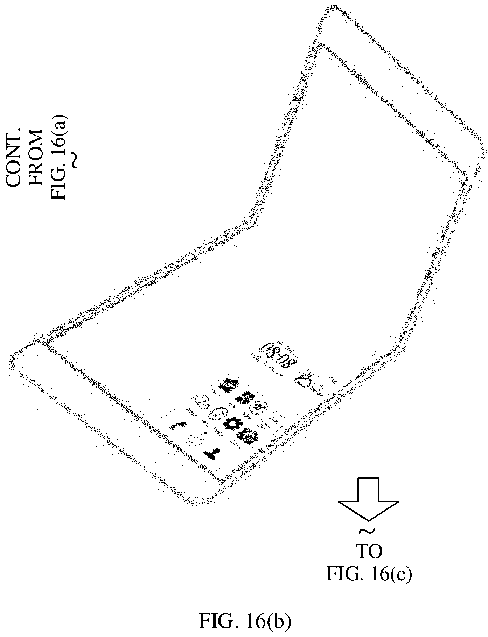

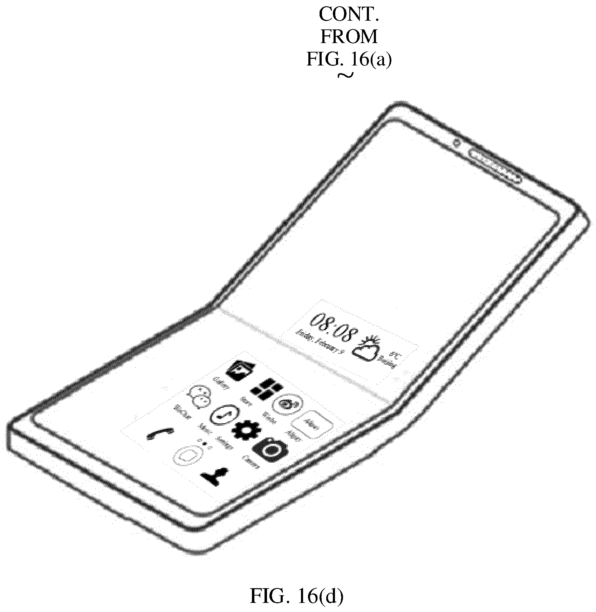

For another example, as shown in FIG. 16(a), the foldable screen device is in a state 4. The foldable screen device switches from the state 4 to a state 6 shown in FIG. 16(b) or FIG. 16(d) through expanding. After the foregoing preset condition is met, the foldable screen device triggers to enable the one-handed mode. In the one-handed mode, as shown in FIG. 16(b) or FIG. 16(d), an interface display range is narrowed.

In a process of switching from a state 5 to the state 6 shown in FIG. 16(b) through folding, if the included angle between the first sub-screen and the second sub-screen increases from an angle 4 to an angle 5, the included angle increases by δ2, and δ2 is less than or equal to the preset angle 1, or the angle 5 is less than or equal to the preset angle 3, it may indicate that the user gently pushes the foldable screen. The user may only want to enable the one-handed mode, and does not want to use the foldable screen device in the folded state 6.

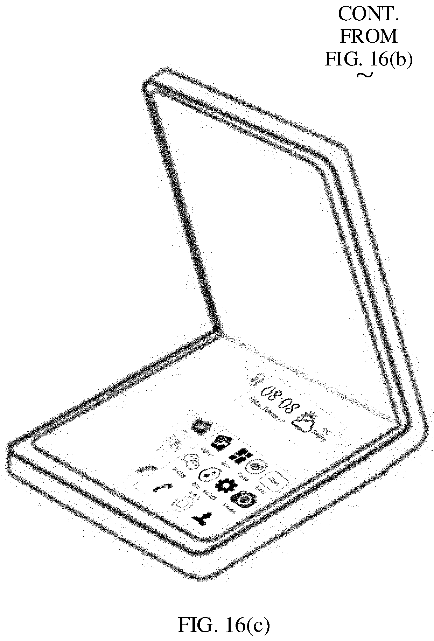

Therefore, in some implementations, as shown in FIG. 16(c), the foldable screen device may spring back to the state 5 based on the electronic rotating shaft. After the springback, the included angle between the first sub-screen and the second sub-screen is restored from the angle 5 to an angle 4. In addition, as shown in FIG. 16(c), the interface display range is still the narrowed range shown in FIG. 16(b), and the foldable screen device is still in the one-handed mode, but does not exit the one-handed mode.

In a process of switching from the state 5 to the state 6 shown in FIG. 16(d) through folding, if the included angle between the first sub-screen and the second sub-screen increases by δ2, and δ2 is greater than the preset angle 1, it may indicate that the user heavily pushes the foldable screen. The user may indeed want to use the foldable screen device in the folded state 6. Therefore, the foldable screen device may remain in the current state 6, and does not spring back to the state 5.

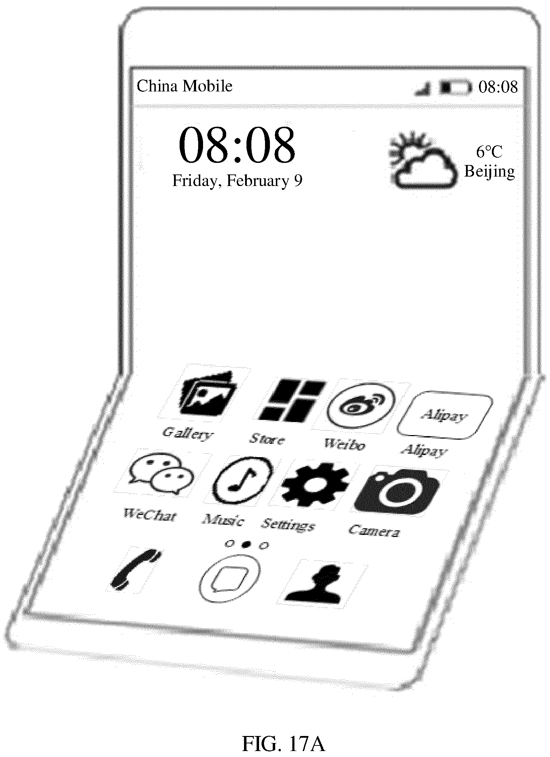

An example in which an upper screen of the foldable screen is folded forward to trigger to perform a preset operation and springs back is used above for description. In some other implementations, as shown in FIG. 17A, a lower screen of the foldable screen may also be folded forward to trigger to perform a preset operation and spring back. In a scenario in which the user holds the foldable screen device, a ring finger and a little finger of the user may be naturally on the back of the lower screen and therefore naturally push the lower screen to fold forward.

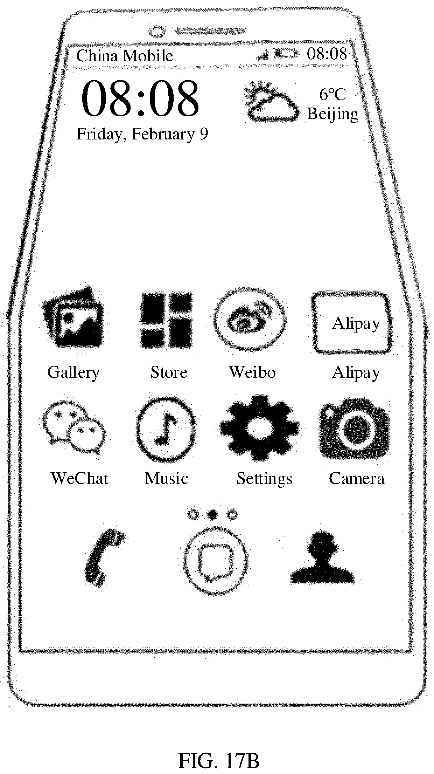

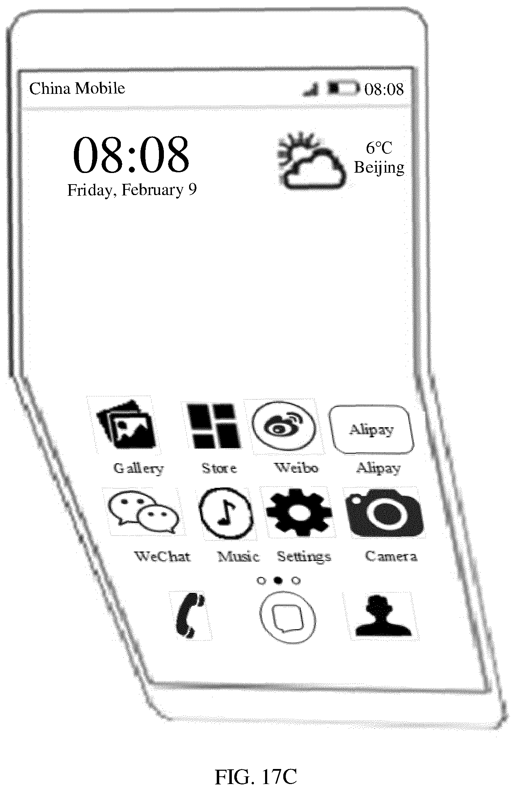

In some other implementations, the upper screen and the lower screen of the foldable screen may also be folded backward to trigger to perform a preset operation. In a scenario in which the user holds the foldable screen device, a finger in the front of the foldable screen may naturally push the upper screen or the lower screen to fold backward. For example, for a schematic diagram of folding the upper screen of the foldable screen backward, refer to FIG. 17B; and for a schematic diagram of folding the lower screen of the foldable screen backward, refer to FIG. 17C.

When the preset operation is enabling a split-screen mode, the foldable screen device may display a window of an application on the upper sub-screen, and display a window of another application on the lower sub-screen.

In addition, the preset operation may alternatively be enabling a multi-window mode. After the multi-window mode is enabled, one window may be displayed on the upper sub-screen of the foldable screen device, and another window may be displayed on the lower sub-screen.

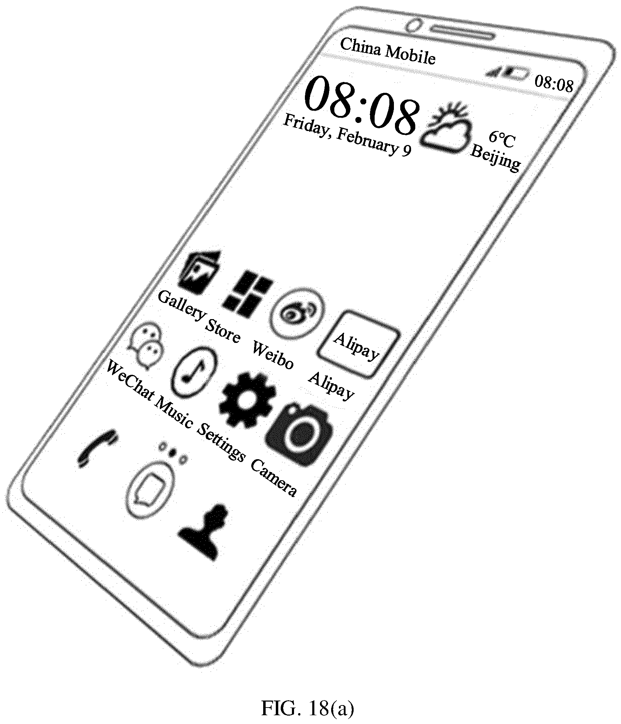

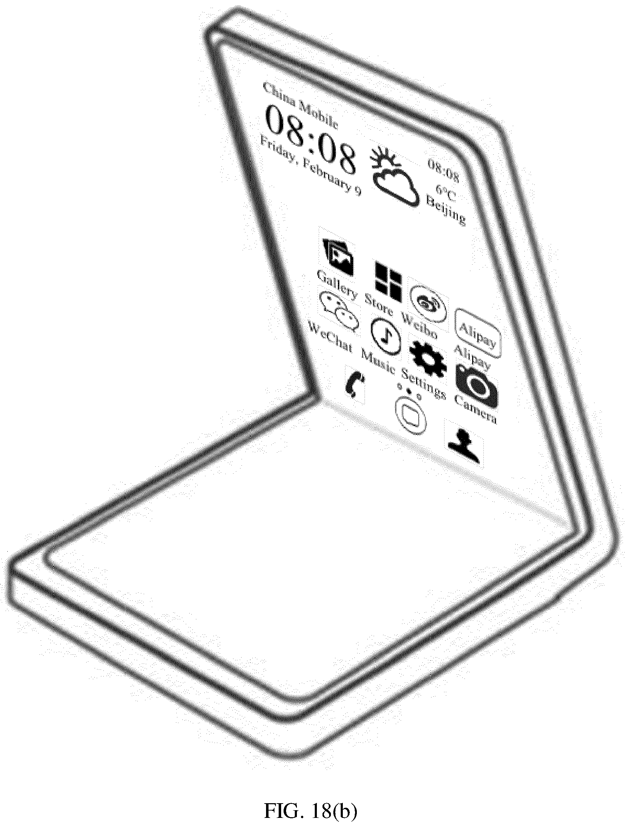

In some other implementations, the preset operation may alternatively be enabling a small screen mode. For example, as shown in FIG. 18(a), the foldable screen device is in an expanded state. Within the preset duration, after the foldable screen device detects that the included angle between the sub-screens changes (for example, decreases), and detects a press operation performed by the user on the foldable screen, as shown in FIG. 18(b), the foldable screen device enables the small screen mode. As shown in FIG. 18(b), the foldable screen device displays an interface on the upper sub-screen, or the foldable screen device displays an interface on the lower sub-screen, or the foldable screen device separately displays an interface on the two sub-screens.

In some other implementations, the user may alternatively trigger the preset operation with reference to the foregoing folding operation and an operation performed on a camera. Especially in a two-hand holding scenario, the user may naturally trigger the preset operation by performing the folding operation and the operation performed on the camera. For example, the preset operation may be starting a camera, or enabling a small screen mode and starting a camera.

For example, the user may press the camera and fold the foldable screen, to trigger to enable the small screen mode and start the camera. A touch sensor may be disposed near the camera to detect whether the user presses the camera. After detecting, within the preset duration, the folding operation and that the camera is pressed, the foldable screen device may trigger the preset operation.

For another example, the user may block the camera with a hand and fold the foldable screen, to trigger to enable the small screen mode and start the camera. An optical proximity sensor, an infrared sensor, or the like may be disposed near the camera to detect whether the user blocks the camera. After detecting, within the preset duration, the folding operation and that the camera is blocked, the foldable screen device may trigger the preset operation.

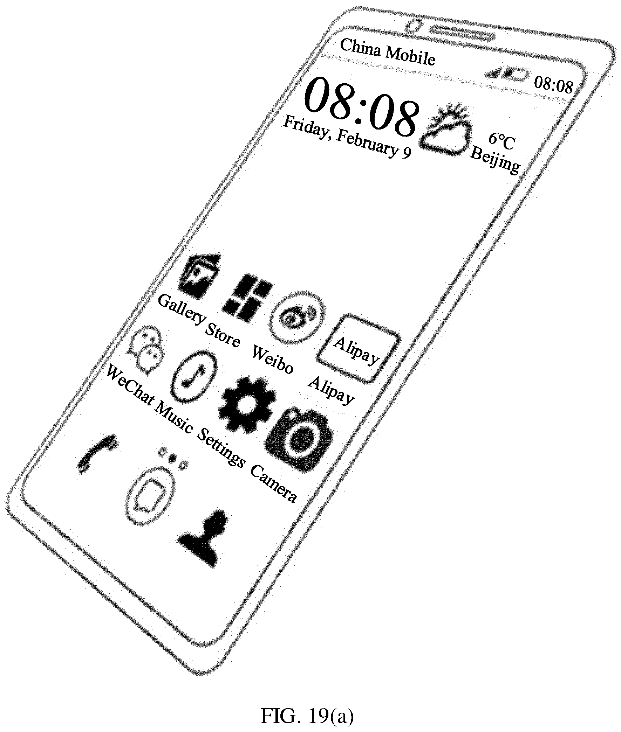

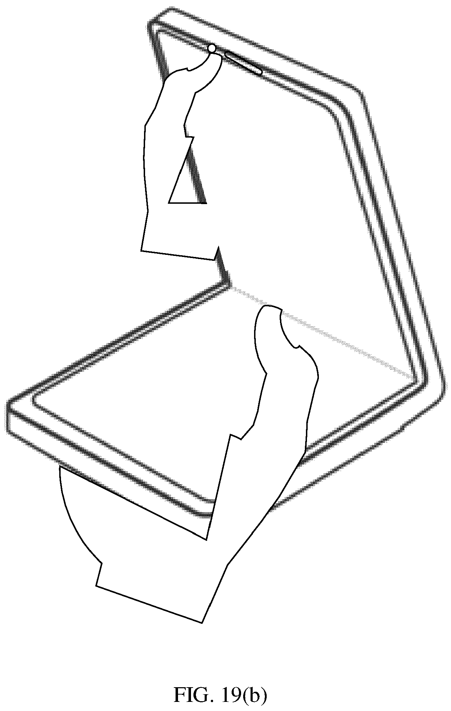

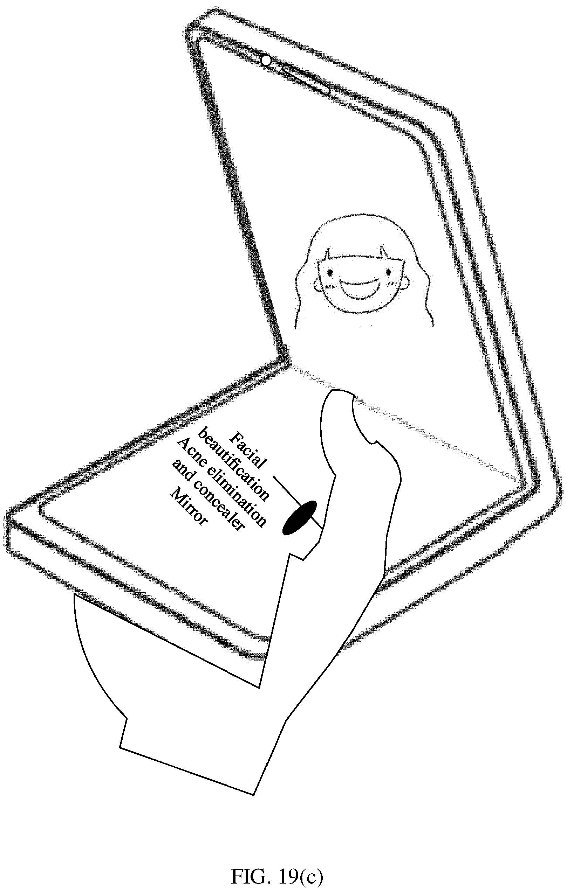

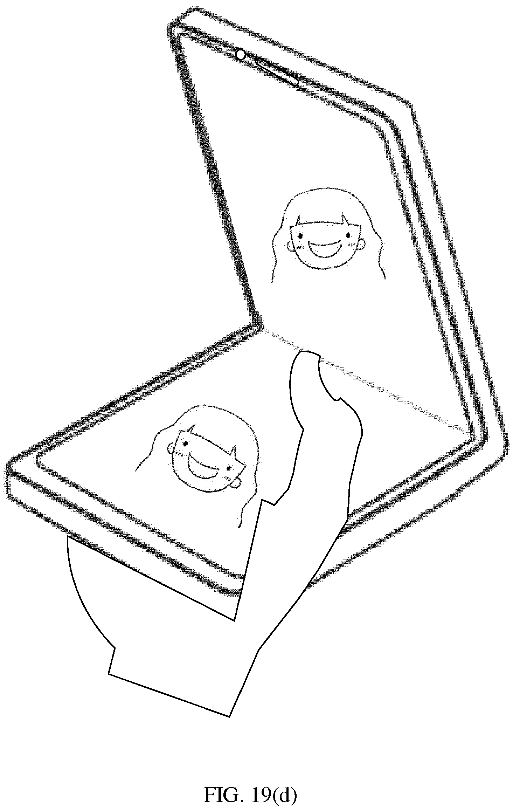

For example, the preset operation is enabling a small screen mode and starting a camera. As shown in FIG. 19(a), the foldable screen device is in an expanded state. As shown in FIG. 19(b), the foldable screen device detects that the foldable screen is folded and the camera is pressed. As shown in FIG. 19(c), the foldable screen device enables the small screen mode and starts the camera. In some implementations, similar to an effect of a cosmetic box, as shown in FIG. 19(c), the foldable screen device may display a photographing preview interface on the upper sub-screen, and display a photographing-related parameter on the lower sub-screen; or the foldable screen device may display a photographing-related parameter on the upper sub-screen, and display a photographing preview interface on the lower sub-screen. In some other implementations, as shown in FIG. 19(d), the two sub-screens of the foldable screen device are equivalent to two mirrors, and the foldable screen device separately displays a photographing preview interface on the two sub-screens.

An example in which the foldable screen device has the upper sub-screen and the lower sub-screen is used above for description. The foldable screen-based interaction method provided in this implementation of this application may be further applied to a foldable screen device having a larger quantity of sub-screens and having another sub-screen distribution structure.

For example, in some implementations, the foldable screen device having the three sub-screens: the upper screen, the middle screen, and the lower screen shown in FIG. 3A may also fold the upper screen, the middle screen, and the lower screen, or the upper screen and the middle screen, or the middle screen and the lower screen forward or backward to trigger to perform the preset operation. In addition, when a folding amplitude is relatively small, the foldable screen may also spring back to a state in which folding is not performed.

The holding scenario in this implementation of this application may be a one-hand holding scenario or a two-hand holding scenario. In some other implementations, in a scenario in which the user holds the foldable screen device with two hands, the foldable screen device having the left and right sub-screens shown in FIG. 4A may also fold the left screen or the right screen forward or backward to trigger to perform the preset operation. In addition, when a folding amplitude is relatively small, the foldable screen may also spring back to a state in which folding is not performed.

The foregoing implementation is mainly described with reference to an example in which the foldable screen device detects a touch operation and a folding operation of the user to trigger a preset operation, and the folding operation decreases an included angle between adjacent sub-screens or increases an included angle between adjacent sub-screens.

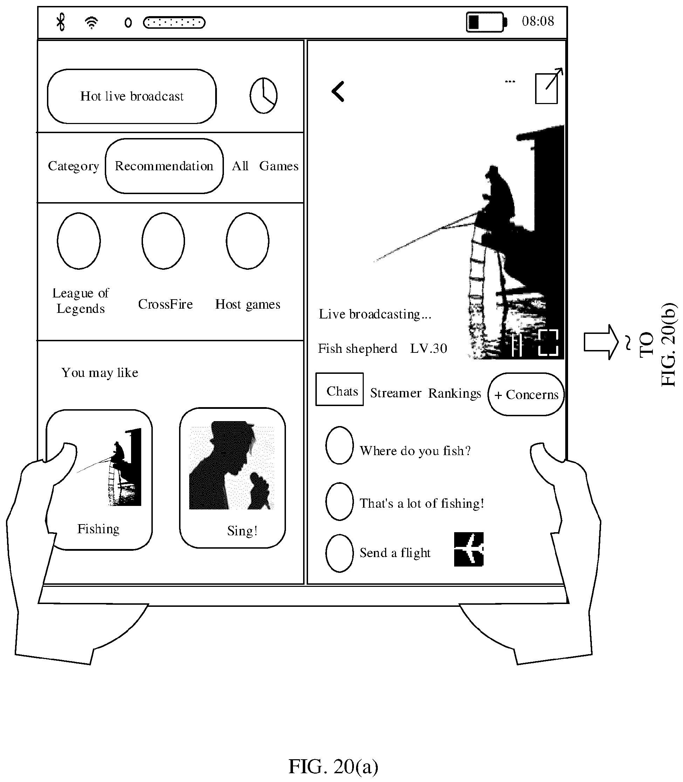

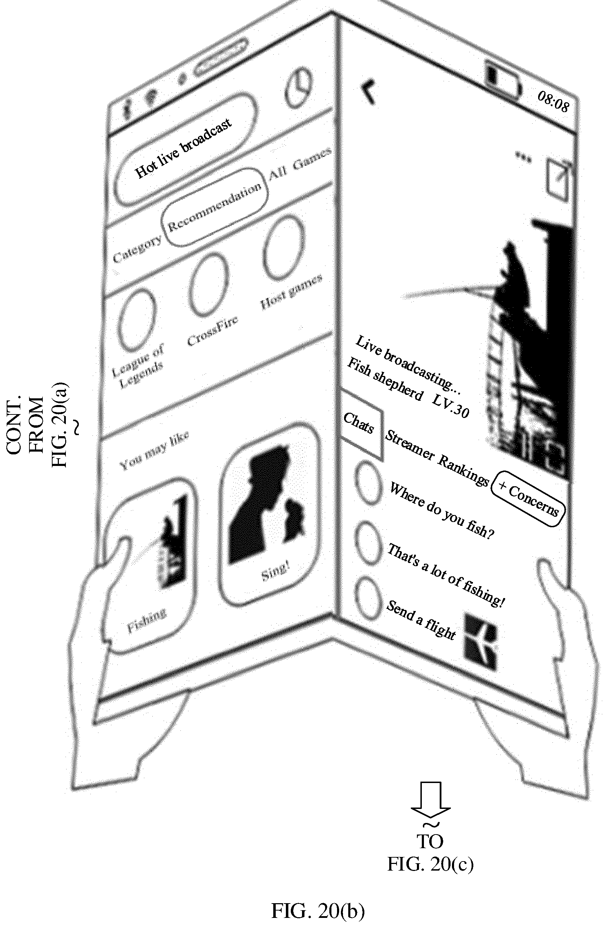

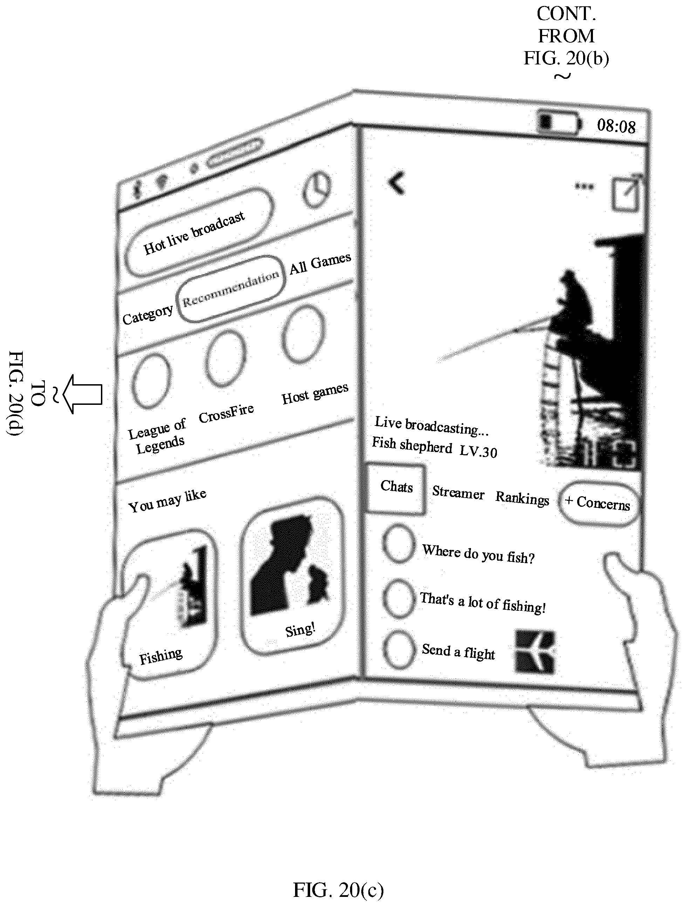

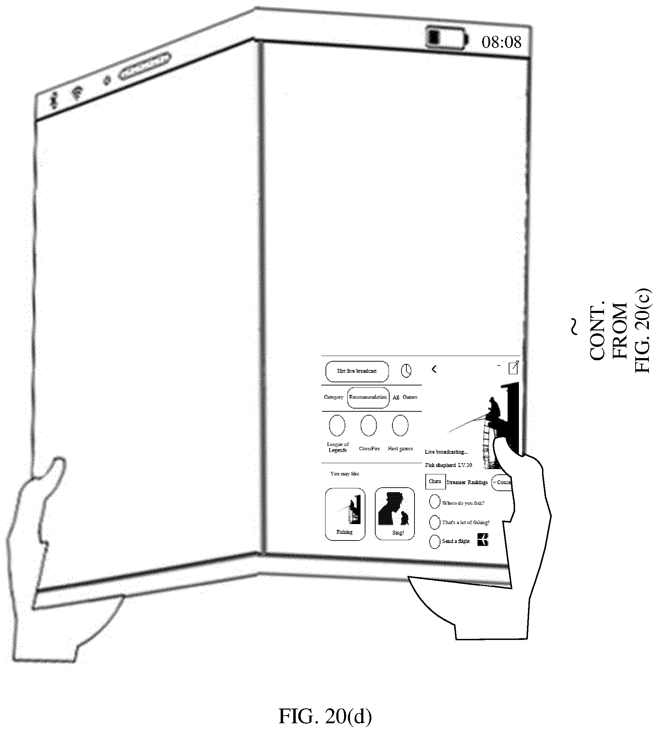

In another implementation, the folding operation detected by the foldable screen device may be replaced with a plurality of other manners. For example, the folding operation may be replaced with an operation that the user folds the foldable screen and the included angle between the adjacent sub-screens decreases and then increases (there is no need to recover to a state in which the included angle does not decrease). For example, the preset operation is a one-handed mode. As shown in FIG. 20(a), the foldable screen device is in an expanded state, and an included angle between sub-screens is 180°. As shown in FIG. 20(b), after the user folds the foldable screen, the foldable screen device detects that the included angle between the sub-screens decreases from 180° by γ1. Then, as shown in FIG. 20(c), the user pushes the sub-screens, and the foldable screen device detects that the included angle between the sub-screens increases by γ2*.* Herein, γ2 and γ1 may be equal or unequal. Therefore, the foldable screen device detects, within the preset duration, that the included angle between the sub-screens decreases and then increases. In addition, with reference to the fact that the foldable screen device detects a touch operation performed by the user on the foldable screen or a press operation performed on the side of the foldable screen device, as shown in FIG. 20(d), the foldable screen device performs the preset operation to enable the one-handed mode.

For another example, the folding operation may be replaced with an operation that the user folds the foldable screen, the included angle between the adjacent sub-screens decreases, and then a state in which the included angle does not decrease is recovered.

For another example, the folding operation may be replaced with an operation that the user folds the foldable screen and the included angle between the adjacent sub-screens increases and then decreases.

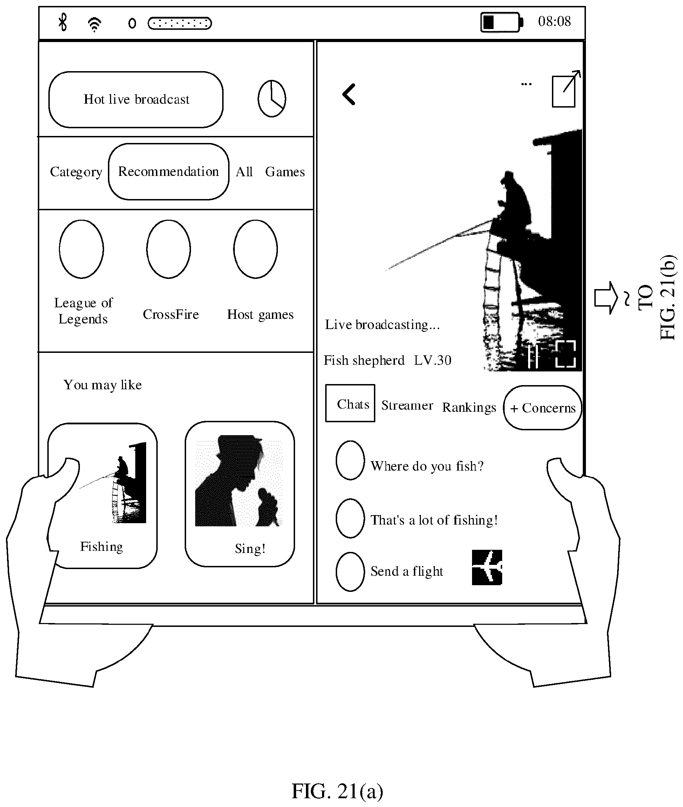

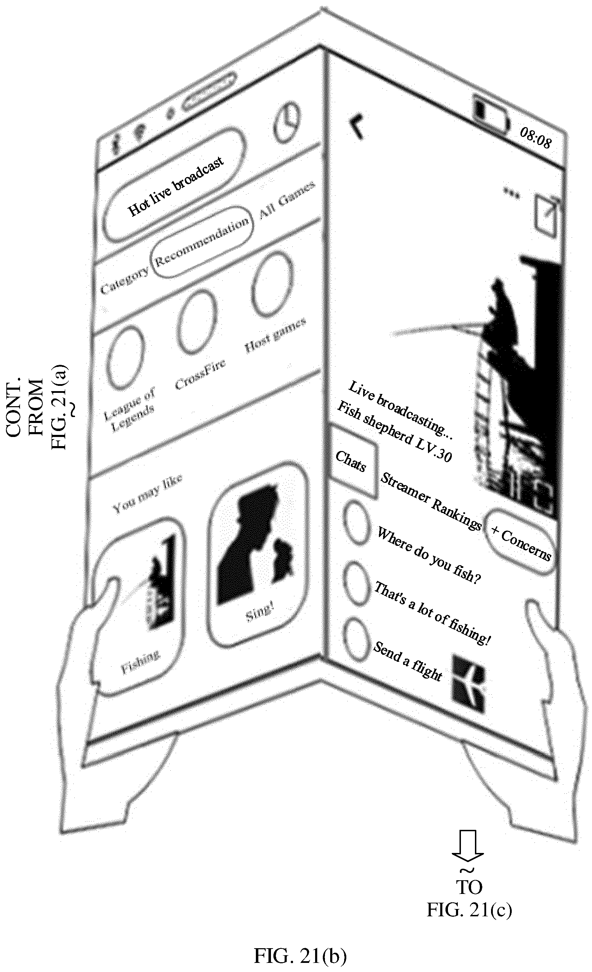

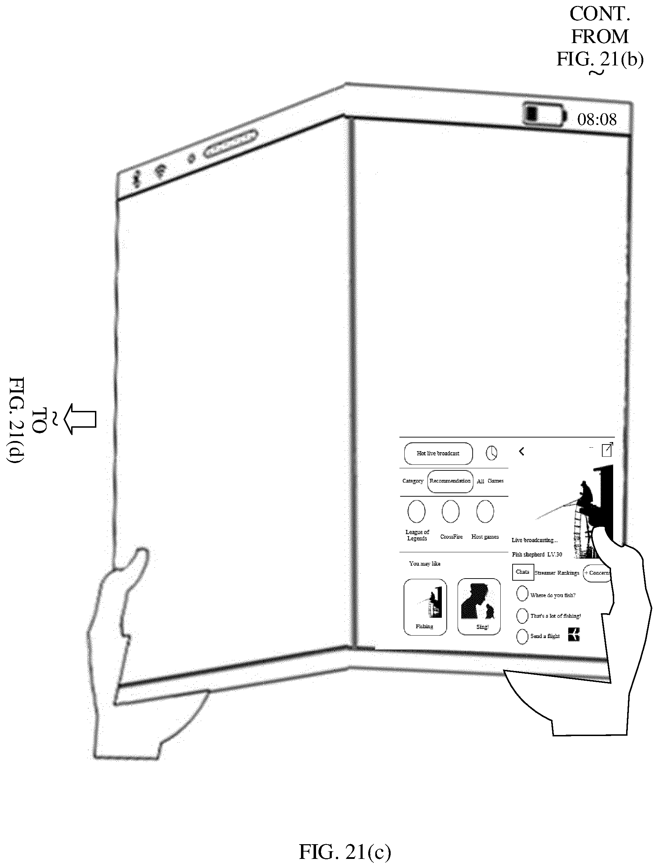

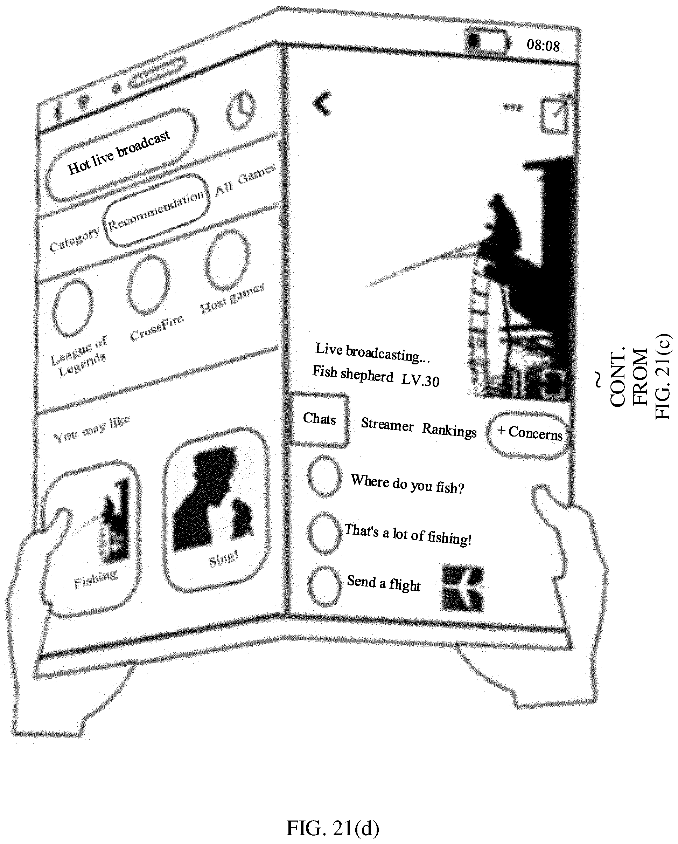

For another example, the folding operation may be replaced with an operation that the user folds the foldable screen, and the foldable screen is folded backward and then forward. For example, the preset operation is a one-handed mode. As shown in FIG. 21(a), the foldable screen device is in an expanded state. As shown in FIG. 21(b), the foldable screen device detects that the user folds the foldable screen forward. In this case, an included angle between sub-screens is α1. Then, as shown in FIG. 21(c), the user pushes the sub-screens, and the foldable screen device detects that the foldable screen is folded backward. In this case, the included angle between the sub-screens is α2. Therefore, the foldable screen device detects, within the preset duration, that the foldable screen is folded backward and then forward. In addition, with reference to the fact that the foldable screen device detects a touch operation performed by the user on the foldable screen or a press operation performed on the side of the foldable screen device, as shown in FIG. 21(d), the foldable screen device performs the preset operation to enable the one-handed mode.

For another example, the folding operation may be replaced with an operation that the user folds the foldable screen, and the foldable screen is folded backward and then recovers to a state in which backward folding is not performed.

For another example, the folding operation may be replaced with an operation that the user folds the foldable screen, and the foldable screen is folded forward and then backward.

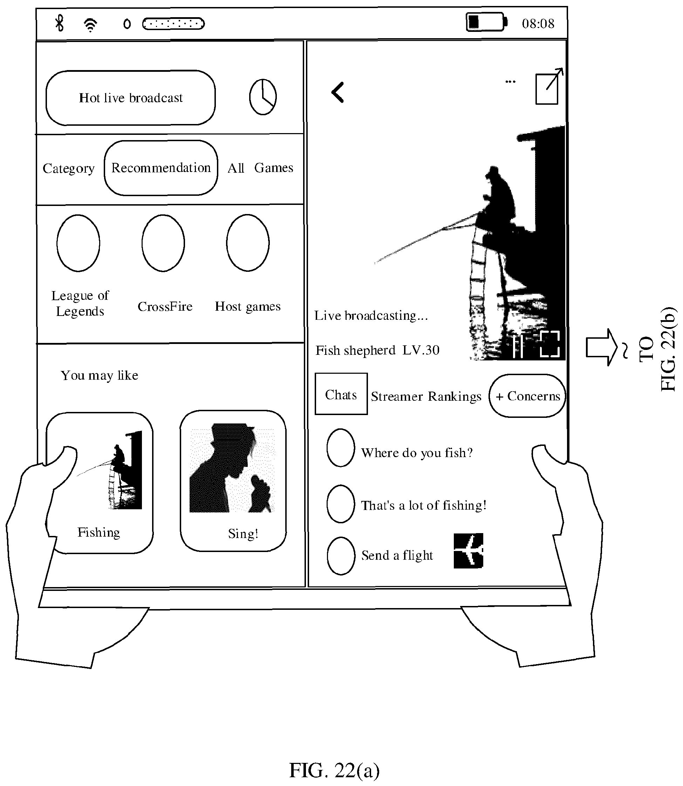

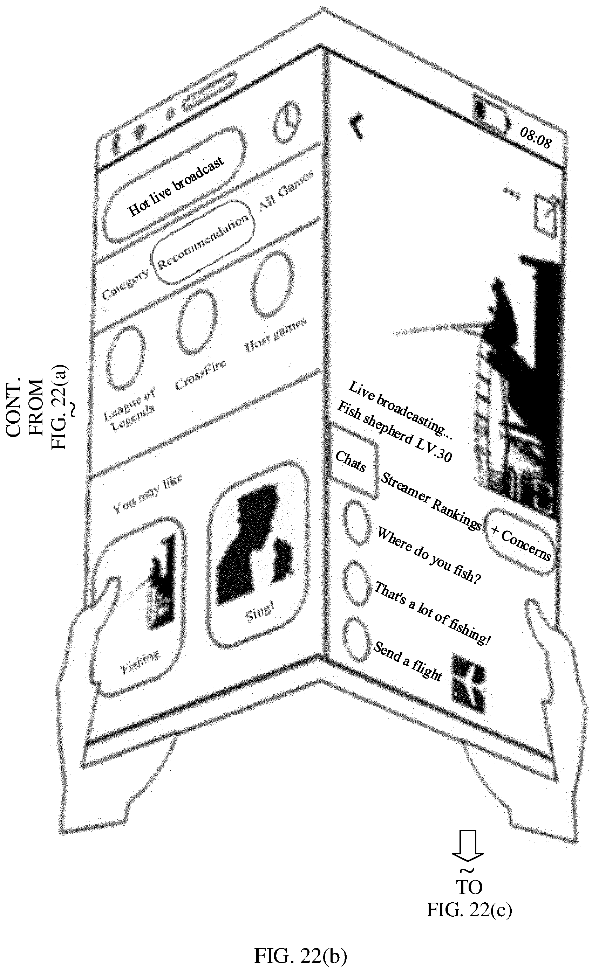

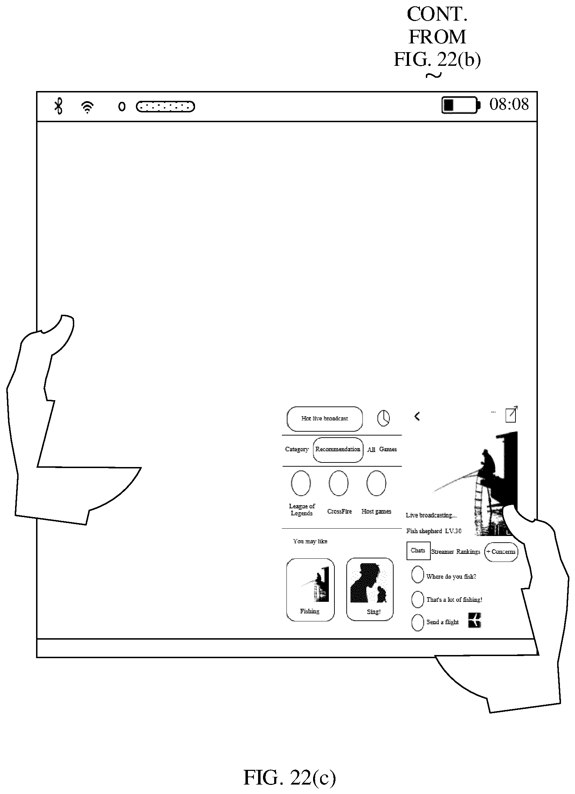

For another example, the folding operation may be replaced with an operation that the user folds the foldable screen, and the foldable screen is folded forward and then recovers to a state in which forward folding is not performed. For example, the preset operation is a one-handed mode. As shown in FIG. 22(a), the foldable screen device is in an expanded state. As shown in FIG. 22(b), the foldable screen device detects that the user folds the foldable screen forward. Then, as shown in FIG. 22(c), the user pushes the sub-screens, and the foldable screen device detects that the foldable screen recovers to the expanded state. Therefore, the foldable screen device detects, within the preset duration, that the foldable screen is folded forward and then recovers to a state in which forward folding is not performed. In addition, with reference to the fact that the foldable screen device detects a touch operation performed by the user on the foldable screen or a press operation performed on the side of the foldable screen device, as shown in FIG. 22(c), the foldable screen device performs the preset operation to enable the one-handed mode.

For another example, when the folding operation is that the user folds the foldable screen, and the foldable screen is folded forward and then recovers to a state in which forward folding is not performed, the corresponding preset operation is enabling a right-handed mode. When the folding operation is that the user folds the foldable screen, and the foldable screen is folded backward and then recovers to a state in which backward folding is not performed, the corresponding preset operation is enabling a left-handed mode.

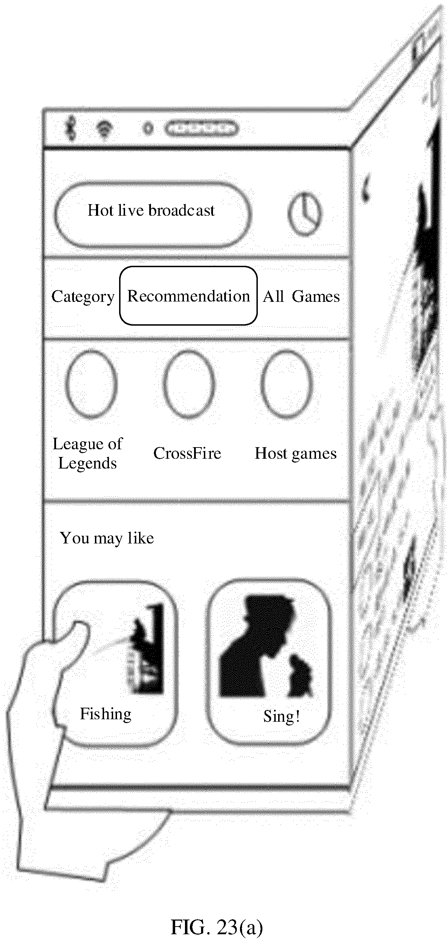

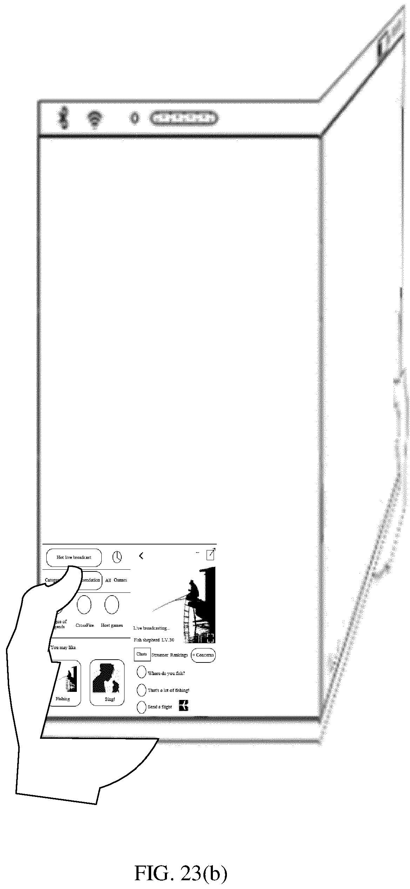

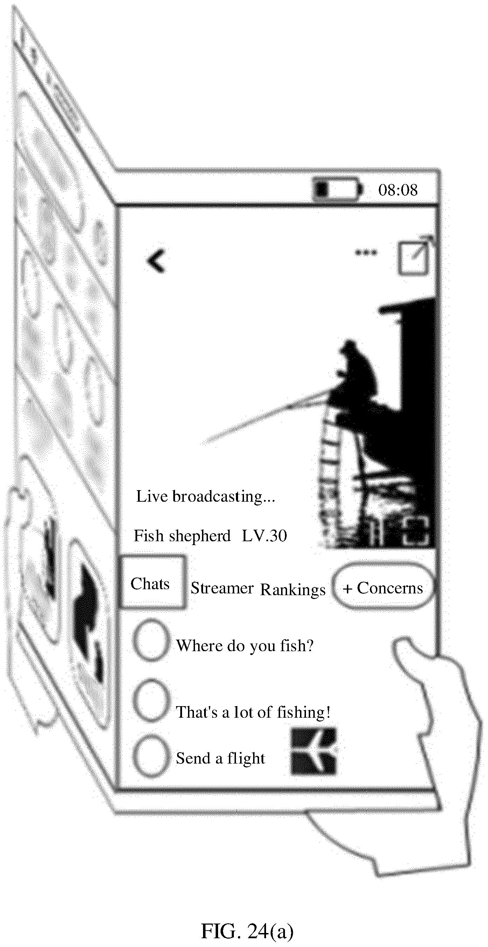

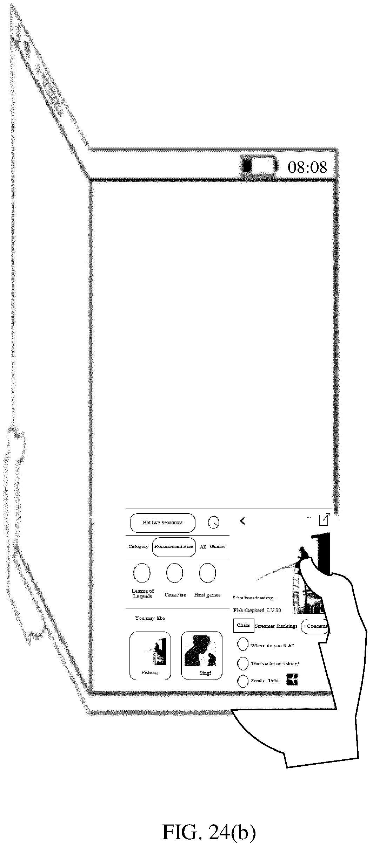

For another example, as shown in FIG. 23(a) and FIG. 23(b), when the folding operation may be replaced with an operation that the user folds the foldable screen, and the left sub-screen is folded toward a location of the right sub-screen, the corresponding preset operation is enabling a right-handed mode. As shown in FIG. 24(a) and FIG. 24(b), when the folding operation may be replaced with an operation that the user folds the foldable screen, and the right sub-screen is folded toward a location of the left sub-screen, the corresponding preset operation is enabling a left-handed mode.

In some implementations, similar to the springback process in the foregoing implementation, after the preset operation is triggered by performing another folding operation, the foldable screen device may further automatically spring back to a state in which folding is not performed, so as to facilitate use by the user.

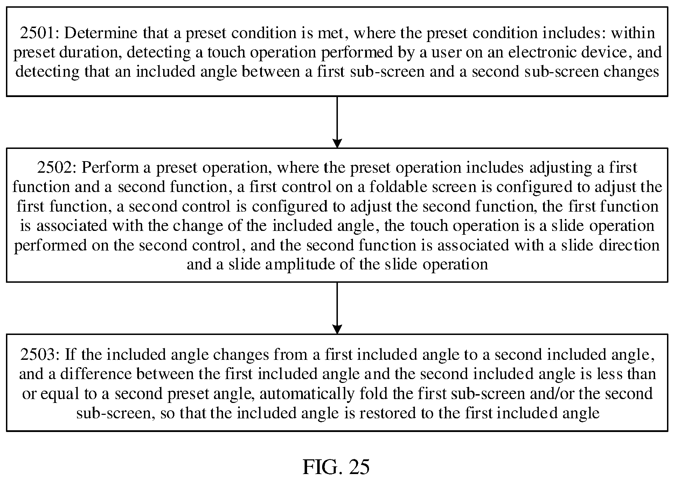

Another implementation of this application provides a foldable screen-based interaction method. The method may be applied to an electronic device having a foldable screen. The foldable screen includes a first sub-screen and a second sub-screen. As shown in FIG. 25, the method may include the following steps.

2501: The electronic device determines that a preset condition is met, where the preset condition includes: within preset duration, detecting a touch operation performed by a user on the electronic device, and detecting, by using a sensor, that an included angle between the first sub-screen and the second sub-screen changes.

The sensor may be a gyroscope sensor, an acceleration sensor, a rotation axis sensor, a Hall effect sensor, or the like. That the included angle between the first sub-screen and the second sub-screen changes may include: increasing or decreasing the included angle. The touch operation performed by the user on the electronic device includes a touch operation performed by the user on the foldable screen of the electronic device or a press operation performed by the user on a side of the electronic device.

2502: The electronic device performs a preset operation, where the preset operation includes adjusting a first function and a second function, a first control on the foldable screen is configured to adjust the first function, a second control on the foldable screen is configured to adjust the second function, the first function is associated with the change of the included angle between the first sub-screen and the second sub-screen, the touch operation is a slide operation performed on the second control, and the second function is associated with a slide direction and a slide amplitude of the slide operation.

2503: If the included angle between the first sub-screen and the second sub-screen changes from a first included angle to a second included angle, and a difference between the first included angle and the second included angle is less than or equal to a second preset angle, the electronic device automatically folds the first sub-screen and/or the second sub-screen, so that the included angle between the first sub-screen and the second sub-screen is restored from the second included angle to the first included angle.

In addition, the electronic device may further perform steps and operations of the foldable screen device described in the implementations, to implement the foldable screen-based interaction method provided in the foregoing implementation.

In a scenario in which the user holds the electronic device, a thumb is usually near the electronic device naturally, so that the user can naturally perform a touch operation and a folding operation on the electronic device during holding. In other words, the method shown in steps 2501 to 2503 may provide a manner of naturally interacting with a foldable screen in the holding scenario, to trigger to perform a preset operation. The preset operation may be associated with a slide direction and a slide amplitude of the touch operation and an included angle between sub-screens. In addition, when a specific condition is met, the foldable screen may further spring back to a state in which the preset operation is not performed.

An implementation of this application further provides an electronic device. The electronic device may include a determining unit, an execution unit, a folding unit, a display unit, a switching unit, and the like. These units may perform the steps in the foregoing implementation to implement the foldable screen-based interaction method.

An implementation of this application further provides an electronic device. The electronic device includes one or more processors, a memory, a display, and one or more computer programs. The one or more computer programs are stored in the memory, and the one or more computer programs include instructions. When the instructions are executed by the one or more processors, the electronic device is enabled to perform the steps in the foregoing implementation to implement the foldable screen-based interaction method.

For example, when the electronic device is the device shown in FIG. 5, the processor in the electronic device may be the processor 110 in FIG. 5, the memory in the electronic device may be the internal memory 121 in FIG. 5, and the foldable screen in the electronic device may be the display 194 in FIG. 5.

An implementation of this application further provides a computer storage medium. The computer storage medium stores computer instructions. When the computer instructions are run on an electronic device, the electronic device is enabled to perform the related method steps to implement the foldable screen-based interaction method in the foregoing implementation.

An implementation of this application further provides a computer program product. When the computer program product is run on a computer, the computer is enabled to perform the related steps to implement the foldable screen-based interaction method in the foregoing implementation.

In addition, an implementation of this application further provides an apparatus. The apparatus may be specifically a chip. The chip may include a processor and a memory. The memory stores instructions. When the instructions are executed by the processor, the chip is enabled to perform the related steps to implement the foldable screen-based interaction method in the foregoing implementation.

In addition, an implementation of this application further provides an apparatus. The apparatus may be specifically a component or a module. The apparatus may include a processor and a memory that are connected. The memory is configured to store computer-executable instructions. When the apparatus runs, the processor may execute the computer-executable instructions stored in the memory, so that the chip performs the foldable screen-based interaction method in the foregoing method implementation.

The electronic device, the chip, the computer storage medium, the computer program product, or the chip provided in the implementations of this application may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for convenient and brief description, division into the foregoing function modules is used as an example for illustration. During actual application, the foregoing functions may be allocated to different function modules according to a requirement, in other words, an inner structure of an apparatus is divided into different function modules to complete all or some of the functions described above.

In the several implementations provided in this application, it should be understood that the disclosed apparatus and method may be implemented in other manners. For example, the described apparatus implementation is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed on different places. Some or all of the units may be selected according to actual requirements to achieve the objectives of the solutions of the implementations.

In addition, function units in the implementations of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions in the implementations of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in the implementations of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The scope of protection shall be defined by the appended claims.

## Claims

1. A foldable screen-based interaction method, applied to an electronic device (100) having a foldable touch screen (180K, 194) and a rotating shaft mechanism (196), wherein the foldable touch screen comprises a first sub-screen (021) and a second sub-screen (022), and the rotating shaft mechanism is operable to automatically rotate the first sub-screen and/or the second sub-screen about a folding line (020), wherein the method comprises:
determining (2501), by the electronic device, that a preset condition is met, wherein the preset condition comprises: within a preset time interval, detecting a touch operation performed by a user on the electronic device, and detecting, by using a sensor, that an included angle between the first sub-screen and the second sub-screen is changed by the user; and
performing (2502), by the electronic device, a preset operation corresponding to the touch operation and the change of the included angle;
the method **characterised in that**:
the preset operation is enabling a one-handed mode, adjusting volume, adjusting screen brightness, scrolling a page, flipping a page, refreshing a page, enabling a screen splitting function, enabling a screenshot function, enabling a word segmentation function, enabling a voice assistant function, or enabling a shortcut menu call-out function;
wherein after the performing, by the electronic device, the preset operation, the method further comprises:
if the included angle between the first sub-screen and the second sub-screen changes from a first included angle to a second included angle, and a difference between the first included angle and the second included angle is less than or equal to a second preset angle, automatically folding or expanding (2503), by the electronic device, the first sub-screen and/or the second sub-screen, so that the included angle between the first sub-screen and the second sub-screen is restored from the second included angle to the first included angle;
or
if the included angle between the first sub-screen and the second sub-screen decreases from a first included angle to a second included angle, and the second included angle is greater than or equal to a third preset angle, automatically expanding, by the electronic device, the first sub-screen and/or the second sub-screen, so that the included angle between the first sub-screen and the second sub-screen is restored from the second included angle to the first included angle;
or
if the included angle between the first sub-screen and the second sub-screen increases from a first included angle to a second included angle, and the second included angle is less than or equal to a fourth preset angle, automatically folding, by the electronic device, the first sub-screen and/or the second sub-screen, so that the included angle between the first sub-screen and the second sub-screen is restored from the second included angle to the first included angle.

2. The method according to claim 1, wherein the touch operation performed by the user on the electronic device (100) comprises a touch operation performed by the user on the foldable touch screen (180K, 194) or a press operation performed by the user on a side of the electronic device.

3. The method according to claim 1 or 2, wherein the preset operation is adjusting a first function, wherein a value of the first function varies with increasing or decreasing of the included angle between the first sub-screen (021) and the second sub-screen (022); and
a larger change in the included angle between the first sub-screen and the second sub-screen indicates a larger change in value of the first function.

4. The method according to any one of claims 1 to 3, wherein the preset operation is adjusting a second function, and the touch operation performed by the user on the foldable touch screen (180K, 194) is a slide operation performed by the user on the foldable touch screen, wherein
a value of the second function is increased or decreased based on a slide direction of the slide operation, and a change in the value of the second function varies with a slide amplitude of the slide operation.

5. The method according to any one of claims 1 to 4, wherein the foldable touch screen (180K, 194) comprises a first control and a second control, the first control is configured to adjust the first function, the second control is configured to adjust the second function, and the preset operation comprises: adjusting the first function and the second function, wherein
the adjustment direction of the first function varies with the change direction of increasing or decreasing the included angle between the first sub-screen (021) and the second sub-screen (022); and
the larger change amplitude of the included angle between the first sub-screen and the second sub-screen indicates the larger adjustment amplitude of the first function; and
the touch operation performed by the user on the electronic device is a slide operation performed by the user on the second control, wherein the adjustment direction of the second function varies with a slide direction of the slide operation, and the adjustment amplitude of the second function varies with a slide amplitude of the slide operation.

6. The method according to any one of claims 1 to 5, wherein the preset condition comprises that an angle by which the included angle between the first sub-screen and the second sub-screen changes is greater than or equal to a first preset angle.

7. The method according to any one of claims 1 to 6, wherein before the determining (2501), by the electronic device (100), that a preset condition is met, the method further comprises:
displaying, by the electronic device, a first interface;
after the electronic device performs the preset operation and before the included angle is restored from the second included angle to the first included angle, the method further comprises:
displaying, by the electronic device, a second interface in response to the preset operation; and
after the included angle is restored from the second included angle to the first included angle, the method further comprises:
still displaying, by the electronic device, the second interface.

8. The method according to any one of claims 1 to 6, wherein the preset condition comprises that the included angle between the first sub-screen (021) and the second sub-screen (022) changes from a first included angle to a second included angle;
before the determining (2501), by the electronic device (100), that a preset condition is met, the method further comprises:
displaying, by the electronic device, a first interface; and
after the performing (2502), by the electronic device, the preset operation, the method further comprises:
displaying, by the electronic device, a second interface in response to the preset operation; and
if the included angle is restored from the second included angle to the first included angle, restoring, by the electronic device, displaying of the first interface.

9. The method according to claim 7 or 8, wherein the method further comprises:
switching, by the electronic device (100), from displaying the first interface to displaying a third interface in a process in which the included angle between the first sub-screen (021) and the second sub-screen (022) changes.

10. An electronic device (100), comprising:
a foldable touch screen (180K, 194); and
a rotating shaft mechanism (196), wherein the foldable touch screen comprises a first sub-screen (021) and a second sub-screen (022), and the rotating shaft mechanism is operable to automatically rotate the first sub-screen and/or the second sub-screen about a folding line (020), wherein the foldable touch screen is configured to: detect a touch operation, and display an interface;
the electronic device further comprising:
one or more processors (110); and
a memory (120, 121), wherein the memory stores code, wherein
when the code is executed by the one or more processors, the electronic device is caused to perform the foldable screen-based interaction method according to any one of claims 1 to 9.

11. A computer storage medium (120, 121), comprising computer instructions, wherein when the computer instructions are run on the electronic device (100) according to claim 10, the electronic device is enabled to perform the foldable screen-based interaction method according to any one of claims 1 to 9.

## Patentansprüche

1. Auf einem faltbaren Bildschirm basierendes Interaktionsverfahren, das auf eine elektronische Vorrichtung (100), die einen faltbaren Berührungsbildschirm (180K, 194) und einen Drehwellenmechanismus (196) aufweist, angewendet wird, wobei der faltbare Berührungsbildschirm einen ersten Teilbildschirm (021) und einen zweiten Teilbildschirm (022) umfasst, und der Drehwellenmechanismus betreibbar ist, um den ersten Teilbildschirm und/oder den zweiten Teilbildschirm automatisch um eine Faltlinie (020) herum zu drehen, wobei das Verfahren umfasst:
Bestimmen (2501), durch die elektronische Vorrichtung, dass eine voreingestellte Bedingung erfüllt ist. wobei die voreingestellte Bedingung umfasst: innerhalb eines voreingestellten Zeitintervalls, Erfassen eines Berührungsvorgangs, der durch einen Benutzer an der elektronischen Vorrichtung durchgeführt wird, und Erfassen, durch Verwenden eines Sensors, dass ein eingeschlossener Winkel zwischen dem ersten Teilbildschirm und dem zweiten Teilbildschirm durch den Benutzer geändert wird; und
Durchführen (2502), durch die elektronische Vorrichtung, eines voreingestellten Vorgangs, der dem Berührungsvorgang und der Änderung des eingeschlossenen Winkels entspricht;
wobei das Verfahren **dadurch gekennzeichnet ist, dass**:
der voreingestellte Vorgang ein Aktivieren eines Einhandmodus, ein Anpassen einer Lautstärke, das Anpassen einer Bildschirmhelligkeit, ein Scrollen einer Seite, ein Umblättern einer Seite, ein Aktualisieren einer Seite, das Aktivieren einer Bildschirmteilungsfunktion, das Aktivieren einer Bildschirmaufnahmefunktion, das Aktivieren einer Wortsegmentierungsfunktion, das Aktivieren einer Sprachassistentenfunktion oder das Aktivieren einer Schnellmenü-Aufruffunktion ist;
wobei nach dem Durchführen, durch die elektronische Vorrichtung, des voreingestellten Vorgangs, das Verfahren ferner umfasst:
falls sich der eingeschlossene Winkel zwischen dem ersten Teilbildschirm und dem zweiten Teilbildschirm von einem ersten eingeschlossenen Winkel zu einem zweiten eingeschlossenen Winkel ändert und eine Differenz zwischen dem ersten eingeschlossenen Winkel und dem zweiten eingeschlossenen Winkel geringer als oder gleich einem zweiten voreingestellten Winkel ist, automatisches Falten oder Erweitern (2503), durch die elektronische Vorrichtung, des ersten Teilbildschirms und/oder des zweiten Teilbildschirms, sodass der eingeschlossene Winkel zwischen dem ersten Teilbildschirm und dem zweiten Teilbildschirm von dem zweiten eingeschlossenen Winkel zu dem ersten eingeschlossenen Winkel wiederhergestellt ist;
oder
falls sich der eingeschlossene Winkel zwischen dem ersten Teilbildschirm und dem zweiten Teilbildschirm von einem ersten eingeschlossenen Winkel zu einem zweiten eingeschlossenen Winkel verringert und der zweite eingeschlossene Winkel größer als oder gleich einem dritten voreingestellten Winkel ist, automatisches Erweitern, durch die elektronische Vorrichtung, des ersten Teilbildschirms und/oder des zweiten Teilbildschirms, sodass der eingeschlossene Winkel zwischen dem ersten Teilbildschirm und dem zweiten Teilbildschirm von dem zweiten eingeschlossenen Winkel zu dem ersten eingeschlossenen Winkel wiederhergestellt wird;
oder
falls sich der eingeschlossene Winkel zwischen dem ersten Teilbildschirm und dem zweiten Teilbildschirm von einem ersten eingeschlossenen Winkel zu einem zweiten eingeschlossenen Winkel vergrößert und der zweite eingeschlossene Winkel geringer als oder gleich einem vierten voreingestellten Winkel ist, automatisches Falten, durch die elektronische Vorrichtung, des ersten Teilbildschirms und/oder des zweiten Teilbildschirms, sodass der eingeschlossene Winkel zwischen dem ersten Teilbildschirm und dem zweiten Teilbildschirm von dem zweiten eingeschlossenen Winkel zu dem ersten eingeschlossenen Winkel wiederhergestellt wird.

2. Verfahren nach Anspruch 1, wobei der Berührungsvorgang, der durch den Benutzer an der elektronischen Vorrichtung (100) durchgeführt wird, einen Berührungsvorgang, der durch den Benutzer auf dem faltbaren Berührungsbildschirm (180K, 194) durchgeführt wird, oder einen Drückvorgang, der durch den Benutzer auf einer Seite der elektronischen Vorrichtung durchgeführt wird, umfasst.

3. Verfahren nach Anspruch 1 oder 2, wobei der voreingestellte Vorgang das Anpassen einer ersten Funktion ist, wobei ein Wert der ersten Funktion mit dem Vergrößern oder Verringern des eingeschlossenen Winkels zwischen dem ersten Teilbildschirm (021) und dem zweiten Teilbildschirm (022) variiert; und
eine größere Änderung des eingeschlossenen Winkels zwischen dem ersten Teilbildschirm und dem zweiten Teilbildschirm eine größere Änderung des Werts der ersten Funktion angibt.

4. Verfahren nach einem der Ansprüche 1 bis 3, wobei der voreingestellte Vorgang das Anpassen einer zweiten Funktion ist, und der Berührungsvorgang, der durch den Benutzer auf dem faltbaren Berührungsbildschirm (180K, 194) durchgeführt wird, ein Gleitvorgang, der durch den Benutzer auf dem faltbaren Berührungsbildschirm durchgeführt wird, ist, wobei
ein Wert der zweiten Funktion basierend auf einer Gleitrichtung des Gleitvorgangs vergrößert oder verringert wird und eine Änderung des Werts der zweiten Funktion mit einer Gleitamplitude des Gleitvorgangs variiert.

5. Verfahren nach einem der Ansprüche 1 bis 4, wobei der faltbare Berührungsbildschirm (180K, 194) eine erste Steuerung und eine zweite Steuerung umfasst, die erste Steuerung konfiguriert ist, um die erste Funktion anzupassen, die zweite Steuerung konfiguriert ist, um die zweite Funktion anzupassen, und der voreingestellte Vorgang umfasst: Anpassen der ersten Funktion und der zweiten Funktion, wobei die Anpassungsrichtung der ersten Funktion mit der Änderungsrichtung des Vergrößerns oder Verringerns des eingeschlossenen Winkels zwischen dem ersten Teilbildschirm (021) und dem zweiten Teilbildschirm (022) variiert; und
die größere Änderungsamplitude des eingeschlossenen Winkels zwischen dem ersten Teilbildschirm und dem zweiten Teilbildschirm die größere Anpassungsamplitude der ersten Funktion angibt; und
der Berührungsvorgang, der durch den Benutzer an der elektronischen Vorrichtung durchgeführt wird, ein Gleitvorgang, der durch den Benutzer an der zweiten Steuerung durchgeführt wird, ist, wobei die Anpassungsrichtung der zweiten Funktion mit einer Gleitrichtung des Gleitvorgangs variiert und die Anpassungsamplitude der zweiten Funktion mit einer Gleitamplitude des Gleitvorgangs variiert.

6. Verfahren nach einem der Ansprüche 1 bis 5, wobei die voreingestellte Bedingung umfasst, dass ein Winkel, um den sich der eingeschlossene Winkel zwischen dem ersten Teilbildschirm und dem zweiten Teilbildschirm ändert, größer als oder gleich einem ersten voreingestellten Winkel ist.

7. Verfahren nach einem der Ansprüche 1 bis 6, wobei vor dem Bestimmen (2501), durch die elektronische Vorrichtung (100), dass eine voreingestellte Bedingung erfüllt ist, das Verfahren ferner umfasst:
Anzeigen, durch die elektronische Vorrichtung, einer ersten Schnittstelle;
nachdem die elektronische Vorrichtung den voreingestellten Vorgang durchführt und bevor der eingeschlossene Winkel von dem zweiten eingeschlossenen Winkel zu dem ersten eingeschlossenen Winkel wiederhergestellt wird, das Verfahren ferner umfasst:
Anzeigen, durch die elektronische Vorrichtung, einer zweiten Schnittstelle als Reaktion auf den voreingestellten Vorgang; und
nachdem der eingeschlossene Winkel von dem zweiten eingeschlossenen Winkel zu dem ersten eingeschlossenen Winkel wiederhergestellt ist, das Verfahren ferner umfasst:
weiterhin Anzeigen, durch die elektronische Vorrichtung, der zweiten Schnittstelle.

8. Verfahren nach einem der Ansprüche 1 bis 6, wobei die voreingestellte Bedingung umfasst, dass sich der eingeschlossene Winkel zwischen dem ersten Teilbildschirm (021) und dem zweiten Teilbildschirm (022) von einem ersten eingeschlossenen Winkel zu einem zweiten eingeschlossenen Winkel ändert;
vor dem Bestimmen (2501), durch die elektronische Vorrichtung (100), dass eine voreingestellte Bedingung erfüllt ist, das Verfahren ferner umfasst:
Anzeigen, durch die elektronische Vorrichtung, einer ersten Schnittstelle; und
nach dem Durchführen (2502), durch die elektronische Vorrichtung, des voreingestellten Vorgangs, das Verfahren ferner umfasst:
Anzeigen, durch die elektronische Vorrichtung, einer zweiten Schnittstelle als Reaktion auf den voreingestellten Vorgang; und
falls der eingeschlossene Winkel von dem zweiten eingeschlossenen Winkel zu dem ersten eingeschlossenen Winkel wiederhergestellt wird, Wiederherstellen, durch die elektronische Vorrichtung, des Anzeigens der ersten Schnittstelle.

9. Verfahren nach Anspruch 7 oder 8, wobei das Verfahren ferner umfasst: Umschalten, durch die elektronische Vorrichtung (100), von dem Anzeigen der ersten Schnittstelle zu dem Anzeigen einer dritten Schnittstelle in einem Prozess, in dem sich der eingeschlossene Winkel zwischen dem ersten Teilbildschirm (021) und dem zweiten Teilbildschirm (022) ändert.

10. Elektronische Vorrichtung (100), die umfasst:
einen faltbaren Berührungsbildschirm (180K, 194); und
einen Drehwellenmechanismus (196), wobei der faltbare Berührungsbildschirm einen ersten Teilbildschirm (021) und einen zweiten Teilbildschirm (022) umfasst, und der Drehwellenmechanismus betreibbar ist, um den ersten Teilbildschirm und/oder den zweiten Teilbildschirm automatisch um eine Faltlinie (020) herum zu drehen, wobei der faltbare Berührungsbildschirm konfiguriert ist zum: Erfassen eines Berührungsvorgangs und Anzeigen einer Schnittstelle;
wobei die elektronische Vorrichtung ferner umfasst:
einen oder mehrere Prozessoren (110); und
einen Speicher (120, 121), wobei der Speicher Code speichert, wobei wenn der Code durch den einen oder die mehreren Prozessoren ausgeführt wird, die elektronische Vorrichtung veranlasst wird, um das auf einem faltbaren Bildschirm basierende Interaktionsverfahren nach einem der Ansprüche 1 bis 9 durchzuführen.

11. Computerspeicherungsmedium (120, 121), das Computeranweisungen umfasst,
wobei, wenn die Computeranweisungen auf der elektronischen Vorrichtung (100) nach Anspruch 10 laufen gelassen werden,
die elektronische Vorrichtung aktiviert ist, um das auf einem faltbaren Bildschirm basierende Interaktionsverfahren nach einem der Ansprüche 1 bis 9 durchzuführen.

## Revendications

1. Procédé d'interaction basé sur un écran pliable, appliqué à un dispositif électronique (100) ayant un écran tactile pliable (180K, 194) et un mécanisme d'arbre rotatif (196), dans lequel l'écran tactile pliable comprend un premier sous-écran (021) et un second sous-écran (022), et le mécanisme d'arbre rotatif peut fonctionner pour faire tourner automatiquement le premier sous-écran et/ou le second sous-écran autour d'une ligne de pliage (020), dans lequel le procédé comprend :
la détermination (2501), par le dispositif électronique, du fait qu'une condition prédéfinie est satisfaite, dans lequel la condition prédéfinie comprend : au sein d'un intervalle de temps prédéfini, la détection d'une opération tactile réalisée par un utilisateur sur le dispositif électronique, et la détection, à l'aide d'un capteur, du fait qu'un angle inclus entre le premier sous-écran et le second sous-écran est modifié par l'utilisateur ; et
la réalisation (2502), par le dispositif électronique, d'une opération prédéfinie correspondant à l'opération tactile et au changement de l'angle inclus ;
le procédé étant **caractérisé en ce que** :
l'opération prédéfinie consiste à activer un mode à une main, à régler le volume, à régler la luminosité d'écran, à faire défiler une page, à retourner une page, à rafraîchir une page, à activer une fonction de division d'écran, à activer une fonction de capture d'écran, à activer une fonction de segmentation de mots, à activer une fonction d'assistant vocal, ou à activer une fonction d'appel de menu contextuel ;
dans lequel, après la réalisation, par le dispositif électronique, de l'opération prédéfinie, le procédé comprend en outre :
si l'angle inclus entre le premier sous-écran et le second sous-écran change d'un premier angle inclus à un second angle inclus, et qu'une différence entre le premier angle inclus et le second angle inclus est inférieure ou égale à un deuxième angle prédéfini, le pliage ou l'extension automatique (2503), par le dispositif électronique, du premier sous-écran et/ou du second sous-écran, de sorte que l'angle inclus entre le premier sous-écran et le second sous-écran est rétabli du second angle inclus au premier angle inclus ;
ou
si l'angle inclus entre le premier sous-écran et le second sous-écran diminue d'un premier angle inclus à un second angle inclus, et que le second angle inclus est supérieur ou égal à un troisième angle prédéfini, l'expansion automatique, par le dispositif électronique, du premier sous-écran et/ou du second sous-écran, de sorte que l'angle inclus entre le premier sous-écran et le second sous-écran est rétabli du second angle inclus au premier angle inclus ;
ou
si l'angle inclus entre le premier sous-écran et le second sous-écran augmente d'un premier angle inclus à un second angle inclus, et que le second angle inclus est inférieur ou égal à un quatrième angle prédéfini, le pliage automatique, par le dispositif électronique, du premier sous-écran et/ou du second sous-écran, de sorte que l'angle inclus entre le premier sous-écran et le second sous-écran est rétabli du second angle inclus au premier angle inclus.

2. Procédé selon la revendication 1, dans lequel l'opération tactile réalisée par l'utilisateur sur le dispositif électronique (100) comprend une opération tactile réalisée par l'utilisateur sur l'écran tactile pliable (180K, 194) ou une opération de pression réalisée par l'utilisateur sur un côté du dispositif électronique.

3. Procédé selon la revendication 1 ou 2, dans lequel l'opération prédéfinie est le réglage d'une première fonction, dans lequel une valeur de la première fonction varie avec l'augmentation ou la diminution de l'angle inclus entre le premier sous-écran (021) et le second sous-écran (022) ; et
un changement plus important de l'angle inclus entre le premier sous-écran et le second sous-écran indique un changement plus important de valeur de la première fonction.

4. Procédé selon l'une quelconque des revendications 1 à 3, dans lequel l'opération prédéfinie est le réglage d'une seconde fonction, et l'opération tactile réalisée par l'utilisateur sur l'écran tactile pliable (180K, 194) est une opération de glissement réalisée par l'utilisateur sur l'écran tactile pliable, dans lequel
une valeur de la seconde fonction est augmentée ou diminuée en fonction d'une direction de glissement de l'opération de glissement, et un changement de la valeur de la seconde fonction varie avec une amplitude de glissement de l'opération de glissement.

5. Procédé selon l'une quelconque des revendications 1 à 4, dans lequel l'écran tactile pliable (180K, 194) comprend une première commande et une seconde commande, la première commande est configurée pour régler la première fonction, la seconde commande est configurée pour régler la seconde fonction, et l'opération prédéfinie comprend : le réglage de la première fonction et de la seconde fonction, dans lequel la direction de réglage de la première fonction varie avec la direction de changement d'augmentation ou de diminution de l'angle inclus entre le premier sous-écran (021) et le second sous-écran (022) ; et
l'amplitude de changement plus importante de l'angle inclus entre le premier sous-écran et le second sous-écran indique l'amplitude de réglage plus importante de la première fonction ; et
l'opération tactile réalisée par l'utilisateur sur le dispositif électronique est une opération de glissement réalisée par l'utilisateur sur la seconde commande, dans lequel la direction de réglage de la seconde fonction varie avec une direction de glissement de l'opération de glissement, et l'amplitude de réglage de la seconde fonction varie avec une amplitude de glissement de l'opération de glissement.

6. Procédé selon l'une quelconque des revendications 1 à 5, dans lequel la condition prédéfinie comprend le fait qu'un angle par lequel change l'angle inclus entre le premier sous-écran et le second sous-écran est supérieur ou égal à un premier angle prédéfini.

7. Procédé selon l'une quelconque des revendications 1 à 6, dans lequel, avant la détermination (2501), par le dispositif électronique (100), du fait qu'une condition prédéfinie est satisfaite, le procédé comprend en outre :
l'affichage, par le dispositif électronique, d'une première interface ;
après que le dispositif électronique a réalisé l'opération prédéfinie et avant que l'angle inclus ne soit rétabli du second angle inclus au premier angle inclus, le procédé comprend en outre :
l'affichage, par le dispositif électronique, d'une deuxième interface en réponse à l'opération prédéfinie ; et
une fois que l'angle inclus est rétabli du second angle inclus au premier angle inclus, le procédé comprend en outre :
la poursuite de l'affichage, par le dispositif électronique, de la deuxième interface.

8. Procédé selon l'une quelconque des revendications 1 à 6, dans lequel la condition prédéfinie comprend le fait que l'angle inclus entre le premier sous-écran (021) et le second sous-écran (022) change d'un premier angle inclus à un second angle inclus ; avant la détermination (2501), par le dispositif électronique (100), du fait qu'une condition prédéfinie est satisfaite, le procédé comprend en outre :
l'affichage, par le dispositif électronique, d'une première interface ; et
après la réalisation (2502), par le dispositif électronique, de l'opération prédéfinie, le procédé comprend en outre :
l'affichage, par le dispositif électronique, d'une deuxième interface en réponse à l'opération prédéfinie ; et
si l'angle inclus est rétabli du second angle inclus au premier angle inclus, le rétablissement, par le dispositif électronique, de l'affichage de la première interface.

9. Procédé selon la revendication 7 ou 8, dans lequel le procédé comprend en outre :
la commutation, par le dispositif électronique (100), de l'affichage de la première interface à l'affichage d'une troisième interface dans un processus dans lequel l'angle inclus entre le premier sous-écran (021) et le second sous-écran (022) change.

10. Dispositif électronique (100), comprenant :
un écran tactile pliable (180K, 194) ; et
un mécanisme d'arbre rotatif (196), dans lequel l'écran tactile pliable comprend un premier sous-écran (021) et un second sous-écran (022), et le mécanisme d'arbre rotatif peut fonctionner pour faire tourner automatiquement le premier sous-écran et/ou le second sous-écran autour d'une ligne de pliage (020), dans lequel l'écran tactile pliable est configuré pour : détecter une opération tactile, et afficher une interface ;
le dispositif électronique comprenant en outre :
un ou plusieurs processeurs (110) ; et
une mémoire (120, 121), dans lequel la mémoire stocke un code, dans lequel lorsque le code est exécuté par le ou les processeurs, le dispositif électronique est amené à réaliser le procédé d'interaction basé sur un écran pliable selon l'une quelconque des revendications 1 à 9.

11. Support de stockage informatique (120, 121), comprenant des instructions informatiques, dans lequel, lorsque les instructions informatiques sont exécutées sur le dispositif électronique (100) selon la revendication 10,
le dispositif électronique est activé pour réaliser le procédé d'interaction basé sur un écran pliable selon l'une quelconque des revendications 1 à 9.
